(19) Europäisches Patentamt
European Patent Office
Office européen des brevets

(11) EP 4 556 507 A1

(12) EUROPEAN PATENT APPLICATION
published in accordance with Art. 153(4) EPC

(43) Date of publication:
**21.05.2025 Bulletin 2025/21**

(21) Application number: **23839699.8**

(22) Date of filing: **14.07.2023**

(51) International Patent Classification (IPC):
***C08G 64/18*** *(2006.01)*

(52) Cooperative Patent Classification (CPC):
**C08G 64/18**

(86) International application number:
**PCT/JP2023/026023**

(87) International publication number:
**WO 2024/014530 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.07.2022 JP 2022114368**

(71) Applicant: **Idemitsu Kosan Co.,Ltd.**
**Tokyo 100-8321 (JP)**

(72) Inventors:
- **YABUKAMI, Minoru**
  **Tokyo 100-8321 (JP)**
- **KUBO, Masahiro**
  **Tokyo 100-8321 (JP)**
- **ISHIKAWA, Yasuhiro**
  **Tokyo 100-8321 (JP)**
- **KAKO, Atsushi**
  **Tokyo 100-8321 (JP)**
- **KUWADA, Kosuke**
  **Tokyo 100-8321 (JP)**

(74) Representative: **Hoffmann Eitle**
**Patent- und Rechtsanwälte PartmbB**
**Arabellastraße 30**
**81925 München (DE)**

# (54) POLYCARBONATE-POLYORGANOSILOXANE COPOLYMER, POLYCARBONATE RESIN COMPOSITION AND MOLDED BODY

(57) The present invention relates to a polycarbonate-polyorganosiloxane copolymer including: a polycarbonate block containing a structural unit (A-1) represented by the following formula (1); and a polyorganosiloxane block containing a structural unit (A-2) represented by the following formula (2), the polycarbonate-polyorganosiloxane copolymer satisfying the following conditions (I) and (II), and to a polycarbonate-based resin composition including the polycarbonate-polyorganosiloxane copolymer and a molded body including the polycarbonate-based resin composition.

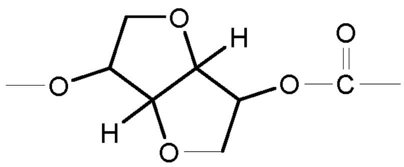
(1)

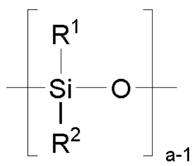
(2)

EP 4 556 507 A1

## Description

### Technical Field

The present invention relates to a polycarbonate-polyorganosiloxane copolymer, a polycarbonate-based resin composition, and a molded body.

### Background Art

A polycarbonate resin has been known to be excellent in properties, such as transparency, impact resistance, and flame retardancy. Accordingly, the polycarbonate resin has been expected to be widely utilized in various fields, such as the field of electrical and electronic equipment and the field of automobiles.

In recent years, there has been a demand for the development of a polycarbonate resin using, as a raw material, a plant-derived monomer from the viewpoint of carbon neutrality. Technologies for such polycarbonate resin are, for example, technologies described in PTLs 1 and 2.

In PTL 1, for the purpose of providing a polycarbonate copolymer containing a plant-derived constituent unit that is excellent in mechanical strength, has heat resistance, a low refractive index, a large Abbe number, and low double refraction, and is excellent in transparency, there is a description of a polycarbonate copolymer containing a constituent unit derived from a specific dihydroxy compound and a constituent unit derived from an alicyclic dihydroxy compound, the polycarbonate copolymer being characterized by having an Abbe number of 50 or more and a 5% thermal weight loss temperature of 340°C or less.

In PTL 2, for the purpose of providing a resin molded article that is excellent in thin-walled moldability, impact resistance, surface hardness, and moist and heat resistance, and is low in optical distortion, there is a description of a molded article molded from a resin composition containing a polycarbonate resin that has a structural unit derived from a specific dihydroxy compound and a structural unit derived from another dihydroxy compound, the molded article being characterized in that the ratio of the structural unit derived from the specific dihydroxy compound in the polycarbonate resin is 70 mol% or more with respect to all the structural units derived from the dihydroxy compounds for forming the polycarbonate resin, the reduction viscosity of the polycarbonate resin is 0.45 dL/g or less, and the molded article has a thickness of 0.1 mm or more and 1 mm or less.

In PTL 3, for the purpose of providing a material component that is improved in preservation of environment and resources even slightly, and at the same time, has characteristics suitable for the fields of civil engineering and construction, there is a description of a civil engineering and constructional material component including a polycarbonate containing a constituent unit derived from a specific dihydroxy compound.

### Citation List

#### Patent Literature

PTL 1: JP 2005-24919 A
PTL 2: JP 2014-198761 A
PTL 3: JP 2009-144013 A

### Summary of Invention

#### Technical Problem

According to investigations made by the inventors of the present invention, for example, it has been revealed that a molded body of the polycarbonate copolymer described in PTL 1, the molded body described in PTL 2, and the civil engineering and constructional material component including the polycarbonate described in PTL 3 are excellent in scratch resistance, but there remains a need for improvement in impact resistance.

The present invention has been made in view of the above-mentioned circumstances, and provides a polycarbonate-polyorganosiloxane copolymer and a polycarbonate-based resin composition that can provide a molded body excellent in impact resistance and scratch resistance.

Solution to Problem

The inventors have found that a polycarbonate-polyorganosiloxane copolymer containing a specific structural unit and a polycarbonate-based resin composition including the copolymer can provide a molded body excellent in impact resistance and scratch resistance.

That is, according to the present invention, there are provided the following polycarbonate-polyorganosiloxane copolymer, polycarbonate-based resin composition, and molded body.

[1] A polycarbonate-polyorganosiloxane copolymer, comprising: a polycarbonate block containing a structural unit (A-1) represented by the following formula (1); and a polyorganosiloxane block containing a structural unit (A-2) represented by the following formula (2), the polycarbonate-polyorganosiloxane copolymer satisfying the following conditions (I) and (II):

[Chem. 1]

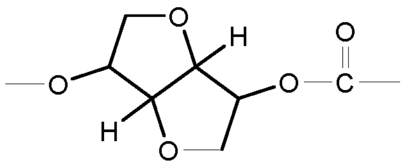

(1)

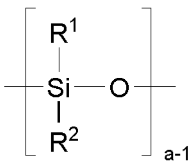

(2)

wherein

in the formula (2), $R^1$ and $R^2$ each independently represent a hydrogen atom, a halogen atom, an alkyl group having 1 to 10 carbon atoms, an alkoxy group having 1 to 10 carbon atoms, an aryl group having 6 to 12 carbon atoms, or an alkylaryl group having 7 to 22 carbon atoms, and "a" represents an integer of from 2 to 500;

Condition (I): a Charpy impact strength of a molded piece obtained by molding the polycarbonate-polyorganosiloxane copolymer to provide a strip-shaped molded piece having a length of 80 mm, a width of 10 mm, and a thickness of 3 mm, and making a notch (r=0.25 mm±0.05 mm) in the strip-shaped molded piece by a post-process is 15 kJ/$m^2$ or more, the Charpy impact strength being measured under a condition of a measurement temperature of 23°C in conformity with ISO 179-1:2010; and

Condition (II): a pencil hardness of a molded body of the polycarbonate-polyorganosiloxane copolymer is HB or more, the scratch hardness being measured in conformity with JIS K 5600-5-4:1999.

[2] The polycarbonate-polyorganosiloxane copolymer according to Item [1], wherein, in the polycarbonate-polyorganosiloxane copolymer, a content of a structural unit represented by the following formula (XX) is 2.0 mass% or more and 25.0 mass% or less, and a content of the structural unit (A-1) represented by the formula (1) is 73.0 mass% or more:

[Chem. 2]

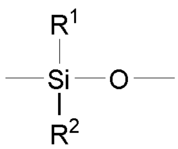

(XX)

wherein

in the formula (XX), $R^1$ and $R^2$ represent the same meanings as those of $R^1$ and $R^2$ in the formula (2).

[3] The polycarbonate-polyorganosiloxane copolymer according to Item [1], further comprising at least one structural

unit (A-3) selected from structures represented by the following formulae (3) and (4):

[Chem. 3]

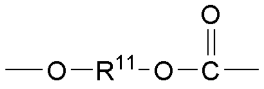 (3)

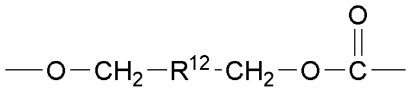 (4)

wherein
in the formulae (3) and (4), $R^{11}$ represents a divalent linear or branched aliphatic hydrocarbon group having 2 to 40 carbon atoms, a divalent alicyclic hydrocarbon group having 3 to 40 carbon atoms, or a divalent aromatic hydrocarbon group having 6 to 20 carbon atoms, and $R^{12}$ represents a divalent alicyclic hydrocarbon group having 3 to 40 carbon atoms.

[4] The polycarbonate-polyorganosiloxane copolymer according to Item [3], wherein the structural unit (A-3) includes at least one selected from structures represented by the following formulae (31) to (34):

[Chem. 4]

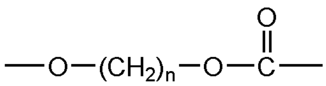 (31)

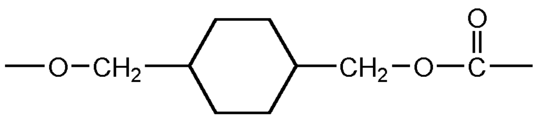 (32)

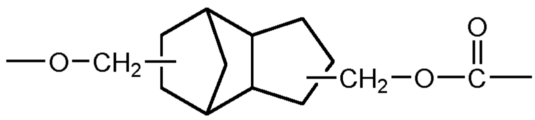 (33)

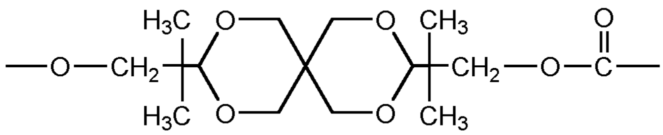 (34)

wherein
in the formula (31), "n" represents an integer of from 2 to 18.

[5] The polycarbonate-polyorganosiloxane copolymer according to Item [4], wherein the structural unit (A-3) includes the structural unit (A-32) represented by the formula (32), and wherein, when a content of a structural unit represented by the following formula (XX) in the polycarbonate-polyorganosiloxane copolymer is represented by "x", a total content of the structural units (A-1) and (A-32) in the polycarbonate block in the polycarbonate-polyorganosiloxane copolymer is 90.0 mol% or more, a molar ratio (A-32/A-1) of the structural unit (A-32) to the structural unit (A-1) and the content "x" of the structural unit represented by the following formula (XX) satisfy the following condition (C2) or (D2):

Condition (C2): A-32/A-1 is 1.0/99.0 or more and 35.0/65.0 or less, and "x" is 1.0 mass% or more and less than 4.0 mass%; and

Condition (D2): A-32/A-1 is 1.0/99.0 or more and 27.0/73.0 or less, and "x" is 4.0 mass% or more and 10.0 mass% or less;

[Chem. 5]

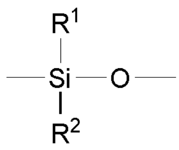 (XX)

wherein
in the formula (XX), $R^1$ and $R^2$ represent the same meanings as those of $R^1$ and $R^2$ in the formula (2).

[6] The polycarbonate-polyorganosiloxane copolymer according to Item [4], wherein the structural unit (A-3) includes the structural unit (A-31) represented by the formula (31), and wherein, when a content of a structural unit represented by the following formula (XX) in the polycarbonate-polyorganosiloxane copolymer is represented by "x", a molar ratio (A-31/A-1) of the structural unit (A-31) to the structural unit (A-1) and the content "x" of the structural unit represented by the following formula (XX) satisfy the following condition (C1) or (D1):

Condition (C1): A-31/A-1 is 1.0/99.0 or more and 25.0/75.0 or less, and "x" is 1.0 mass% or more and less than 4.0 mass%; and
Condition (D1): A-31/A-1 is 1.0/99.0 or more and 30.0/70.0 or less, and "x" is 4.0 mass% or more and 10.0 mass% or less;

[Chem. 6]

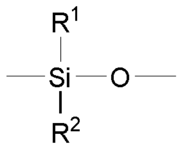 (XX)

wherein
in the formula (XX), $R^1$ and $R^2$ represent the same meanings as those of $R^1$ and $R^2$ in the formula (2).

[7] The polycarbonate-polyorganosiloxane copolymer according to Item [4], wherein the structural unit (A-3) includes the structural unit (A-32) represented by the formula (32) and the structural unit (A-33) represented by the formula (33), and wherein, when a content of a structural unit represented by the following formula (XX) in the polycarbonate-polyorganosiloxane copolymer is represented by "x", a molar ratio ((total of A-32 and A-33)/A-1)) of a total of the structural units (A-32) and (A-33) to the structural unit (A-1), a molar ratio (A-32/A-33) of the structural unit (A-32) to the structural unit (A-33), and the content "x" of the structural unit represented by the formula (XX) satisfy the following condition (C41), (C42), (C43), (D41), (D42), or (D43);

Condition (C41): A-32/A-33 is 60.0/40.0 or more and 99.0/1.0 or less, (total of A-32 and A-33)/A-1 is 1.0/99.0 or more and 39.0/61.0 or less, and "x" is 1.0 mass% or more and less than 4.0 mass%;
Condition (C42): A-32/A-33 is 40.0/60.0 or more and less than 60.0/40.0, (total of A-32 and A-33)/A-1 is 1.0/99.0 or more and 31.0/69.0 or less, and "x" is 1.0 mass% or more and less than 4.0 mass%;
Condition (C43): A-32/A-33 is 1.0/99.0 or more and less than 40.0/60.0, (total of A-32 and A-33)/A-1 is 1.0/99.0 or more and 46.0/54.0 or less, and "x" is 1.0 mass% or more and less than 4.0 mass%;
Condition (D41): A-32/A-33 is 60.0/40.0 or more and 99.0/1.0 or less, (total of A-32 and A-33)/A-1 is 1.0/99.0 or more and 32.0/68.0 or less, and "x" is 4.0 mass% or more and 10.0 mass% or less;
Condition (D42): A-32/A-33 is 40.0/60.0 or more and less than 60.0/40.0, (total of A-32 and A-33)/A-1 is 1.0/99.0 or more and 36.0/64.0 or less, and "x" is 4.0 mass% or more and 10.0 mass% or less; and
Condition (D43): A-32/A-33 is 1.0/99.0 or more and less than 40.0/60.0, (total of A-32 and A-33)/A-1 is 1.0/99.0 or more and 41.0/59.0 or less, and "x" is 4.0 mass% or more and 10.0 mass% or less;

[Chem. 7]

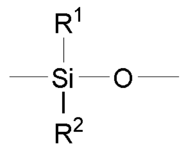 (XX)

wherein
in the formula (XX), $R^1$ and $R^2$ represent the same meanings as those of $R^1$ and $R^2$ in the formula (2).

[8] The polycarbonate-polyorganosiloxane copolymer according to any one of Items [1] to [7], wherein the "a" represents an integer of 2 or more and 300 or less.
[9] The polycarbonate-polyorganosiloxane copolymer according to any one of Items [1] to [8], wherein the $R^1$ and the $R^2$ each represent a methyl group.
[10] A polycarbonate-based resin composition, comprising the polycarbonate-polyorganosiloxane copolymer of any one of Items [1] to [9].
[11] A molded body, comprising the polycarbonate-based resin composition of Item [10].

Advantageous Effects of Invention

According to the present invention, there can be provided the polycarbonate-polyorganosiloxane copolymer and the polycarbonate-based resin composition that can provide a molded body excellent in impact resistance and scratch resistance.

Description of Embodiments

A polycarbonate-polyorganosiloxane copolymer, a polycarbonate-based resin composition including the copolymer, and a molded body of the resin composition according to the present invention are described in detail below. Herein, a specification considered to be preferred may be arbitrarily adopted, and a combination of preferred specifications can be said to be more preferred. The term "XX to YY" as used herein means "XX or more and YY or less."
With regard to one technical matter, when there are a plurality of lower limit values such as "x or more," or there are a plurality of upper limit values such as "y or less," the upper limit values and the lower limit values may be optionally selected and combined.
With regard to a compound and a chemical structure described herein, when there are a plurality of stereoisomers and structural isomers, all the stereoisomers and the structural isomers are encompassed unless otherwise specified.

1. Polycarbonate-Polyorganosiloxane Copolymer

The polycarbonate-polyorganosiloxane copolymer of the present invention includes: a polycarbonate block containing a structural unit (A-1) represented by the following formula (1); and a polyorganosiloxane block containing a structural unit (A-2) represented by the following formula (2).
According to the polycarbonate-polyorganosiloxane copolymer of the present invention, a molded body excellent in impact resistance and scratch resistance can be obtained.

[Chem. 8]

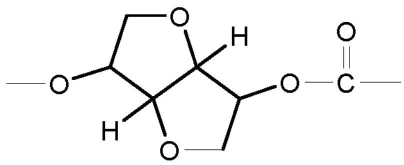

(1)

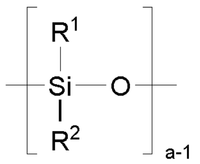

(2)

In the formula (2), $R^1$ and $R^2$ each independently represent a hydrogen atom, a halogen atom, an alkyl group having 1 to 10 carbon atoms, an alkoxy group having 1 to 10 carbon atoms, an aryl group having 6 to 12 carbon atoms, or an alkylaryl group having 7 to 22 carbon atoms, and "a" represents an integer of from 2 to 500.

<Polycarbonate Block>

The polycarbonate block is represented by the following formula (X) and contains the structural unit (A-1) represented by the formula (1).

[Chem. 9]

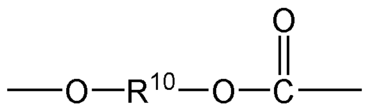

(X)

In the formula (X), $R^{10}$ represents a divalent aliphatic hydrocarbon group having 2 to 40 carbon atoms, or a divalent aromatic hydrocarbon group having 6 to 20 carbon atoms, and those groups may each be substituted with a substituent, and may each contain at least one atom selected from the group consisting of: an oxygen atom; a nitrogen atom; a sulfur atom; and a halogen atom.

Herein, various "divalent" hydrocarbon groups are substituents formed by removing two hydrogen atoms from hydrocarbons.

The structural unit (A-1) represented by the formula (1) preferably includes a structural unit represented by the following formula (11), and is more preferably formed only of the structural unit represented by the following formula (11).

[Chem. 10]

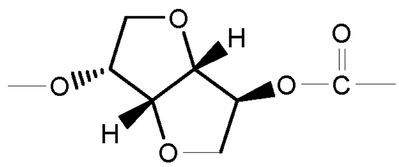

(11)

The polycarbonate block of the polycarbonate-polyorganosiloxane copolymer of the present invention may further contain at least one structural unit (A-3) selected from structural units represented by the following formulae (3) and (4). The polycarbonate-polyorganosiloxane copolymer contains the structural unit (A-3), and hence the impact resistance of a molded body can be further improved.

[Chem. 11]

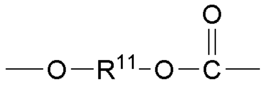 (3)

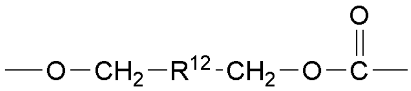 (4)

In the formula (3), $R^{11}$ represents a divalent linear aliphatic hydrocarbon group having 2 to 40 carbon atoms, a divalent branched aliphatic hydrocarbon group having 3 to 40 carbon atoms, a divalent alicyclic hydrocarbon group having 3 to 40 carbon atoms, or a divalent aromatic hydrocarbon group having 6 to 20 carbon atoms, and preferably represents a divalent linear aliphatic hydrocarbon group having 2 to 40 carbon atoms, a divalent branched aliphatic hydrocarbon group having 3 to 40 carbon atoms, or a divalent alicyclic hydrocarbon group having 3 to 40 carbon atoms.

In the formula (4), $R^{12}$ represents a divalent alicyclic hydrocarbon group having 3 to 40 carbon atoms, preferably represents a divalent alicyclic hydrocarbon group having 4 to 20 carbon atoms, and more preferably represents a divalent alicyclic hydrocarbon having 5 to 15 carbon atoms.

From the viewpoint of reducing the melt flow rate of the polycarbonate-polyorganosiloxane copolymer, and from the viewpoint of increasing the tensile modulus of elasticity, tensile strength (yield), and glass transition temperature of the polycarbonate-polyorganosiloxane copolymer, $R^{11}$ and $R^{12}$ in the formulae (3) and (4) preferably contain at least one or more carbon atoms selected from tertiary and quaternary carbon atoms, more preferably contain at least one or more carbon atoms selected from tertiary and quaternary carbon atoms, and a divalent alicyclic hydrocarbon group having 3 to 20 carbon atoms, still more preferably contain at least one or more carbon atoms selected from tertiary and quaternary carbon atoms, and a divalent alicyclic hydrocarbon group having 3 to 8 carbon atoms, and particularly from the viewpoint of availability of a raw material, still more preferably contain at least one or more carbon atoms selected from tertiary and quaternary carbon atoms, and a divalent alicyclic hydrocarbon group having 3 to 6 carbon atoms.

The reasons why the melt flow rate of the polycarbonate-polyorganosiloxane copolymer is reduced, and the tensile modulus of elasticity, tensile strength (yield), and glass transition temperature of the polycarbonate-polyorganosiloxane copolymer are improved, when $R^{11}$ and $R^{12}$ in the formulae (3) and (4) contain the at least one or more carbon atoms selected from tertiary and quaternary carbon atoms, are not clear. However, it is conceivable that the tertiary and quaternary carbon atoms each have low mobility and a structure containing such carbon atom is likely to become rigid.

The reasons why the melt flow rate of the polycarbonate-polyorganosiloxane copolymer is reduced, and the tensile modulus of elasticity, tensile strength (yield), and glass transition temperature of the polycarbonate-polyorganosiloxane copolymer are improved, when $R^{11}$ and $R^{12}$ in the formulae (3) and (4) each contain the divalent alicyclic hydrocarbon group having 3 to 20 carbon atoms, are not clear. However, it is conceivable that the mobility of molecules is restricted by a cyclic structure and a structure containing the structure is likely to become rigid.

The structural unit (A-1) is not included in the structural unit (A-3).

The divalent linear aliphatic hydrocarbon group having 2 to 40 carbon atoms and the divalent branched aliphatic hydrocarbon group having 3 to 40 carbon atoms that are each represented by $R^{11}$ in the formula (3) may each be substituted with a substituent, and may each contain at least one atom selected from the group consisting of: an oxygen atom; a nitrogen atom; a sulfur atom; and a halogen atom.

Examples of the divalent linear aliphatic hydrocarbon group having 2 to 40 carbon atoms or the divalent branched aliphatic hydrocarbon group having 3 to 40 carbon atoms represented by $R^{11}$ in the formula (3) include an ethylene group, a n-propylene group, an isopropylene group, a n-butylene group, an isobutylene group, a n-pentylene group, a neopentylene group, a n-hexylene group, a n-heptylene group, a n-octylene group, a 2-ethylhexylene group, a n-nonylene group, a n-decylene group, a n-undecylene group, a n-dodecylene group, a n-tridecylene group, a n-tetradecylene group, a n-pentadecylene group, a n-hexadecylene group, a n-heptadecylene group, and a n-octadecylene group. A n-propylene group, a n-butylene group, a n-pentylene group, a neopentylene group, a n-hexylene group, a n-heptylene group, a n-octylene group, a n-nonylene group, or a n-decylene group is preferred, and a n-butylene group, a n-pentylene group, a neopentylene group, a n-hexylene group, a n-heptylene group, or a n-octylene group is more preferred.

The divalent alicyclic hydrocarbon group having 3 to 40 carbon atoms represented by $R^{11}$ in the formula (3) may be substituted with a substituent, and may contain at least one atom selected from the group consisting of: an oxygen atom; a nitrogen atom; a sulfur atom; and a halogen atom.

Examples of the divalent alicyclic hydrocarbon group having 3 to 40 carbon atoms represented by $R^{11}$ in the formula (3) include a cyclopropylene group, a cyclobutylene group, a cyclopentylene group, a cyclohexylene group, a cyclooctylene group, a cyclodecylene group, a cyclotetradecylene group, an adamantylene group, a bicycloheptylene group, a bicyclodecylene group, a tricyclodecylene group, a spirobicyclohexylene group, a decahydronaphthylene group,

a tricyclotetradecylene group, and a pentacyclopentadecylene group. A cyclohexylene group, a tricyclodecylene group, a pentacyclopentadecylene group, a decahydronaphthylene group, a tricyclotetradecylene group, a bicycloheptylene group, or an adamantylene group is preferred, and a cyclohexylene group or a tricyclodecylene group is more preferred.

The cyclohexylene group represented by $R^{11}$ in the formula (3) includes various isomers represented by the following formula (3a). Specific examples thereof include a 1,2-cyclohexylene group, a 1,3-cyclohexylene group, and a 1,4-cyclohexylene group.

[Chem. 12]

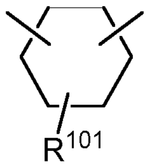

(3a)

In the formula (3a), $R^{101}$ represents a hydrogen atom or an alkyl group having 1 to 12 carbon atoms.

The tricyclodecylene group or the pentacyclopentadecylene group represented by $R^{11}$ in the formula (3) includes various isomers represented by the following formula (3b). n' represents 0 or 1.

[Chem. 13]

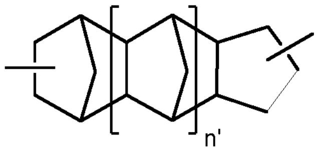

(3b)

The decahydronaphthylene group or the tricyclotetradecylene group represented by $R^{11}$ in the formula (3) includes various isomers represented by the following formula (3c). Specific examples thereof include a 2,6-decahydronaphthylene group, a 1,5-decahydronaphthylene group, and a 2,3-decahydronaphthylene group. n" represents 0 or 1.

[Chem. 14]

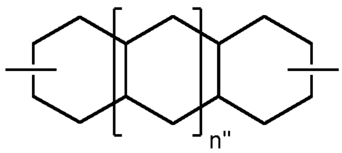

(3c)

The bicycloheptylene group represented by $R^{11}$ in the formula (3) includes various isomers represented by the following formula (3d). Specific examples thereof include a 2,3-bicycloheptylene group and a 2,5-bicycloheptylene group.

[Chem. 15]

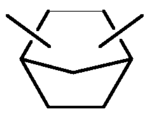

(3d)

The adamantylene group represented by $R^{11}$ in the formula (3) includes various isomers represented by the following formula (3e). A specific example thereof is a 1,3-adamantylene group.

[Chem. 16]

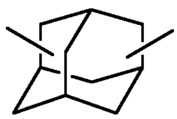

(3e)

The divalent aromatic hydrocarbon group having 6 to 20 carbon atoms represented by $R^{11}$ in the formula (3) may be substituted with a substituent, and may contain at least one atom selected from the group consisting of: an oxygen atom; a nitrogen atom; a sulfur atom; and a halogen atom.

Examples of the divalent aromatic hydrocarbon group having 6 to 20 carbon atoms represented by $R^{11}$ in the formula (3) include an aromatic hydrocarbon group represented by the following formula (3f), a 1,4-phenylene group, a 1,3-phenylene group, and a 1,2-phenylene group. An aromatic hydrocarbon group represented by the following formula (3f) is preferred.

[Chem. 17]

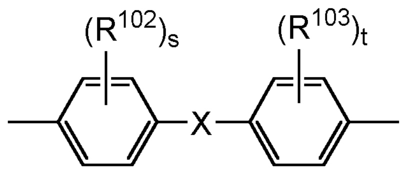

(3f)

In the formula (3f), $R^{102}$ and $R^{103}$ each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, - $SO_2$-, -O-, or -CO-, and "s" and "t" each independently represent an integer of from 0 to 4.

In the formula (3f), examples of the halogen atom that $R^{102}$ and $R^{103}$ each independently represent include a fluorine atom, a chlorine atom, a bromine atom, and an iodine atom.

Examples of the alkyl group that $R^{102}$ and $R^{103}$ each independently represent include a methyl group, an ethyl group, a n-propyl group, an isopropyl group, various butyl groups (the term "various" means that a linear group and all kinds of branched groups are included, and the same holds true for the following), various pentyl groups, and various hexyl groups. Examples of the alkoxy group that $R^{102}$ and $R^{103}$ each independently represent include alkoxy groups having the above-mentioned alkyl groups as alkyl group moieties.

Examples of the alkylene group represented by X include a methylene group, an ethylene group, a trimethylene group, a tetramethylene group, and a hexamethylene group. Among them, an alkylene group having 1 to 5 carbon atoms is preferred. Examples of the alkylidene group represented by X include an ethylidene group and an isopropylidene group. Examples of the cycloalkylene group represented by X include a cyclopentanediyl group and a cyclohexanediyl group. Among them, a cycloalkylene group having 5 to 10 carbon atoms is preferred. Examples of the arylene group represented by X include a phenylene group, a naphthylene group, and a biphenylene group. Examples of the cycloalkylidene group represented by X include a cyclohexylidene group, a 3-methylcyclohexylidene group, a 3,5,5-trimethylcyclohexylidene group, a cyclododecylidene group, and a 2-adamantylidene group. Among them, a cycloalkylidene group having 5 to 12 carbon atoms is preferred, and a cycloalkylidene group having 5 to 8 carbon atoms is more preferred. An aryl moiety of the arylalkylene group represented by X is, for example, an aryl group having 6 to 14 ring-forming carbon atoms, such as a phenyl group, a naphthyl group, a biphenyl group, or an anthryl group. An aryl moiety of the arylalkylidene group represented by X is, for example, an aryl group having 6 to 14 ring-forming carbon atoms, such as a phenyl group, a naphthyl group, a biphenyl group, or an anthryl group.

"s" and "t" each independently represent an integer of from 0 to 4, preferably from 0 to 2, more preferably 0 or 1. Among them, a repeating unit in which "s" and "t" each represent 0, and X represents a single bond or an alkylene group having 1 to 8 carbon atoms, or a repeating unit in which "s" and "t" each represent 0, and X represents an alkylidene group, in particular an isopropylidene group is suitable.

Examples of the divalent alicyclic hydrocarbon group having 3 to 40 carbon atoms represented by $R^{12}$ in the formula (4) include the same divalent alicyclic hydrocarbon groups each having 3 to 40 carbon atoms as those for $R^{11}$ in the formula (3). Among them, a cyclohexylene group, a tricyclodecylene group, a pentacyclopentadecylene group, a decahydronaphthylene group, a tricyclotetradecylene group, a bicycloheptylene group, or an adamantylene group is preferred, and a cyclohexylene group or a tricyclodecylene group is more preferred.

From the viewpoint of further enhancing the impact resistance of the molded body, the structural unit (A-3) preferably includes at least one selected from structural units (A-31) to (A-34) represented by the following formulae (31) to (34), more preferably includes at least one selected from the structural units (A-31) to (A-33), and is still more preferably at least one selected from the structural units (A-31) to (A-33).

[Chem. 18]

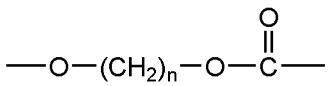

(31)

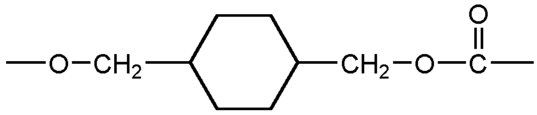

(32)

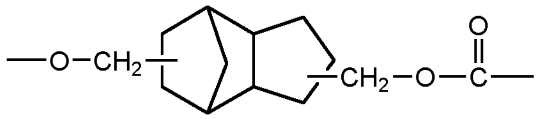

(33)

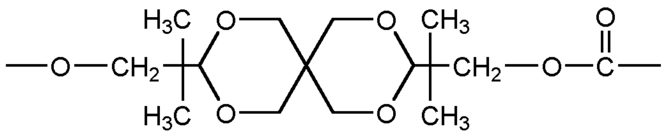

(34)

In the formula (31), "n" represents an integer of from 2 to 18, preferably from 3 to 10, more preferably from 4 to 8.

When the structural unit (A-3) includes at least one selected from the structural units (A-31) to (A-34), the total content of the structural units (A-31) to (A-34) in the structural unit (A-3) is preferably 90.0 mass% or more, more preferably 93.0 mass% or more, still more preferably 95.0 mass% or more, and is preferably 100.0 mass% or less, more preferably 100.0 mass%.

From the viewpoint of obtaining a molded body excellent in scratch resistance and impact resistance, the content of the polycarbonate block in the polycarbonate-polyorganosiloxane copolymer of the present invention is preferably 65.0 mass% or more, more preferably 80.0 mass% or more, still more preferably 85.0 mass% or more, and is preferably 99.0 mass% or less, more preferably 97.0 mass% or less, still more preferably 95.0 mass% or less. In addition, the content of the polycarbonate block in the polycarbonate-polyorganosiloxane copolymer is preferably from 65.0 mass% to 99.0 mass%, more preferably from 80.0 mass% to 97.0 mass%, still more preferably from 85.0 mass% to 95.0 mass%.

From the viewpoint of further improving the scratch resistance of the molded body, the content of the structural unit (A-1) in the polycarbonate-polyorganosiloxane copolymer is preferably 45.0 mass% or more, more preferably 55.0 mass% or more, still more preferably 65.0 mass% or more, and is preferably 99.0 mass% or less, more preferably 95.0 mass% or less, still more preferably 90.0 mass% or less. In addition, the content of the structural unit (A-1) in the polycarbonate-polyorganosiloxane copolymer is preferably from 45.0 mass% to 99.0 mass%, more preferably from 55.0 mass% to 95.0 mass%, still more preferably from 65.0 mass% to 90.0 mass%.

When the polycarbonate-polyorganosiloxane copolymer contains the structural unit (A-3), from the viewpoint of further improving the impact resistance of the molded body, the content of the structural unit (A-3) in the polycarbonate-polyorganosiloxane copolymer is preferably 1.0 mass% or more, more preferably 5.0 mass% or more, still more preferably 10.0 mass% or more, and is preferably 50.0 mass% or less, more preferably 40.0 mass% or less, still more preferably 35.0 mass% or less. In addition, the content of the structural unit (A-3) in the polycarbonate-polyorganosiloxane copolymer is preferably from 1.0 mass% to 50.0 mass%, more preferably from 5.0 mass% to 40.0 mass%, still more preferably from 10.0 mass% to 35.0 mass%.

From the viewpoint of improving the scratch resistance of the molded body, the content of the structural unit (A-1) in the polycarbonate block is preferably 60.0 mol% or more, more preferably 70.0 mol% or more, and is preferably 100.0 mol% or less, more preferably 90.0 mol% or less, still more preferably 80.0 mol% or less. In addition, from the viewpoint of improving the scratch resistance of the molded body, the content of the structural unit (A-1) in the polycarbonate block is preferably from 60.0 mol% to 100.0 mol%, more preferably from 70.0 mol% to 90.0 mol%, still more preferably from 70.0 mol% to 80.0 mol%.

When the polycarbonate block contains the structural unit (A-3), from the viewpoint of improving the scratch resistance of the molded body, the content of the structural unit (A-1) in the polycarbonate block is preferably 50.0 mol% or more, more preferably 60.0 mol% or more, still more preferably 70.0 mol% or more, and is preferably 99.0 mol% or less, more preferably 90.0 mol% or less, still more preferably 80.0 mol% or less. In addition, when the polycarbonate block contains the structural unit (A-3), the content of the structural unit (A-1) in the polycarbonate block is preferably from 50.0 mol% to 99.0 mol%, more preferably from 60.0 mol% to 90.0 mol%, still more preferably from 70.0 mol% to 80.0 mol%.

When the polycarbonate block contains the structural unit (A-3), from the viewpoint of improving the impact resistance of the molded body, the content of the structural unit (A-3) in the polycarbonate block is preferably 3.0 mol% or more, more preferably 5.0 mol% or more, still more preferably 8.0 mol% or more, even still more preferably 10.0 mol% or more, and from the viewpoint of obtaining a molded body excellent in scratch resistance and impact resistance, the content is preferably 50.0 mol% or less, more preferably 40.0 mol% or less, still more preferably 30.0 mol% or less. In addition, when the polycarbonate block contains the structural unit (A-3), the content of the structural unit (A-3) in the polycarbonate block is preferably from 3.0 mol% to 50.0 mol%, more preferably from 5.0 mol% to 40.0 mol%, still more preferably from 8.0 mol% to 30.0 mol%, even still more preferably from 10.0 mol% to 30.0 mol%.

The contents of the polycarbonate block, the structural unit (A-1), and the structural unit (A-3) in the polycarbonate-polyorganosiloxane copolymer are calculated by nuclear magnetic resonance (NMR) measurement.

<Terminal Structure of Polycarbonate-Polyorganosiloxane Copolymer>

In one embodiment, the polycarbonate-polyorganosiloxane copolymer of the present invention may contain a terminal structure represented by $-OR^T$. $R^T$ represents $Ar^1$, $Ar^2$, $Ar^3$, $Ar^4$, $Ar^5$, $Ar^6$, $R^{21}$, $R^{22}$, $R^{23}$, $R^{24}$, $R^{25}$, or $R^{26}$ to be described later, a p-cumylphenyl group, or a p-(tert-butyl)phenyl group, and preferably represents $Ar^1$, $Ar^2$, $Ar^3$, $Ar^4$, $Ar^5$, $Ar^6$, or a p-(tert-butyl)phenyl group.

$Ar^1$, $Ar^2$, $Ar^3$, $Ar^4$, $Ar^5$, or $Ar^6$ preferably represents a phenyl group, an o-tolyl group, a m-tolyl group, a p-tolyl group, a chlorophenyl group, or a naphthyl group, and more preferably represents a phenyl group.

The content of the terminal structure represented by $-OR^T$ in the polycarbonate-polyorganosiloxane copolymer is preferably 0.01 mass% or more, more preferably 0.2 mass% or more, still more preferably 0.5 mass% or more, and is preferably 3.0 mass% or less, more preferably 2.5 mass% or less, still more preferably 2.0 mass% or less. In addition, the content of the terminal structure represented by $-OR^T$ in the polycarbonate-polyorganosiloxane copolymer is preferably from 0.01 mass% to 3.0 mass%, more preferably from 0.2 mass% to 2.5 mass%, still more preferably from 0.5 mass% to 2.0 mass%. As the content of the terminal structure represented by $-OR^T$ becomes higher, the content of a terminal hydroxy group derived from a diol monomer is reduced, and the heat resistance and glass transition temperature of a resin are increased.

The content of the terminal structure represented by $-OR^T$ is calculated by nuclear magnetic resonance (NMR) measurement.

<Polyorganosiloxane Block>

The polyorganosiloxane block in the polycarbonate-polyorganosiloxane copolymer of the present invention contains at least the structural unit (A-2) represented by the following formula (2). The polyorganosiloxane block is a structural unit that is present between two polycarbonate bonds most adjacent to each other on a main chain of the polycarbonate-polyorganosiloxane copolymer and contains at least one structural unit represented by the following formula (XX).

[Chem. 19]

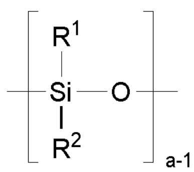

(2)

In the formula (2), $R^1$ and $R^2$ each independently represent a hydrogen atom, a halogen atom, an alkyl group having 1 to 10 carbon atoms, an alkoxy group having 1 to 10 carbon atoms, an aryl group having 6 to 12 carbon atoms, or an alkylaryl group having 7 to 22 carbon atoms, and "a" represents an integer of from 2 to 500.

[Chem. 20]

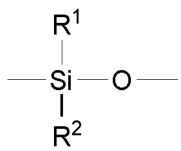

(XX)

In the formula (XX), $R^1$ and $R^2$ represent the same meanings as those of $R^1$ and $R^2$ in the formula (2).

Examples of the halogen atom represented by each of $R^1$ and $R^2$ in the formulae include a fluorine atom, a chlorine atom, a bromine atom, and an iodine atom. Examples of the alkyl group having 1 to 10 carbon atoms represented by each of $R^1$ and $R^2$ include a methyl group, an ethyl group, a n-propyl group, an isopropyl group, various butyl groups, various pentyl groups, and various hexyl groups. Examples of the alkoxy group having 1 to 10 carbon atoms represented by each of $R^1$ and $R^2$ include alkoxy groups whose alkyl group moieties are the same as the above-mentioned alkyl groups. Examples of the aryl group having 6 to 12 carbon atoms represented by each of $R^1$ and $R^2$ include a phenyl group and a naphthyl group. Examples of the alkylaryl group having 7 to 22 carbon atoms represented by each of $R^1$ to $R^4$ include alkylaryl groups whose alkyl group moieties are the same as the above-mentioned alkyl groups and whose aryl group moieties are the same as the above-mentioned aryl groups.

All $R^1$ to $R^4$ preferably represent hydrogen atoms, alkyl groups each having 1 to 6 carbon atoms, alkoxy groups each having 1 to 6 carbon atoms, aryl groups each having 6 to 12 carbon atoms, or arylalkyl groups each having 7 to 22 carbon atoms, all $R^1$ to $R^4$ more preferably represent alkyl groups each having 1 to 6 carbon atoms, and all $R^1$ to $R^4$ still more preferably represent methyl groups.

The polyorganosiloxane block preferably has a structure represented by the following formula (21).

[Chem. 21]

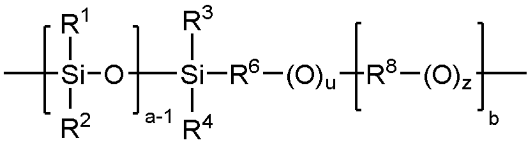

(21)

In the formula (21), $R^1$, $R^2$, and "a" represent the same meanings as those of $R^1$, $R^2$, and "a" in the formula (2). $R^3$ and $R^4$ each independently represent a hydrogen atom, a halogen atom, an alkyl group having 1 to 10 carbon atoms, an alkoxy group having 1 to 10 carbon atoms, an aryl group having 6 to 12 carbon atoms, or an alkylaryl group having 7 to 22 carbon atoms. $R^6$ represents an arylene group having 6 to 20 carbon atoms, an alkylene group having 1 to 10 carbon atoms, or an alkylarylene group having 7 to 22 carbon atoms, and these groups may each contain at least one selected from the group consisting of: -O-; -COO-; -CO-; -S-; -NH-; and $-NR^{111}-$ in at least one of a main chain or a side chain thereof. A plurality of $R^8$s may be identical to or different from each other, and each represent an arylene group having 6 to 20 carbon atoms, an alkylene group having 1 to 10 carbon atoms, or an alkylarylene group having 7 to 22 carbon atoms, and these groups may each contain, in at least one of a main chain or a side chain thereof, at least one group selected from the group consisting of: -O-; -COO-; -CO-; -S-; -NH-; and $-NR^{111}-$. $R^{111}$ represents an alkyl group having 1 to 10 carbon atoms, or an aryl group having 6 to 10 carbon atoms. "a" represents an integer of from 2 to 500, and "b" represents an integer of from 2 to 200. "u" and "z" each represent 0 or 1.

In addition, the polyorganosiloxane block preferably has a structure represented by the following formula (22).

[Chem. 22]

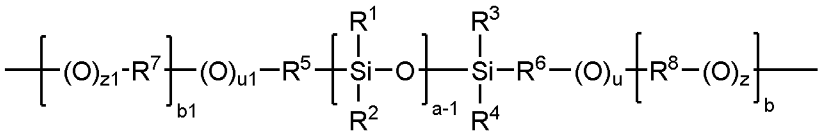

(22)

In the formula (22), $R^1$ to $R^4$, $R^6$, $R^8$, "a", "b", "u", and "z" represent the same meanings as those of $R^1$ to $R^4$, $R^6$, $R^8$, "a", "b", "u", and "z" in the formula (2) and the formula (21). $R^5$ represents an arylene group having 6 to 20 carbon atoms, an alkylene group having 1 to 10 carbon atoms, or an alkylarylene group having 7 to 22 carbon atoms, and these groups may each contain at least one selected from the group consisting of: -O-; -COO-; -CO-; -S-; -NH-; and $-NR^{111}-$ in at least one of a main chain or a side chain thereof. $R^7$ represents an arylene group having 6 to 20 carbon atoms, an alkylene group having 1 to 10 carbon atoms, or an alkylarylene group having 7 to 22 carbon atoms, and these groups may each contain at least one selected from the group consisting of: -O-; -COO-; -CO-; -S-; -NH-; and $-NR^{111}-$ in at least one of a main chain or a side chain thereof. $R^{111}$ represents the same meaning as that described above. b1 represents an integer of from 2 to 200. u1 and z1 each represent 0 or 1.

In addition, the polyorganosiloxane block may have at least one of structures represented by the following formulae (23) to (26).

[Chem. 23]

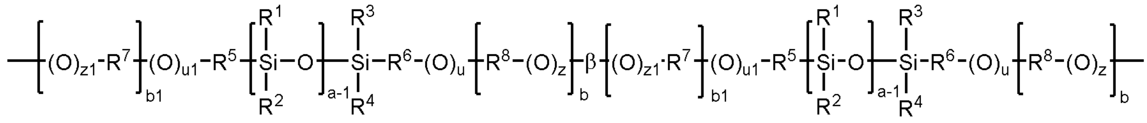 (23)

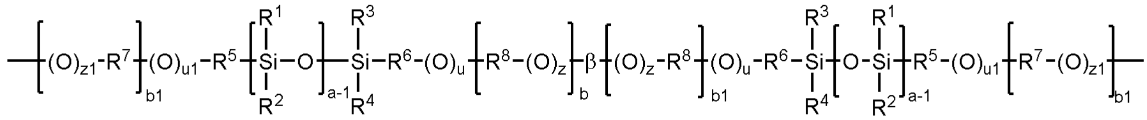 (24)

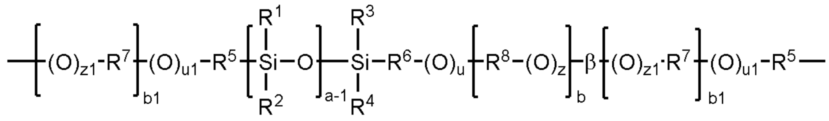 (25)

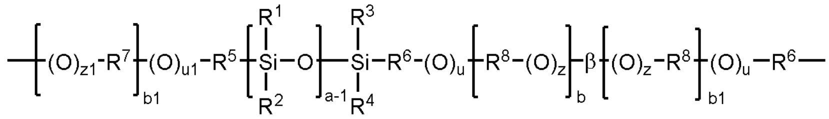 (26)

In the formulae (23) to (26), $R^1$ to $R^8$, "a", "b", b1, "u", u1, "z", and z1 represent the same meanings as those of $R^1$ to $R^8$, "a", "b", b1, "u", u1, "z", and z1 in the formula (2), the formula (21), and the formula (22). In $-(O)_z-$ and $-(O)_{z1}-$ to be bonded to β, "z" and z1 each represent 1. β represents a divalent group derived from a diisocyanate compound, or a divalent group derived from a dicarboxylic acid compound.

Examples of the halogen atom represented by each of $R^3$ and $R^4$ in the formulae include the same examples as those of the halogen atom represented by each of $R^1$ and $R^2$. Examples of the alkyl group having 1 to 10 carbon atoms represented by each of $R^1$ to $R^4$ include the same examples as those of the alkyl group represented by each of $R^1$ and $R^2$. Examples of the alkoxy group having 1 to 10 carbon atoms represented by each of $R^3$ and $R^4$ include the same examples as those of the alkoxy group represented by each of $R^1$ and $R^2$. Examples of the aryl group having 6 to 12 carbon atoms represented by each of $R^3$ and $R^4$ include the same examples as those of the aryl group represented by each of $R^1$ and $R^2$. Examples of the alkylaryl group having 7 to 22 carbon atoms represented by each of $R^3$ and $R^4$ include the same examples as those of the alkylaryl group represented by each of $R^1$ and $R^2$.

Both $R^3$ and $R^4$ preferably represent hydrogen atoms, alkyl groups each having 1 to 6 carbon atoms, alkoxy groups each having 1 to 6 carbon atoms, aryl groups each having 6 to 12 carbon atoms, or arylalkyl groups each having 7 to 22 carbon atoms, both $R^3$ and $R^4$ more preferably represent alkyl groups each having 1 to 6 carbon atoms, and both $R^3$ and $R^4$ still more preferably represent methyl groups.

Examples of the arylene group having 6 to 20 carbon atoms represented by $R^5$, $R^6$, $R^7$, or $R^8$ include a phenylene group and a naphthylene group. Examples of the alkylene group having 1 to 10 carbon atoms represented by $R^5$, $R^6$, $R^7$, or $R^8$ include a methylene group, a dimethylene group, a trimethylene group, a methyl-substituted dimethylene group, and various butylene groups. Among the various butylene groups, a tetramethylene group is preferred. Examples of the alkylarylene group having 7 to 22 carbon atoms represented by $R^5$, $R^6$, $R^7$, or $R^8$ include alkylarylene groups whose alkyl group moieties are the same as the above-mentioned alkylene groups and whose arylene group moieties are the same as the above-mentioned arylene groups. However, those groups may each contain, in at least one of a main chain or a side chain thereof, at least one group selected from the group consisting of: -O-; - COO-; -CO-; -S-; -NH-; and $-NR^{111}-$. $R^{111}$ represents an alkyl group having 1 to 10 carbon atoms, or an aryl group having 6 to 10 carbon atoms. Examples of the alkyl group having 1 to 10 carbon atoms represented by $R^{111}$ include a methyl group, an ethyl group, a n-propyl group, an isopropyl group, various butyl groups, various pentyl groups, and various hexyl groups. Examples of the aryl group having 6 to 10 carbon atoms represented by $R^{111}$ include a phenyl group and a naphthyl group.

Both $R^5$ and $R^6$ preferably represent alkylene groups each having 1 to 10 carbon atoms or alkylarylene groups each having 7 to 22 carbon atoms, more preferably represent alkylene groups each having 1 to 5 carbon atoms or alkylarylene groups each having 7 to 11 carbon atoms, and still more preferably represent trimethylene groups or trimethylenyl phenylene groups ($-CH_2CH_2CH_2$-Ph-).

Both $R^7$ and $R^8$ preferably represent alkylene groups each having 1 to 10 carbon atoms, more preferably alkylene groups each having 1 to 5 carbon atoms, still more preferably represent dimethylene groups, methyl-substituted dimethylene groups ($-CH_2CHMe-$), trimethylene groups, or tetramethylene groups, and even still more preferably represent dimethylene groups.

In each of the formula (2) and the formulae (21) to (26), "a" represents a number obtained by adding 1 to the number of repetitions of the structural unit represented by the formula (XX), and represents an integer of preferably 2 or

more, more preferably 10 or more, still more preferably 15 or more, even still more preferably 20 or more, and preferably 300 or less, more preferably 95 or less, still more preferably 70 or less, even still more preferably 50 or less. In addition, in each of the formula (2) and the formulae (21) to (26), "a" preferably represents an integer of preferably from 2 to 300, more preferably from 10 to 95, still more preferably from 15 to 70, even still more preferably from 20 to 50.

An average of "a"s in the polycarbonate-polyorganosiloxane copolymer is preferably 2 or more, more preferably 10 or more, still more preferably 15 or more, even still more preferably 20 or more, and is preferably 300 or less, more preferably 95 or less, still more preferably 70 or less, even still more preferably 50 or less. In addition, the average of "a"s in the polycarbonate-polyorganosiloxane copolymer is preferably from 2 to 300, more preferably from 10 to 95, still more preferably from 15 to 70, still more preferably from 15 to 50, even still more preferably from 20 to 50. The average of "a"s in the polycarbonate-polyorganosiloxane copolymer is preferably from 10 to 95 because the polycarbonate-polyorganosiloxane copolymer becomes a highly transparent copolymer having a higher total light transmittance. In addition, the average of "a"s in the polycarbonate-polyorganosiloxane copolymer is preferably from 15 to 50 because the physical properties, such as surface hardness, tensile strength, and tensile elongation, of a molded article obtained from the polycarbonate-polyorganosiloxane copolymer are improved, and a satisfactory molding appearance is achieved.

The average of "a"s in the polycarbonate-polyorganosiloxane copolymer is calculated by nuclear magnetic resonance (NMR) measurement.

In the formulae (21) to (26), "b" and b1 each represent the number of repeating units, and each independently represent an integer of preferably 2 or more, more preferably 5 or more, still more preferably 8 or more, still more preferably 10 or more, even still more preferably 12 or more, and preferably 200 or less, more preferably 100 or less, still more preferably 50 or less, still more preferably 30 or less, still more preferably 25 or less, even still more preferably 20 or less. In addition, in the formulae (21) to (26), "b" and b1 each independently represent an integer of preferably from 2 to 200, more preferably from 5 to 100, still more preferably from 8 to 50, still more preferably from 10 to 30, still more preferably from 12 to 25, even still more preferably from 12 to 20.

In the polycarbonate-polyorganosiloxane copolymer, an average of "b"s, an average of b1s, and an average b2 when "b" s and b1s are combined are each preferably 2 or more, more preferably 5 or more, still more preferably 8 or more, still more preferably 10 or more, even still more preferably 12 or more, and are each preferably 200 or less, more preferably 100 or less, still more preferably 50 or less, still more preferably 30 or less, still more preferably 25 or less, even still more preferably 20 or less. The averages preferably fall within the above-mentioned ranges because of the ease of availability of a raw material. In addition, in the polycarbonate-polyorganosiloxane copolymer, the average of "b"s, the average of b1s, and the average b2 when "b"s and b1s are combined are each preferably from 2 to 200, more preferably from 5 to 100, still more preferably from 8 to 50, still more preferably from 10 to 30, still more preferably from 12 to 25, even still more preferably from 12 to 20. The average b2 in the polycarbonate-polyorganosiloxane copolymer is more preferably 10 or more because the impact resistance and scratch resistance of the molded body to be obtained can be further improved. The average b2 in the polycarbonate-polyorganosiloxane copolymer is more preferably 100 or less because a reduction in handleability due to increases in viscosity and melting point of a polyorganosiloxane can be suppressed. The average b2 in the polycarbonate-polyorganosiloxane copolymer is still more preferably 50 or less because a physical property-improving effect exhibited when the polycarbonate-polyorganosiloxane copolymer contains the polyorganosiloxane block is further improved.

The average b2 in the polycarbonate-polyorganosiloxane copolymer is calculated by nuclear magnetic resonance (NMR) measurement.

In the formula (21), "u" preferably represents 1. In addition, in the formulae (22) to (26), "u" and u1 each preferably represent 1, and both "u" and u1 more preferably represent 1.

In the formula (21), "z" preferably represents 1. In addition, in the formulae (22) to (26), "z" and z1 each preferably represent 1, and both "z" and z1 more preferably represent 1.

In the formula (21), it is still more preferred that all $R^1$ to $R^4$ represent methyl groups, $R^6$ represent a trimethylene group, $R^8$ represent a dimethylene group, and "z" represent 1. It is still more preferred that all $R^1$ to $R^4$ represent a methyl group, $R^6$ represent a trimethylene group, $R^8$ represent a dimethylene group, "z" represent 1, and "u" represent 1.

In the formulae (22) to (26), it is even still more preferred that all $R^1$ to $R^4$ represent methyl groups, both $R^5$ and $R^6$ represent trimethylene groups, both $R^7$ and $R^8$ represent dimethylene groups, both "z" and $z^1$ represent 1, and both "u" and u1 represent 1.

In the formulae (23) to (26), β represents a divalent group derived from a diisocyanate compound, or a divalent group derived from a dicarboxylic acid compound. Examples of the dicarboxylic acid compound include a dicarboxylic acid, an anhydride of a dicarboxylic acid, a halide of dicarboxylic acid, and a diester of a dicarboxylic acid and a lower alcohol. Examples of the lower alcohol include methanol, ethanol, and propanol. Examples of β include divalent groups represented by the following formulae (i) to (v).

[Chem. 24]

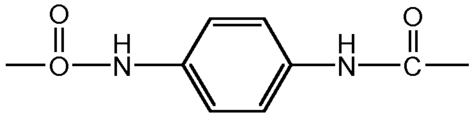

(i)

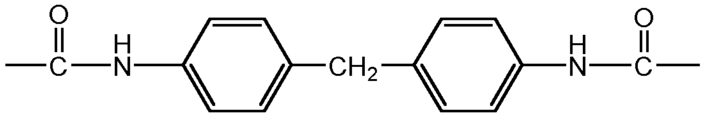

(ii)

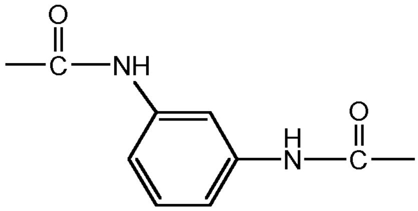

(iii)

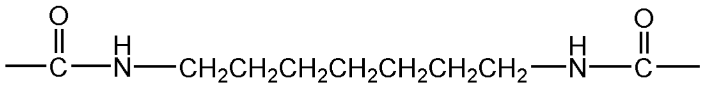

(iv)

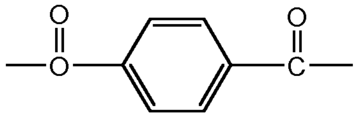

(v)

From the viewpoint of improving impact resistance, the polyorganosiloxane block preferably contains no branched structure.

From the viewpoint of improving the impact resistance of the molded body, the content of the structural unit represented by the formula (XX) in the polycarbonate-polyorganosiloxane copolymer of the present invention is preferably 2.0 mass% or more, more preferably 3.0 mass% or more, still more preferably 4.0 mass% or more, even still more preferably 5.0 mass% or more, and is preferably 25.0 mass% or less, more preferably 20.0 mass% or less, still more preferably 15.0 mass% or less, even still more preferably 7.5 mass% or less. In addition, the content of the structural unit represented by the formula (XX) in the polycarbonate-polyorganosiloxane copolymer is preferably from 2.0 mass% to 25.0 mass%, more preferably from 3.0 mass% to 20.0 mass%, still more preferably from 4.0 mass% to 15.0 mass%, even still more preferably from 5.0 mass% to 7.5 mass%.

When the content of the structural unit represented by the formula (XX) falls within the above-mentioned ranges, from the viewpoint of further improving the scratch resistance and impact resistance of the molded body, the content of the structural unit (A-1) represented by the formula (1) in the polycarbonate-polyorganosiloxane copolymer is preferably 73.0 mass% or more, more preferably 76.0 mass% or more, still more preferably 78.0 mass% or more, and is preferably 96.0 mass% or less, more preferably 92.0 mass% or less, still more preferably 88.0 mass% or less. In addition, in this case, the content of the structural unit (A-1) represented by the formula (1) in the polycarbonate-polyorganosiloxane copolymer is preferably from 73.0 mass% to 96.0 mass%, more preferably from 76.0 mass% to 92.0 mass%, still more preferably from 78.0 mass% to 88.0 mass%.

The term "content of the structural unit represented by the formula (XX) in the polycarbonate-polyorganosiloxane copolymer" as used herein means the mass percentage of the structural unit represented by the formula (XX) with respect to the total mass of the structural unit (A-1), the structural unit represented by the formula (XX), a structural unit represented by the following formula (Y), the terminal structure represented by $-OR^T$, and the structural unit (A-3) as required.

[Chem. 25]

$$-R^Y-(O)_{z^0}- \quad (Y)$$

In the formula (Y), $R^Y$ represents $R^7$ or $R^8$. When $R^Y$ represents $R^8$, $z^0$ represents $z^2$, and when $R^Y$ represents $R^7$,

$z^0$ represents $z^1$. $R^7$, $R^8$, $z^1$, and $z^2$ represent the same meanings as those described above.

From the viewpoint of improving the impact resistance of the molded body, the content of the polyorganosiloxane block in the polycarbonate-polyorganosiloxane copolymer is preferably 2.0 mass% or more, more preferably 4.0 mass% or more, still more preferably 9.0 mass% or more, and is preferably 25.0 mass% or less, more preferably 16.0 mass% or less, still more preferably 13.0 mass% or less. In addition, the content of the polyorganosiloxane block in the polycarbonate-polyorganosiloxane copolymer is preferably from 2.0 mass% to 25.0 mass%, more preferably from 4.0 mass% to 16.0 mass%, still more preferably from 9.0 mass% to 13.0 mass%.

The term "content of the polyorganosiloxane block in the polycarbonate-polyorganosiloxane copolymer" as used herein means the percentage of the total mass of the structural unit represented by the formula (XX) and the structural unit represented by the formula (Y) with respect to the total mass of the structural unit (A-1), the structural unit represented by the formula (XX), the structural unit represented by the formula (Y), the terminal structure represented by $-OR^T$, and the structural unit (A-3) as required.

The contents of the polyorganosiloxane block and the structural unit represented by the formula (XX) in the polycarbonate-polyorganosiloxane copolymer are calculated by nuclear magnetic resonance (NMR) measurement.

In one embodiment, the polycarbonate-polyorganosiloxane copolymer of the present invention may be a polycarbonate-polyorganosiloxane copolymer (S-1) including: a polycarbonate block containing the structural unit (A-1) represented by the formula (1) and the structural unit (A-31) represented by the formula (31); and the polyorganosiloxane block containing the structural unit (A-2) represented by the formula (2), in which the molar ratio (A-31/A-1) of the structural unit (A-31) to the structural unit (A-1) and the content "x" of the structural unit represented by the formula (XX) in the polycarbonate-polyorganosiloxane copolymer satisfy the following condition (C1) or (D1).

Condition (C1): A-31/A-1 is 1.0/99.0 or more and 25.0/75.0 or less, and "x" is 1.0 mass% or more and less than 4.0 mass%.

Condition (D1): A-31/A-1 is 1.0/99.0 or more and 30.0/70.0 or less, and "x" is 4.0 mass% or more and 10.0 mass% or less.

In the condition (C1), A-31/A-1 is preferably 20.0/80.0 or less, more preferably 17.0/83.0 or less. In addition, in the condition (C1), A-31/A-1 is preferably from 1.0/99.0 to 20.0/80.0, more preferably from 1.0/99.0 to 17.0/83.0.

In the condition (D1), A-31/A-1 is preferably 25.0/75.0 or less, more preferably 17.0/83.0 or less. In addition, in the condition (D1), A-31/A-1 is preferably from 1.0/99.0 to 25.0/75.0, more preferably from 1.0/99.0 to 17.0/83.0.

In the polycarbonate-polyorganosiloxane copolymer (S-1), the total content of the structural units (A-1) and (A-31) is preferably 70.0 mol% or more, more preferably 80.0 mol% or more, still more preferably 90.0 mol% or more, even still more preferably 100.0 mol% in the polycarbonate block.

In one embodiment, the polycarbonate-polyorganosiloxane copolymer of the present invention may be a polycarbonate-polyorganosiloxane copolymer (S-2) including: a polycarbonate block containing the structural unit (A-1) represented by the formula (1) and the structural unit (A-32) represented by the formula (32); and the polyorganosiloxane block containing the structural unit (A-2) represented by the formula (2), in which the total content of the structural units (A-1) and (A-32) in the polycarbonate block included in the polycarbonate-polyorganosiloxane copolymer is 90.0 mol% or more, and the molar ratio (A-32/A-1) of the structural unit (A-32) to the structural unit (A-1) and the content "x" of the structural unit represented by the formula (XX) satisfy the following condition (C2) or (D2).

Condition (C2): A-32/A-1 is 1.0/99.0 or more and 35.0/65.0 or less, and "x" is 1.0 mass% or more and less than 4.0 mass%.

Condition (D2): A-32/A-1 is 1.0/99.0 or more and 27.0/73.0 or less, and "x" is 4.0 mass% or more and 10.0 mass% or less.

In the condition (C2), A-32/A-1 is preferably 32.0/68.0 or less, more preferably 28.0/72.0 or less. In addition, in the condition (C2), A-32/A-1 is preferably from 1.0/99.0 to 32.0/68.0, more preferably from 1.0/99.0 to 28.0/72.0.

In the condition (D2), A-32/A-1 is preferably 24.0/76.0 or less, more preferably 21.0/79.0 or less. In addition, in the condition (D2), A-32/A-1 is preferably from 1.0/99.0 to 24.0/76.0, more preferably from 1.0/99.0 to 21.0/79.0.

In the polycarbonate-polyorganosiloxane copolymer (S-2), the total content of the structural units (A-1) and (A-32) is preferably 100.0 mol% in the polycarbonate block.

In one embodiment, the polycarbonate-polyorganosiloxane copolymer of the present invention may be a polycarbonate-polyorganosiloxane copolymer (S-3) including: a polycarbonate block containing the structural unit (A-1) represented by the formula (1) and the structural unit (A-33) represented by the formula (33); and the polyorganosiloxane block containing the structural unit (A-2) represented by the formula (2), in which the molar ratio (A-33/A-1) of the structural unit (A-33) to the structural unit (A-1) and the content "x" of the structural unit represented by the formula (XX) satisfy the following condition (C3) or (D3).

Condition (C3): A-33/A-1 is 1.0/99.0 or more and 40.0/60.0 or less, and "x" is 1.0 mass% or more and less than 4.0 mass%.

Condition (D3): A-33/A-1 is 1.0/99.0 or more and 35.0/65.0 or less, and "x" is 4.0 mass% or more and 10.0 mass% or less.

In the condition (C3), A-33/A-1 is preferably 35.0/65.0 or less, more preferably 30.0/70.0 or less. In addition, in the condition (C3), A-33/A-1 is preferably from 1.0/99.0 to 35.0/65.0, more preferably from 1.0/99.0 to 30.0/70.0.

In the condition (D3), A-33/A-1 is preferably 33.0/67.0 or less, more preferably 31.0/69.0 or less. In addition, in the condition (D3), A-33/A-1 is preferably from 1.0/99.0 to 33.0/67.0, more preferably from 1.0/99.0 to 31.0/69.0.

In the polycarbonate-polyorganosiloxane copolymer (S-3), the total content of the structural units (A-1) and (A-33) is preferably 70.0 mol% or more, more preferably 80.0 mol% or more, still more preferably 90.0 mol% or more, even still more preferably 100.0 mol% in the polycarbonate block.

In one embodiment, the polycarbonate-polyorganosiloxane copolymer of the present invention may be a polycarbonate-polyorganosiloxane copolymer (S-4) including: a polycarbonate block containing the structural unit (A-1) represented by the formula (1), the structural unit (A-32) represented by the formula (32), and the structural unit (A-33) represented by the formula (33); and the polyorganosiloxane block containing the structural unit (A-2) represented by the formula (2), in which the molar ratio ((total of A-32 and A-33)/A-1)) of the total of the structural units (A-32) and (A-33) to the structural unit (A-1), the molar ratio (A-32/A-33) of the structural unit (A-32) to the structural unit (A-33), and the content "x" of the structural unit represented by the formula (XX) satisfy the following condition (C41), (C42), (C43), (D41), (D42), or (D43).

Condition (C41): A-32/A-33 is 60.0/40.0 or more and 99.0/1.0 or less, (total of A-32 and A-33)/A-1 is 1.0/99.0 or more and 39.0/61.0 or less, and "x" is 1.0 mass% or more and less than 4.0 mass%.

Condition (C42): A-32/A-33 is 40.0/60.0 or more and less than 60.0/40.0, (total of A-32 and A-33)/A-1 is 1.0/99.0 or more and 31.0/69.0 or less, and "x" is 1.0 mass% or more and less than 4.0 mass%.

Condition (C43): A-32/A-33 is 1.0/99.0 or more and less than 40.0/60.0, (total of A-32 and A-33)/A-1 is 1.0/99.0 or more and 46.0/54.0 or less, and "x" is 1.0 mass% or more and less than 4.0 mass%.

Condition (D41): A-32/A-33 is 60.0/40.0 or more and 99.0/1.0 or less, (total of A-32 and A-33)/A-1 is 1.0/99.0 or more and 32.0/68.0 or less, and "x" is 4.0 mass% or more and 10.0 mass% or less.

Condition (D42): A-32/A-33 is 40.0/60.0 or more and less than 60.0/40.0, (total of A-32 and A-33)/A-1 is 1.0/99.0 or more and 36.0/64.0 or less, and "x" is 4.0 mass% or more and 10.0 mass% or less.

Condition (D43): A-32/A-33 is 1.0/99.0 or more and less than 40.0/60.0, (total of A-32 and A-33)/A-1 is 1.0/99.0 or more and 41.0/59.0 or less, and "x" is 4.0 mass% or more and 10.0 mass% or less.

In the condition (C41), (total of A-32 and A-33)/A-1 is preferably 35.0/65.0 or less, more preferably 31.0/69.0 or less. In addition, in the condition (C41), (total of A-32 and A-33)/A-1 is preferably from 1.0/99.0 to 35.0/65.0, more preferably from 1.0/99.0 to 31.0/69.0.

In the condition (C42), (total of A-32 and A-33)/A-1 is preferably 30.0/70.0 or less, more preferably 25.0/75.0 or less. In addition, in the condition (C42), (total of A-32 and A-33)/A-1 is preferably from 1.0/99.0 to 30.0/70.0, more preferably from 1.0/99.0 to 25.0/75.0.

In the condition (C43), (total of A-32 and A-33)/A-1 is preferably 42.0/58.0 or less, more preferably 37.0/63.0 or less. In addition, in the condition (C43), (total of A-32 and A-33)/A-1 is preferably from 1.0/99.0 to 42.0/58.0, more preferably from 1.0/99.0 to 37.0/63.0.

In the condition (D41), (total of A-32 and A-33)/A-1 is preferably 28.0/72.0 or less, more preferably 25.0/75.0 or less. In addition, in the condition (D41), (total of A-32 and A-33)/A-1 is preferably from 1.0/99.0 to 28.0/72.0, more preferably from 1.0/99.0 to 25.0/75.0.

In the condition (D42), (total of A-32 and A-33)/A-1 is preferably 31.0/69.0 or less, more preferably 28.0/72.0 or less. In addition, in the condition (D42), (total of A-32 and A-33)/A-1 is preferably from 1.0/99.0 to 31.0/69.0, more preferably from 1.0/99.0 to 28.0/72.0.

In the condition (D43), (total of A-32 and A-33)/A-1 is preferably 35.0/65.0 or less, more preferably 32.0/68.0 or less. In addition, in the condition (D43), (total of A-32 and A-33)/A-1 is preferably from 1.0/99.0 to 35.0/65.0, more preferably from 1.0/99.0 to 32.0/68.0.

In the polycarbonate-polyorganosiloxane copolymer (S-4), the total content of the structural units (A-1), (A-32), and (A-33) is preferably 70.0 mol% or more, more preferably 80.0 mol% or more, still more preferably 90.0 mol% or more, even still more preferably 100.0 mol% in the polycarbonate block.

In one embodiment, the polycarbonate-polyorganosiloxane copolymer of the present invention may be a polycarbonate-polyorganosiloxane copolymer (S-5) including: a polycarbonate block containing the structural unit (A-1) represented by the formula (1), the structural unit (A-31) represented by the formula (31), and the structural unit (A-33) represented by the formula (33); and the polyorganosiloxane block containing the structural unit (A-2) represented by the formula (2), in which the molar ratio ((total of A-31 and A-33)/A-1)) of the total of the structural units (A-31) and (A-33) to the structural unit (A-1), the molar ratio (A-31/A-33) of the structural unit (A-31) to the structural unit (A-33), and the content "x" of the structural unit represented by the formula (XX) satisfy the following condition (C51), (C52), (C53), (D51), (D52), or (D53).

Condition (C51): A-31/A-33 is 60.0/40.0 or more and 99.0/1.0 or less, (total of A-31 and A-33)/A-1 is 1.0/99.0 or more and 39.0/61.0 or less, and "x" is 1.0 mass% or more and less than 4.0 mass%.

Condition (C52): A-31/A-33 is 40.0/60.0 or more and less than 60.0/40.0, (total of A-31 and A-33)/A-1 is 1.0/99.0 or more and 43.0/57.0 or less, and "x" is 1.0 mass% or more and less than 4.0 mass%.

Condition (C53): A-31/A-33 is 1.0/99.0 or more and less than 40.0/60.0, (total of A-31 and A-33)/A-1 is 1.0/99.0 or more and 46.0/54.0 or less, and "x" is 1.0 mass% or more and less than 4.0 mass%.

Condition (D51): A-31/A-33 is 60.0/40.0 or more and 99.0/1.0 or less, (total of A-31 and A-33)/A-1 is 1.0/99.0 or more and 34.0/66.0 or less, and "x" is 4.0 mass% or more and 10.0 mass% or less.

Condition (D52): A-31/A-33 is 40.0/60.0 or more and less than 60.0/40.0, (total of A-31 and A-33)/A-1 is 1.0/99.0 or more and 38.0/62.0 or less, and "x" is 4.0 mass% or more and 10.0 mass% or less.

Condition (D53): A-31/A-33 is 1.0/99.0 or more and less than 40.0/60.0, (total of A-31 and A-33)/A-1 is 1.0/99.0 or more and 41.0/59.0 or less, and "x" is 4.0 mass% or more and 10.0 mass% or less.

In the condition (C51), (total of A-31 and A-33)/A-1 is preferably 34.0/66.0 or less, more preferably 29.0/71.0 or less. In addition, in the condition (C51), (total of A-31 and A-33)/A-1 is preferably from 1.0/99.0 to 34.0/66.0, more preferably from 1.0/99.0 to 29.0/71.0.

In the condition (C52), (total of A-31 and A-33)/A-1 is preferably 38.0/62.0 or less, more preferably 33.0/67.0 or less. In addition, in the condition (C52), (total of A-31 and A-33)/A-1 is preferably from 1.0/99.0 to 38.0/62.0, more preferably from 1.0/99.0 to 33.0/67.0.

In the condition (C53), (total of A-31 and A-33)/A-1 is preferably 41.0/59.0 or less, more preferably 36.0/64.0 or less. In addition, in the condition (C53), (total of A-31 and A-33)/A-1 is preferably from 1.0/99.0 to 41.0/59.0, more preferably from 1.0/99.0 to 36.0/64.0.

In the condition (D51), (total of A-31 and A-33)/A-1 is preferably 28.0/72.0 or less, more preferably 22.0/78.0 or less. In addition, in the condition (D51), (total of A-31 and A-33)/A-1 is preferably from 1.0/99.0 to 28.0/72.0, more preferably from 1.0/99.0 to 22.0/78.0.

In the condition (D52), (total of A-31 and A-33)/A-1 is preferably 32.0/68.0 or less, more preferably 26.0/74.0 or less. In addition, in the condition (D52), (total of A-31 and A-33)/A-1 is preferably from 1.0/99.0 to 32.0/68.0, more preferably from 1.0/99.0 to 26.0/74.0.

In the condition (D53), (total of A-31 and A-33)/A-1 is preferably 35.0/65.0 or less, more preferably 31.0/69.0 or less. In addition, in the condition (D53), (total of A-31 and A-33)/A-1 is preferably from 1.0/99.0 to 35.0/65.0, more preferably from 1.0/99.0 to 31.0/69.0.

In the polycarbonate-polyorganosiloxane copolymer (S-5), the total content of the structural units (A-1), (A-31), and (A-33) is preferably 70.0 mol% or more, more preferably 80.0 mol% or more, still more preferably 90.0 mol% or more, even still more preferably 100.0 mol% in the polycarbonate block.

In one embodiment, the polycarbonate-polyorganosiloxane copolymer of the present invention may be a polycarbonate-polyorganosiloxane copolymer (S-6) including: a polycarbonate block containing the structural unit (A-1) represented by the formula (1), the structural unit (A-31) represented by the formula (31), and the structural unit (A-32) represented by the formula (32); and the polyorganosiloxane block containing the structural unit (A-2) represented by the formula (2), in which the molar ratio ((total of A-31 and A-32)/A-1)) of the total of the structural units (A-31) and (A-32) to the structural unit (A-1), the molar ratio (A-31/A-32) of the structural unit (A-31) to the structural unit (A-32), and the content "x" of the structural unit represented by the formula (XX) satisfy the following condition (C61), (C62), (C63), (D61), (D62), or (D63).

Condition (C61): A-31/A-32 is 60.0/40.0 or more and 99.0/1.0 or less, (total of A-31 and A-32)/A-1 is 1.0/99.0 or more and 35.0/65.0 or less, and "x" is 1.0 mass% or more and less than 4.0 mass%.

Condition (C62): A-31/A-32 is 40.0/60.0 or more and less than 60.0/40.0, (total of A-31 and A-32)/A-1 is 1.0/99.0 or more and 35.0/65.0 or less, and "x" is 1.0 mass% or more and less than 4.0 mass%.

Condition (C63): A-31/A-32 is 1.0/99.0 or more and less than 40.0/60.0, (total of A-31 and A-33)/A-1 is 1.0/99.0 or more and 43.0/57.0 or less, and "x" is 1.0 mass% or more and less than 4.0 mass%.

Condition (D61): A-31/A-32 is 60.0/40.0 or more and 99.0/1.0 or less, (total of A-31 and A-32)/A-1 is 1.0/99.0 or more and 29.0/71.0 or less, and "x" is 4.0 mass% or more and 10.0 mass% or less.

Condition (D62): A-31/A-32 is 40.0/60.0 or more and less than 60.0/40.0, (total of A-31 and A-32)/A-1 is 1.0/99.0 or more and 29.0/71.0 or less, and "x" is 4.0 mass% or more and 10.0 mass% or less.

Condition (D63): A-31/A-32 is 1.0/99.0 or more and less than 40.0/60.0, (total of A-31 and A-32)/A-1 is 1.0/99.0 or more and 37.0/63.0 or less, and "x" is 4.0 mass% or more and 10.0 mass% or less.

In the condition (C61), (total of A-31 and A-32)/A-1 is preferably 31.0/69.0 or less, more preferably 26.0/74.0 or less. In addition, in the condition (C61), (total of A-31 and A-32)/A-1 is preferably from 1.0/99.0 to 31.0/69.0, more preferably from 1.0/99.0 to 26.0/74.0.

In the condition (C62), (total of A-31 and A-32)/A-1 is preferably 31.0/69.0 or less, more preferably 27.0/73.0 or less. In addition, in the condition (C62), (total of A-31 and A-32)/A-1 is preferably from 1.0/99.0 to 31.0/69.0, more preferably from 1.0/99.0 to 27.0/73.0.

In the condition (C63), (total of A-31 and A-32)/A-1 is preferably 38.0/62.0 or less, more preferably 33.0/67.0 or

less. In addition, in the condition (C63), (total of A-31 and A-32)/A-1 is preferably from 1.0/99.0 to 38.0/62.0, more preferably from 1.0/99.0 to 33.0/67.0.

In the condition (D61), (total of A-31 and A-32)/A-1 is preferably 25.0/75.0 or less, more preferably 18.0/82.0 or less. In addition, in the condition (D61), (total of A-31 and A-32)/A-1 is preferably from 1.0/99.0 to 25.0/75.0, more preferably from 1.0/99.0 to 18.0/82.0.

In the condition (D62), (total of A-31 and A-32)/A-1 is preferably 25.0/75.0 or less, more preferably 19.0/81.0 or less. In addition, in the condition (D62), (total of A-31 and A-32)/A-1 is preferably from 1.0/99.0 to 25.0/75.0, more preferably from 1.0/99.0 to 19.0/81.0.

In the condition (D63), (total of A-31 and A-32)/A-1 is preferably 31.0/69.0 or less, more preferably 27.0/73.0 or less. In addition, in the condition (D63), (total of A-31 and A-32)/A-1 is preferably from 1.0/99.0 to 31.0/69.0, more preferably from 1.0/99.0 to 27.0/73.0.

In the polycarbonate-polyorganosiloxane copolymer (S-6), the total content of the structural units (A-1), (A-31), and (A-32) is preferably 70.0 mol% or more, more preferably 80.0 mol% or more, still more preferably 90.0 mol% or more, even still more preferably 100.0 mol% in the polycarbonate block.

In one embodiment, the polycarbonate-polyorganosiloxane copolymer of the present invention may be a polycarbonate-polyorganosiloxane copolymer (S-7) including: the polycarbonate block containing the structural unit (A-1) represented by the formula (1); and the polyorganosiloxane block containing the structural unit (A-2) represented by the formula (2), the polycarbonate-polyorganosiloxane copolymer satisfying at least one or more conditions selected from the following conditions (E1) to (E5).

Condition (E1): The weight-average molecular weight of the polycarbonate-polyorganosiloxane copolymer in terms of polystyrene is 27,000 or more.

Condition (E2): The melt flow rate (MFR) of the polycarbonate-polyorganosiloxane copolymer measured under the conditions of 230°C and a load of 2.13 kg in conformity with JIS K 7210 is 25 g/10 min or less.

Condition (E3): The tensile modulus of elasticity of the polycarbonate-polyorganosiloxane copolymer measured under the condition of 1 mm/min in conformity with ISO 527-1,2:2012 through use of a dumbbell-shaped tensile test piece Type A1 of JIS K 7139 obtained by subjecting the polycarbonate-polyorganosiloxane copolymer to injection molding at a cylinder temperature of from 200°C to 270°C and a die temperature of 80°C is 2,500 MPa or more.

Condition (E4): The tensile strength (yield) of the polycarbonate-polyorganosiloxane copolymer measured in conformity with ISO 527-1,2:2012 through use of a dumbbell-shaped tensile test piece Type A1 of JIS K 7139 obtained by subjecting the polycarbonate-polyorganosiloxane copolymer to injection molding at a cylinder temperature of from 200°C to 270°C and a die temperature of 80°C is 65 MPa or more.

Condition (E5): The midpoint glass transition temperature of the polycarbonate-polyorganosiloxane copolymer is 115°C or more when its temperature is held at 50°C for 1 minute, then increased to 200°C, held at 200°C for 5 minutes, then cooled to 50°C, held at 50°C for 5 minutes, and then increased from 50°C to 200°C at 20°C/min in conformity with JIS K 7121.

In each of the conditions (C1), (C2), (C3), (C41), (C42), (C43), (C51), (C52), (C53), (C61), (C62), and (C63), the content "x" is preferably 2.0 mass% or more, more preferably 3.0 mass% or more.

In each of the conditions (D1), (D2), (D3), (D41), (D42), (D43), (D51), (D52), (D53), (D61), (D62), and (D63), the content "x" is preferably 4.3 mass% or more, more preferably 4.5 mass% or more, and is preferably 9.0 mass% or less, more preferably 6.0 mass% or less. In addition, the content "x" in each of those conditions is preferably from 4.3 mass% to 9.0 mass%, more preferably from 4.5 mass% to 6.0 mass%.

The polycarbonate-polyorganosiloxane copolymer (S-7) preferably satisfies at least two or more conditions selected from the conditions (E1) to (E5), more preferably satisfies at least three or more conditions selected from the conditions (E1) to (E5), still more preferably satisfies at least four or more conditions selected from the conditions (E1) to (E5), and most preferably satisfies all the conditions (E1) to (E5).

In the condition (E1), the weight-average molecular weight is preferably 32,000 or more.

In the condition (E2), the melt flow rate is preferably 15 g/10 min or less.

In the condition (E3), the tensile modulus of elasticity is preferably 2,600 MPa or more.

In the condition (E4), the tensile strength (yield) is preferably 70 MPa or more.

In the condition (E5), the glass transition temperature is preferably 120°C or more.

In one embodiment, the polycarbonate-polyorganosiloxane copolymer of the present invention may be a polycarbonate-polyorganosiloxane copolymer (S-8) including: the polycarbonate block containing the structural unit (A-1) represented by the formula (1); and the polyorganosiloxane block containing the structural unit (A-2) represented by the formula (2), in which the content of the structural unit represented by the formula (XX) is 2.0 mass% or more and 25.0 mass% or less.

The content of the structural unit represented by the formula (XX) in the polycarbonate-polyorganosiloxane copolymer (S-8) is preferably 4.0 mass% or more, more preferably 6.0 mass% or more, still more preferably 8.0 mass% or more, and is preferably 20.0 mass% or less, more preferably 15.0 mass% or less, still more preferably 13.0 mass% or less.

In addition, the content of the structural unit represented by the formula (XX) in the polycarbonate-polyorganosiloxane copolymer (S-8) is preferably from 4.0 mass% to 20.0 mass%, more preferably from 6.0 mass% to 15.0 mass%, still more preferably from 8.0 mass% to 13.0 mass%.

The polycarbonate-polyorganosiloxane copolymer of the present invention is preferably the polycarbonate-polyorganosiloxane copolymer (S-1), (S-2), (S-3), (S-4), (S-5), (S-6), (S-7), or (S-8), more preferably the polycarbonate-polyorganosiloxane copolymer (S-1), (S-2), (S-3), (S-4), or (S-7), still more preferably the polycarbonate-polyorganosiloxane copolymer (S-2), (S-4), or (S-7).

From the viewpoint of improving scratch resistance and impact resistance, the number-average molecular weight (Mn) of the polycarbonate-polyorganosiloxane copolymer is preferably 5,000 or more, more preferably 8,000 or more, still more preferably 10,000 or more, even still more preferably 11,500 or more, and is preferably 30,000 or less, more preferably 25,000 or less, still more preferably 20,000 or less, even still more preferably 15,000 or less. In addition, the number-average molecular weight (Mn) of the polycarbonate-polyorganosiloxane copolymer is preferably from 5,000 to 30,000, more preferably from 8,000 to 25,000, still more preferably from 10,000 to 20,000, even still more preferably from 11,500 to 15,000.

In particular, from the viewpoint of further improving scratch resistance, the number-average molecular weight (Mn) of the polycarbonate-polyorganosiloxane copolymer is preferably 10,000 or more, more preferably 11,000 or more, still more preferably 11,500 or more.

The weight-average molecular weight (Mw) of the polycarbonate-polyorganosiloxane copolymer is preferably 20,000 or more, more preferably 25,000 or more, still more preferably 30,000 or more, even still more preferably 33,000 or more, and is preferably 60,000 or less, more preferably 50,000 or less, still more preferably 45,000 or less, even still more preferably 43,000 or less. In addition, the weight-average molecular weight (Mw) of the polycarbonate-polyorganosiloxane copolymer is preferably from 20,000 to 60,000, more preferably from 25,000 to 50,000, still more preferably from 30,000 to 45,000, even still more preferably from 33,000 to 43,000.

In particular, from the viewpoint of further improving scratch resistance, the weight-average molecular weight (Mw) of the polycarbonate-polyorganosiloxane copolymer is preferably 30,000 or more, more preferably 31,000 or more, still more preferably 33,000 or more.

Although not clear, the reason why the scratch resistance is improved by adjusting the number-average molecular weight and the weight-average molecular weight within the above-mentioned ranges is assumed as described below.

It is conceivable that when the number-average molecular weight and the weight-average molecular weight are equal to or more than certain values, entanglement and interaction between polymer chains are enhanced, the rigidity of the whole resin is improved, and hence the scratch resistance is improved.

The ratio (Mw/Mn) of the weight-average molecular weight (Mw) to the number-average molecular weight (Mn) of the polycarbonate-polyorganosiloxane copolymer is preferably 1.8 or more, more preferably 2.2 or more, still more preferably 2.5 or more, and is preferably 3.2 or less, more preferably 3.0 or less, still more preferably 2.9 or less. In addition, the ratio (Mw/Mn) is preferably from 1.8 to 3.2, more preferably from 2.2 to 3.0, still more preferably from 2.5 to 2.9.

<Method of Producing Polycarbonate-Polyorganosiloxane Copolymer>

The polycarbonate-polyorganosiloxane copolymer may be produced by using, for example, a diol monomer (a1) and a polyorganosiloxane (a2), and a diol monomer (a3) as required as raw material monomers.

<<Diol Monomer (a1)>>

The diol monomer (a1) has a structure represented by the following formula (1a). The diol monomer (a1) preferably includes a diol represented by the following formula (11a), and is more preferably formed of the diol represented by the following formula (11a).

[Chem. 26]

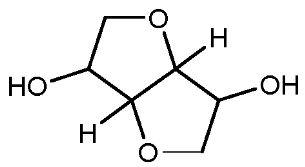

(1a)

[Chem. 27]

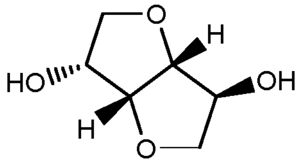

(11a)

<<Diol Monomer (a3)>>

When the polycarbonate-polyorganosiloxane copolymer contains the structural unit (A-3), the raw material monomers further include the diol monomer (a3).

The diol monomer (a3) is preferably at least one diol selected from structures represented by the formulae (3a) and (4a).

[Chem. 28]

$$HO-R^{11}-OH \qquad (3a)$$

$$HO-CH_2-R^{12}-CH_2-OH \qquad (4a)$$

In the formulae (3a) and (4a), $R^{11}$ and $R^{12}$ are as described above, and preferred examples thereof are also the same as those described above.

The diol monomer (a1) is not included in the diol monomer (a3).

<<Polyorganosiloxane (a2)>>

The polyorganosiloxane (a2) preferably contains a polyorganosiloxane structure represented by the following formula (21a).

[Chem. 29]

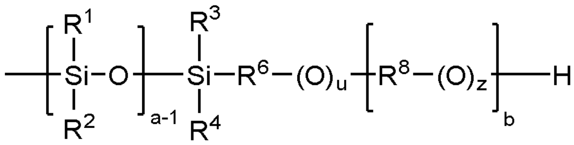

(21a)

In the formula (21a), $R^1$ to $R^8$, "a", "b", "u", and "z" are as described above, and preferred examples thereof are also the same as those described above. "z" that is present at the terminal represents 1, that is, hydrogen atoms at both the terminals are each bonded to an oxygen atom.

The polyorganosiloxane (a2) preferably contains a polyorganosiloxane represented by the following formula (22a).

[Chem. 30]

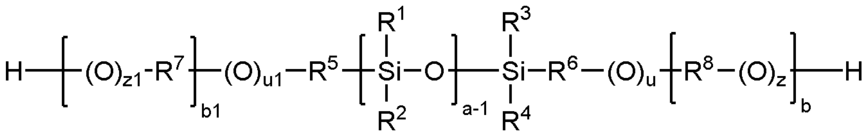

(22a)

In the formula (22a), $R^1$ to $R^8$, "a", "b", "u", u1, "z", and z1 are as described above, and preferred examples thereof are also the same as those described above. "z" and z1 that are present at both the terminals each represent 1, that is, hydrogen atoms at both the terminals are each bonded to an oxygen atom.

The polyorganosiloxane (a2) preferably includes at least one of polyorganosiloxanes represented by the following formulae (23a) to (26a).

[Chem. 31]

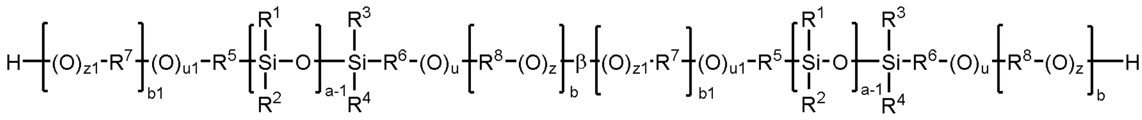

(23a)

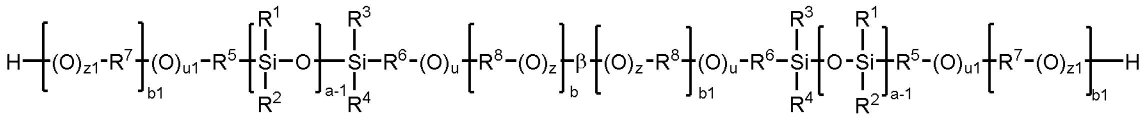

(24a)

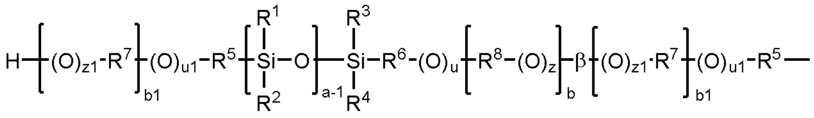

(25a)

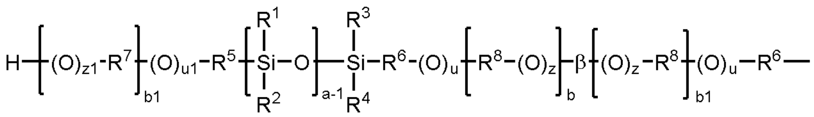

(26a)

In the formulae (23a) to (26a), $R^1$ to $R^8$, "a", "b", b1, "u", u1, "z", z1, and β are as described above, and preferred examples thereof are also the same as those described above. In the formulae (23a) to (26a), "z" and z1 that are present at the terminals each represent 1, that is, hydrogen atoms at the terminals are each bonded to an oxygen atom.

A method of producing the polyorganosiloxane (a2) is not particularly limited. According to, for example, a method described in JP 11-217390 A, the polyorganosiloxane may be obtained by: causing a cyclotrisiloxane and a disiloxane to react with each other in the presence of an acidic catalyst to synthesize an α,ω-dihydrogen organopentasiloxane; and then subjecting the α,ω-dihydrogen organopentasiloxane to an addition reaction with an oligomer or a polymer (e.g., a polyalkylene ether, a polyester, or a polycarbonate) having one terminal modified with an allyl group in the presence of a catalyst for a hydrosilylation reaction. In addition, according to a method described in JP 2662310 B2, the polyorganosiloxane may be obtained by: causing octamethylcyclotetrasiloxane and tetramethyldisiloxane to react with each other in the presence of sulfuric acid (acidic catalyst); and subjecting the resultant α,ω-dihydrogen organopolysiloxane to an addition reaction with the oligomer or the polymer having one terminal modified with an allyl group in the presence of the catalyst for a hydrosilylation reaction in the same manner as that described above. The α,ω-dihydrogen organopolysiloxane may be used after its average chain length has been appropriately adjusted by its polymerization conditions, or a commercially available α,ω-dihydrogen organopolysiloxane may be used. In addition, the oligomer having one terminal modified with an allyl group may be used after its average number of repeating units has been appropriately adjusted by its polymerization conditions, or a commercially available one-terminal allyl group-modified oligomer may be used. A one-terminal allyl group-modified polyethylene glycol out of the one-terminal allyl group-modified oligomers may be produced with reference to, for example, JP 5652691 B2. In addition, a commercially available allyl group-modified polyethylene glycol is, for example, UNIOX PKA-5001, UNIOX PKA-5002, UNIOX PKA-5003, UNIOX PKA-5004, or UNIOX PKA-5005 manufactured by NOF Corporation.

The polycarbonate-polyorganosiloxane copolymer may be produced by polymerizing a mixture of raw material monomers by an interfacial polymerization method or a melt polymerization method (transesterification method). When the polycarbonate-polyorganosiloxane copolymer is produced by the interfacial polymerization method, a method described in, for example, JP 2014-80462 A may be adopted. The polycarbonate-polyorganosiloxane copolymer may be produced by causing the polyorganosiloxane (a2), the diol monomer (a1), and a carbonic acid ester compound to be described later, which are raw material monomers, to react with each other by the melt polymerization method preferably in the presence of a basic catalyst. The diol monomer (a3) may be used as the raw material monomer as required. In addition, the polymerization reaction may be performed by further adding a terminal stopper.

The melt polymerization method does not require a solvent such as methylene chloride, which is required in the interfacial polymerization method, and hence the melt polymerization method is environmentally and economically advantageous. In addition, the melt polymerization method does not use phosgene having high toxicity, which is used in the interfacial polymerization method, and hence the melt polymerization method is advantageous in terms of production. Accordingly, the polycarbonate-polyorganosiloxane copolymer is preferably produced by the melt polymerization method.

(Carbonic Acid Ester Compound)

Examples of the carbonic acid ester compound may include a diaryl carbonate compound, a dialkyl carbonate compound, and an alkyl aryl carbonate compound.

Examples of the diaryl carbonate compound include a compound represented by the following formula (41) and a compound represented by the following formula (42):

[Chem. 32]

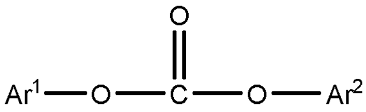

(41)

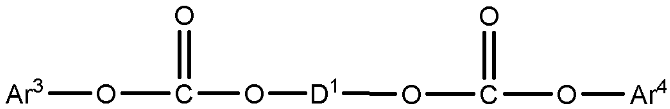

(42)

In the formulae (41) and (42), $Ar^1$ and $Ar^2$ each represent an aryl group, and may be identical to or different from each other. In the formula (42), $Ar^3$ and $Ar^4$ each represent an aryl group, and may be identical to or different from each other, and $D^1$ represents the divalent linear aliphatic hydrocarbon group having 2 to 40 carbon atoms or the divalent branched aliphatic hydrocarbon group having 3 to 40 carbon atoms, the divalent alicyclic hydrocarbon group having 3 to 40 carbon atoms, or the divalent aromatic hydrocarbon group having 6 to 20 carbon atoms.

Examples of the dialkyl carbonate compound include a compound represented by the following formula (43) and a compound represented by the following formula (44).

[Chem. 33]

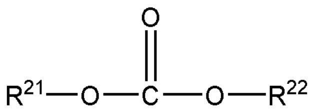

(43)

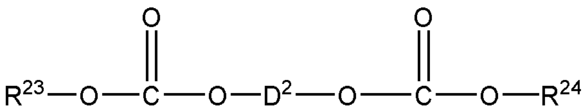

(44)

In the formulae (43) and (44), $R^{21}$ and $R^{22}$ each represent an alkyl group having 1 to 20 carbon atoms or a cycloalkyl group having 4 to 20 carbon atoms, and may be identical to or different from each other. In the formula (14), $R^{23}$ and $R^{24}$ each represent an alkyl group having 1 to 20 carbon atoms or a cycloalkyl group having 4 to 20 carbon atoms, and may be identical to or different from each other, and $D^2$ represents the divalent linear aliphatic hydrocarbon group having 2 to 40 carbon atoms or the divalent branched aliphatic hydrocarbon group having 3 to 40 carbon atoms, the divalent alicyclic hydrocarbon group having 3 to 40 carbon atoms, or the divalent aromatic hydrocarbon group having 6 to 20 carbon atoms.

Examples of the alkyl aryl carbonate compound include a compound represented by the following formula (45) and a compound represented by the following formula (46).

[Chem. 34]

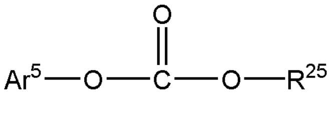

(45)

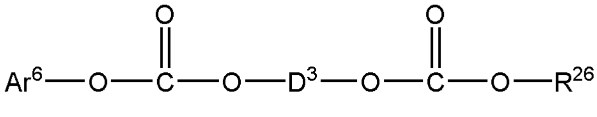

(46)

In the formulae (45) and (46), $Ar^5$ represents an aryl group, and $R^{25}$ represents an alkyl group having 1 to 20

carbon atoms or a cycloalkyl group having 4 to 20 carbon atoms. In the formula (46), $Ar^6$ represents an aryl group, $R^{26}$ represents an alkyl group having 1 to 20 carbon atoms or a cycloalkyl group having 4 to 20 carbon atoms, and $D^3$ represents the divalent linear aliphatic hydrocarbon group having 2 to 40 carbon atoms or the divalent branched aliphatic hydrocarbon group having 3 to 40 carbon atoms, the divalent alicyclic hydrocarbon group having 3 to 40 carbon atoms, or the divalent aromatic hydrocarbon group having 6 to 20 carbon atoms.

Examples of the diaryl carbonate compound include diphenyl carbonate, ditolyl carbonate, bis(chlorophenyl) carbonate, dinaphthyl carbonate, bis(diphenyl) carbonate, and bisphenol A bisphenyl carbonate.

Examples of the dialkyl carbonate compound include diethyl carbonate, dimethyl carbonate, dibutyl carbonate, dicyclohexyl carbonate, and bisphenol A bismethyl carbonate.

Examples of the alkyl aryl carbonate compound include methyl phenyl carbonate, ethyl phenyl carbonate, butyl phenyl carbonate, cyclohexyl phenyl carbonate, and bisphenol A methyl phenyl carbonate.

A preferred carbonic acid ester compound is diphenyl carbonate.

One or two or more kinds of carbonic acid ester compounds may be used in the production of the polycarbonate-polyorganosiloxane copolymer.

(Terminal Stopper)

In the production of the polycarbonate-polyorganosiloxane copolymer, a terminal stopper may be used as required. Any known terminal stopper in the production of a polycarbonate resin may be used as the terminal stopper. Specific examples thereof may include the following compounds: phenol, p-cresol, p-tert-butylphenol, p-tert-octylphenol, p-cumylphenol, p-nonylphenol, and p-tert-amylphenol. Those monohydric phenols may be used alone or in combination thereof.

(Branching Agent)

In the production of the polycarbonate-polyorganosiloxane copolymer, a branching agent may be used. Examples of the branching agent include phloroglucin, trimellitic acid, 1,1,1-tris(4-hydroxyphenyl)ethane, 1-[α-methyl-α-(4'-hydroxyphenyl)ethyl]-4-[α',α'-bis(4"-hydroxyphenyl)ethyl]benzene, α,α',α"-tris(4-hydroxyphenyl)-1,3,5-triisopropylbenzene, and isatinbis(o-cresol).

Specifically, the polycarbonate-polyorganosiloxane copolymer may be produced by the melt polymerization method in accordance with, for example, the following procedure.

A mixture of raw material monomers containing the diol monomer (a1), the polyorganosiloxane (a2), and the carbonic acid ester compound are subjected to a transesterification reaction. The mixture of raw material monomers may contain the diol monomer (a3) as required. The amount of the carbonic acid ester compound is preferably from 0.9 times to 1.2 times, more preferably from 0.95 times to 1.05 times as large as the total amount of the diol monomers (a1) and (a3) in terms of mol.

When the diol monomers (a1) and (a3) each have volatility higher than that of the carbonic acid ester compound under the polymerization condition, the ratio of the amount of the carbonic acid ester compound to the total amount of the diol monomers (a1) and (a3) is preferably 1 or less.

When the diol monomers (a1) and (a3) each have volatility lower than that of the carbonic acid ester compound under the polymerization condition, the ratio of the amount of the carbonic acid ester compound to the total amount of the diol monomers (a1) and (a3) is preferably 1 or more.

When the ratio of the amount of the carbonic acid ester compound to the total amount of the diol monomers (a1) and (a3) is adjusted within the above-mentioned ranges, the number-average molecular weight and weight-average molecular weight of the polycarbonate-polyorganosiloxane copolymer to be obtained can be increased.

At the time of the transesterification reaction, when the terminal stopper is used, the terminal stopper is preferably present in an amount within the range of from 0.05 mol% to 10 mol% with respect to the total amount of the diol monomer (a1), the polyorganosiloxane (a2), and the polyorganosiloxane (a3) as required from the viewpoint that the hydroxy group terminal of the polycarbonate-polyorganosiloxane copolymer to be obtained is sufficiently capped, and hence a polycarbonate resin excellent in heat resistance and water resistance is obtained. The terminal stopper is more preferably present in an amount of from 1 mol% to 6 mol% with respect to the total amount of the diol monomer (a1), the polyorganosiloxane (a2), and the polyorganosiloxane (a3) as required. The total amount of the terminal stopper may be added to a reaction system in advance, or the following may be adopted: part of the terminal stopper is added to the reaction system in advance, and the remainder thereof is added thereto along with the progress of the reaction.

The transesterification reaction is preferably performed in the presence of an antioxidant by simultaneously loading the antioxidant into a reactor together with the diol monomer (a1), the polyorganosiloxane (a2), and the carbonic acid ester compound.

When the transesterification reaction is performed, a reaction temperature is not particularly limited, and the

temperature may fall within, for example, the range of from 100°C to 330°C, and falls within preferably the range of from 150°C to 300°C, more preferably the range of from 170°C to 240°C. In addition, a method including gradually increasing the temperature from 150°C to 300°C in accordance with the progress of the reaction is preferred, and a method including gradually increasing the temperature from 170°C to 240°C is more preferred. When the temperature of the transesterification reaction is 100°C or more, a reaction rate sufficiently increases. Meanwhile, when the temperature is 330°C or less, the occurrence of a side reaction reduces and a problem such as the coloring of the polycarbonate-polyorganosiloxane copolymer to be produced hardly occurs.

The final temperature in the reactor is preferably 210°C or more, more preferably 225°C or more.

A reaction pressure is set depending on the vapor pressure of a monomer to be used or the reaction temperature. The pressure is not particularly limited as long as the pressure is set so that the reaction may be efficiently performed. For example, it is preferred that at the initial stage of the reaction, the pressure be set to an atmospheric pressure (normal pressure) or pressurized state ranging from $1.01\times10^5$ Pa to $5.07\times10^6$ Pa, and at the later stage of the reaction, the pressure be set to a decompressed state, and be set to from 1.33 Pa to $1.33\times10^4$ Pa in the end.

The reaction only needs to be performed until a target molecular weight is obtained, and a reaction time is, for example, from 0.2 hour to 10 hours.

The transesterification reaction, which is performed, for example, in the absence of an inert solvent, may be performed in the presence of 1 part by mass to 150 parts by mass of the inert solvent with respect to 100 parts by mass of the polycarbonate resin to be obtained as required. Examples of the inert solvent include: aromatic compounds, such as diphenyl ether, halogenated diphenyl ether, benzophenone, polyphenyl ether, dichlorobenzene, and methylnaphthalene; and cycloalkanes, such as tricyclo[5.2.1.$0^{2,6}$]decane, cyclooctane, and cyclodecane.

The reaction may be performed under an inert gas atmosphere as required, and examples of the inert gas include various gases including: gases, such as argon, carbon dioxide, dinitrogen monoxide, and nitrogen; alkanes, such as chlorofluorohydrocarbons, ethane, and propane; and alkenes, such as ethylene and propylene.

In the melt polymerization method, the basic catalyst is preferably used as a catalyst. The basic catalyst may be, for example, at least one kind selected from the group consisting of: a metal catalyst, such as an alkali metal compound or an alkaline earth metal compound; a nitrogen-containing compound; an organic catalyst such as a quaternary phosphonium salt containing an aryl group; and a metal compound. Those compounds may be used alone or in combination thereof.

At least one kind selected from the group consisting of: an organic acid salt, inorganic salt, oxide, hydroxide, hydride, or alkoxide of an alkali metal or an alkaline earth metal; a quaternary ammonium hydroxide; and a quaternary phosphonium salt containing an aryl group is preferably used as the basic catalyst, and a hydroxide of an alkali metal is more preferably used. The basic catalysts may be used alone or in combination thereof.

Examples of the alkali metal compound include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium benzoate, potassium benzoate, cesium benzoate, lithium benzoate, disodium hydrogen phosphate, dipotassium hydrogen phosphate, dilithium hydrogen phosphate, disodium phenyl phosphate, disodium salt, dipotassium salt, dicesium salt, or dilithium salt of bisphenol A, and sodium salt, potassium salt, cesium salt, or lithium salt of phenol.

Examples of the alkaline earth metal compound include magnesium hydroxide, calcium hydroxide, strontium hydroxide, barium hydroxide, magnesium carbonate, calcium carbonate, strontium carbonate, barium carbonate, magnesium diacetate, calcium diacetate, strontium diacetate, and barium diacetate.

Examples of the nitrogen-containing compound include: quaternary ammonium hydroxides having alkyl and aryl groups, such as tetramethylammonium hydroxide, tetraethylammonium hydroxide, tetrapropylammonium hydroxide, tetrabutylammonium hydroxide, and trimethylbenzylammonium hydroxide; tertiary amines, such as triethylamine, dimethylbenzylamine, and triphenylamine; imidazoles, such as 2-methylimidazole, 2-phenylimidazole, and benzimidazole; and bases or basic salts, such as ammonia, tetramethylammonium borohydride, tetrabutylammonium borohydride, tetrabutylammonium tetraphenylborate, and tetraphenylammonium tetraphenylborate.

Examples of the metal compound include a zinc-aluminum compound, a germanium compound, an organotin compound, an antimony compound, a manganese compound, a titanium compound, and a zirconium compound.

Specific examples of the quaternary phosphonium salt containing an aryl group include: tetra(aryl or alkyl) phosphonium hydroxides, such as tetraphenylphosphonium hydroxide, tetranaphthylphosphonium hydroxide, tetra(chlorophenyl)phosphonium hydroxide, tetra(biphenyl)phosphonium hydroxide, tetratolylphosphonium hydroxide, tetramethylphosphonium hydroxide, tetraethylphosphonium hydroxide, and tetrabutylphosphonium hydroxide; and tetramethylphosphonium tetraphenylborate, tetraphenylphosphonium bromide, tetraphenylphosphonium phenolate, tetraphenylphosphonium tetraphenylborate, methyltriphenylphosphonium tetraphenylborate, benzyltriphenylphosphonium tetraphenylborate, biphenyltriphenylphosphonium tetraphenylborate, tetratolylphosphonium tetraphenylborate, tetraphenylphosphonium phenolate, tetra(p-t-butylphenyl)phosphonium diphenylphosphate, triphenylbutylphosphonium phenolate, and triphenylbutylphosphonium tetraphenylborate.

The quaternary phosphonium salt containing an aryl group is preferably combined with a nitrogen-containing organic basic compound, and for example, a combination of tetramethylammonium hydroxide and tetraphenylphosphonium tetraphenylborate is preferred.

The usage amount of the basic catalyst may be selected from the range of preferably from $1\times10^{-9}$ mol to $1\times10^{-2}$ mol, more preferably from $1\times10^{-8}$ mol to $1\times10^{-4}$ mol, still more preferably from $1\times10^{-7}$ mol to $1\times10^{-5}$ mol with respect to 1 mol of the diol monomer (a1) or 1 mol in total of the diol monomers (a1) and (a3).

A catalyst deactivator may be added at the later stage of the reaction. A known catalyst deactivator is effectively used as the catalyst deactivator to be used. Examples of the catalyst deactivator include a sulfonic acid ester, a sulfonic acid ammonium salt, and a sulfonic acid phosphonium salt.

When at least one kind of polymerization catalyst selected from alkali metal compounds and alkaline earth metal compounds is used, regarding the usage amount of the catalyst deactivator, the catalyst deactivator may be used at a ratio of preferably from 0.5 mol to 50 mol, more preferably from 1.0 mol to 30 mol, still more preferably from 5.0 mol to 15 mol per 1 mol of the catalyst.

The antioxidant is preferably mixed after the catalyst deactivator has been added to terminate the polymerization reaction.

The reaction in the melt polymerization method may be performed by any one of a continuous system and a batch system. A reactor to be used in melt polymerization may be any one of: a vertical reactor equipped with, for example, an anchor-type stirring blade, a max blend stirring blade, or a helical ribbon-type stirring blade; and a horizontal reactor equipped with, for example, a paddle blade, a lattice blade, or a spectacle blade. Further, the reactor may be of an extruder type equipped with a screw. In the case of the continuous system, an appropriate combination of such reactors is preferably used.

The Charpy impact strength of a molded piece obtained by molding the polycarbonate-polyorganosiloxane copolymer according to the present invention to provide a strip-shaped molded piece having a length of 80 mm, a width of 10 mm, and a thickness of 3 mm, and making a notch (r=0.25 mm$\pm$0.05 mm) in the strip-shaped molded piece by a post-process is 15 kJ/$m^2$ or more, preferably 18 kJ/$m^2$ or more, more preferably 30 kJ/$m^2$ or more, still more preferably 40 kJ/$m^2$ or more from the viewpoint of improving the impact resistance of the molded body to be obtained. From the viewpoint of further improving the impact resistance of the molded body to be obtained, the Charpy impact strength is preferably as high as possible, and hence the upper limit value is not particularly limited. However, from the viewpoint of improving tensile characteristics, the Charpy impact strength is preferably 110 kJ/$m^2$ or less, more preferably 95 kJ/$m^2$ or less, still more preferably 85 kJ/$m^2$ or less.

The Charpy impact strength of the polycarbonate-polyorganosiloxane copolymer may be increased by increasing the ratio of the polyorganosiloxane block. When the ratio of the polyorganosiloxane unit (A-2) is high, the Charpy impact strength of the polycarbonate-polyorganosiloxane copolymer of the present invention is increased.

A method of adjusting the Charpy impact strength of the molded body of the polycarbonate-polyorganosiloxane copolymer within the above-mentioned ranges is not particularly limited, and may be, for example, a method using the polycarbonate-polyorganosiloxane copolymer (S-1), (S-2), (S-3), (S-4), (S-5), or (S-6).

The Charpy impact strength may be measured under the condition of a measurement temperature of 23°C in conformity with ISO-179-1:2010, and may be specifically measured by a method described in Examples to be described later.

Molding conditions for the above-mentioned molded piece are a cylinder temperature of from 200°C to 270°C, a die temperature of 80°C, and a cycle time of 60 seconds. The cylinder temperature may be appropriately set in accordance with the glass transition temperature of the polycarbonate-polyorganosiloxane copolymer to be used. Specifically, the molded piece may be obtained by the method described in Examples to be described later.

From the viewpoint of improving the scratch resistance of the molded body to be obtained, the scratch hardness (pencil method) of the molded body of the polycarbonate-polyorganosiloxane copolymer according to the present invention is HB or more, preferably F or more. From the viewpoint of further improving the scratch resistance of the molded body to be obtained, the scratch hardness is preferably as high as possible, and hence the upper limit value is not particularly limited.

The scratch hardness of the polycarbonate-polyorganosiloxane copolymer may be increased by increasing the ratio of a structure having a rigid scaffold. When the ratio of the structural unit (A-1) represented by the formula (1) is high, the scratch hardness of the polycarbonate-polyorganosiloxane copolymer of the present invention is increased.

A method of adjusting the scratch hardness of the molded body of the polycarbonate-polyorganosiloxane copolymer within the above-mentioned ranges is not particularly limited, and may be, for example, a method using the polycarbonate-polyorganosiloxane copolymer (S-1), (S-2), (S-3), (S-4), (S-5), or (S-6).

The scratch hardness may be measured in conformity with JIS K 5600-5-4:1999, and may be specifically measured by a method described in Examples to be described later.

From the viewpoint of obtaining a molded body excellent in transparency, the total light transmittance of a flat

plate having a thickness of 1.0 mm obtained by molding the polycarbonate-polyorganosiloxane copolymer according to the present invention with respect to visible light is preferably 60% or more, more preferably 70% or more, still more preferably 80% or more, still more preferably 85% or more, even still more preferably 90% or more.

The total light transmittance may be measured in conformity with ISO 13468-1:1996.

From the viewpoint of fluidity, the melt flow rate (MFR) of the polycarbonate-polyorganosiloxane copolymer according to the present invention is preferably 1.0 g/10 min or more, more preferably 2.5 g/10 min or more, still more preferably 3.0 g/10 min or more, and from the viewpoint of improving scratch resistance, the MFR is preferably 25.0 g/10 min or less, more preferably 20.0 g/10 min or less, still more preferably 15.0 g/10 min or less. As the MFR becomes higher, fluidity becomes more satisfactory. The MFR may be measured by a measurement method specified in ISO 1133:1997, and may be specifically measured by a method described in Examples to be described later.

Although not clear, the reason why the scratch resistance is improved by adjusting the melt flow rate within the above-mentioned ranges is assumed as described below.

When the melt flow rate falls within the above-mentioned ranges, the resin pressure at the time of molding is increased to apply a high pressure to the surface of the molded article. Accordingly, it is conceivable that the polymer on the surface of the molded article becomes dense, and as a result, the surface hardness is increased.

From the viewpoint of further improving the mechanical strength and scratch resistance of the molded body to be obtained, the tensile modulus of elasticity measured in conformity with ISO 527-1,2:2012 through use of a dumbbell-shaped tensile test piece Type A1 of JIS K 7139 obtained by molding the polycarbonate-based resin composition according to the present invention is preferably 2,400 MPa or more, more preferably 2,500 MPa or more, still more preferably 2,600 MPa or more, even still more preferably 2,700 MPa or more. From the viewpoint of further improving the scratch resistance of the molded body to be obtained, the tensile modulus of elasticity is preferably as high as possible, and hence the upper limit value is not particularly limited. However, from the viewpoint of improving impact resistance, the tensile modulus of elasticity is preferably 10,000 MPa or less, more preferably 5,000 MPa or less, still more preferably 3,500 MPa or less.

Although not clear, the reason why the scratch resistance is improved by adjusting the tensile modulus of elasticity within the above-mentioned ranges is assumed as described below.

When the tensile modulus of elasticity falls within the above-mentioned ranges, it is conceivable that the rigidity of the resin surface thereof is increased similarly, deformation due to a pressure or displacement applied to the resin surface from the outside is reduced, and hence the scratch resistance is improved.

The tensile modulus of elasticity of the polycarbonate-polyorganosiloxane copolymer may be increased by increasing the ratio of a structure having a rigid scaffold. When the ratio of the structural unit (A-1) represented by the formula (1) is high, the tensile modulus of elasticity of the polycarbonate-polyorganosiloxane copolymer of the present invention is increased.

The tensile modulus of elasticity may be measured under the conditions of a tensile speed of 1 mm/min and a measurement temperature of 23°C, and may be specifically measured by a method described in Examples to be described later.

Molding conditions for the above-mentioned molded piece are a cylinder temperature of from 200°C to 270°C, a die temperature of 80°C, and a cycle time of 60 seconds. The cylinder temperature may be appropriately set in accordance with the glass transition temperature of the polycarbonate-polyorganosiloxane copolymer to be used. Specifically, the molded piece may be obtained by the method to be described in Examples to be described later.

From the viewpoint of further improving the mechanical strength and scratch resistance of the molded body to be obtained, the tensile strength (yield) measured in conformity with ISO 527-1,2:2012 through use of a dumbbell-shaped tensile test piece Type A1 of JIS K 7139 obtained by molding the polycarbonate-based resin composition according to the present invention is preferably 45 MPa or more, more preferably 50 MPa or more, still more preferably 55 MPa or more. From the viewpoint of further improving the mechanical strength and scratch resistance of the molded body to be obtained, the tensile strength (yield) is preferably as high as possible, and hence the upper limit value is not particularly limited. However, from the viewpoint of improving impact resistance, the tensile strength (yield) is preferably 200 MPa or less, more preferably 150 MPa or less, still more preferably 100 MPa or less, even still more preferably 80 MPa or less.

Although not clear, the reason why the scratch resistance is improved by adjusting the tensile strength (yield) within the above-mentioned ranges is assumed as described below.

When the tensile strength (yield) falls within the above-mentioned ranges, it is conceivable that the resin surface is deformed at the time of application of a pressure or displacement to the resin surface, and hence a high pressure or displacement is required. Accordingly, when the tensile strength (yield) falls within the above-mentioned ranges, it is conceivable that the scratch resistance is improved.

The tensile strength (yield) may be measured under the conditions of a tensile speed of 50 mm/min and a measurement temperature of 23°C, and may be specifically measured by a method described in Examples to be described later.

Molding conditions for the above-mentioned molded piece are a cylinder temperature of from 200°C to 270°C, a

die temperature of 80°C, and a cycle time of 60 seconds. The cylinder temperature may be appropriately set in accordance with the glass transition temperature of the polycarbonate-polyorganosiloxane copolymer to be used.

From the viewpoint of further improving the scratch resistance of the molded body to be obtained, the glass transition temperature of the polycarbonate-polyorganosiloxane copolymer according to the present invention is preferably 115°C or more, more preferably 120°C or more, still more preferably 130°C or more, even still more preferably 140°C or more. The glass transition temperature is preferably as high as possible, and hence the upper limit value is not particularly limited. However, from the viewpoint of improving processability, the glass transition temperature is preferably 200°C or less, more preferably 180°C or less, still more preferably 160°C or less.

Although not clear, the reason why the scratch resistance is improved by adjusting the glass transition temperature within the above-mentioned ranges is assumed as described below.

When the glass transition temperature falls within the above-mentioned ranges, it is conceivable that the molecular mobility of the resin surface at an usage temperature or a test temperature is low, or the intermolecular interaction is high. In such a state, the flexibility of the resin surface is low, and the rigidity tends to be increased. Accordingly, it is conceivable that the deformation due to a pressure or displacement applied to the resin surface is suppressed, and the scratch resistance is improved.

The glass transition temperature of the polycarbonate-polyorganosiloxane copolymer may be increased by increasing the ratio of a structure having a rigid scaffold. When the ratio of the structural unit (A-1) represented by the formula (1) is high, the glass transition temperature of the polycarbonate-polyorganosiloxane copolymer of the present invention is increased.

The glass transition temperature may be specifically measured by a method described in Examples to be described later.

2. Polycarbonate-based Resin Composition

The polycarbonate-based resin composition of the present invention (hereinafter sometimes referred to as "resin composition") may be formed only of the polycarbonate-polyorganosiloxane copolymer, or may include a polycarbonate-based resin (P) except the polycarbonate-polyorganosiloxane copolymer (hereinafter sometimes referred to as "polycarbonate-based resin (P)").

From the viewpoint of improving the impact resistance, tensile characteristics, and chemical resistance of the molded body, the content of the polycarbonate-polyorganosiloxane copolymer in the polycarbonate-based resin composition is preferably 50 mass% or more, more preferably 60 mass% or more, still more preferably 70 mass% or more, still more preferably 80 mass% or more, still more preferably 90 mass% or more, still more preferably 95 mass% or more, still more preferably 98 mass% or more, even still more preferably 99 mass% or more. The upper limit of the content of the polycarbonate-polyorganosiloxane copolymer in the polycarbonate-based resin composition is not particularly limited, but the content is 100 mass% or less from the viewpoint of obtaining a resin composition having desired properties.

From the viewpoint of improving the impact resistance of the molded body, the content of the structural unit represented by the formula (XX) in the polycarbonate-based resin composition is preferably 2 mass% or more, more preferably 3 mass% or more, still more preferably 4 mass% or more, and is preferably 25 mass% or less, more preferably 20 mass% or less, still more preferably 15 mass% or less.

The number-average molecular weight (Mn) of the polycarbonate-based resin composition is preferably 5,000 or more, more preferably 6,000 or more, still more preferably 7,000 or more, even still more preferably 8,000 or more, and is preferably 30,000 or less, more preferably 25,000 or less, still more preferably 20,000 or less, even still more preferably 15,000 or less.

The number-average molecular weight (Mn) of the polycarbonate-based resin composition is the weighted average of the number-average molecular weights (Mn) of copolymers or resins in the resin composition, and each of the number-average molecular weights (Mn) may be measured by the same method as that for the number-average molecular weight (Mn) of the polycarbonate-polyorganosiloxane copolymer.

The number-average molecular weight (Mw) of the polycarbonate-based resin composition is preferably 20,000 or more, more preferably 25,000 or more, still more preferably 30,000 or more, even still more preferably 33,000 or more, and is preferably 60,000 or less, more preferably 50,000 or less, still more preferably 45,000 or less, even still more preferably 43,000 or less.

<Polycarbonate-based Resin (P)>

Various known polycarbonate-based resins may each be used as the polycarbonate-based resin (P) without any particular limitation.

The polycarbonate-based resin (P) is preferably a polycarbonate-based resin that is free of the polyorganosiloxane unit (A-2) containing the structural unit represented by the formula (2), and contains the polycarbonate block (A-1)

containing the structural unit represented by the formula (1) and/or at least one structural unit (A-3) selected from the structures represented by the formulae (3) and (4).

Examples of the structural unit (A-1) and the structural unit (A-3) in the polycarbonate-based resin (P) include the same examples as those of the structural unit (A-1) and the structural unit (A-3) in the polycarbonate-polyorganosiloxane copolymer. Preferred forms are also the same.

The polycarbonate-based resin (P) preferably contains the structural unit (A-1) and the structural unit (A-3) as main components. The polycarbonate-based resin (P) contains the structural unit (A-1) and the structural unit (A-3) in a total amount of the structural unit (A-1) and the structural unit (A-3) of preferably 50 mass% or more, more preferably 80 mass% or more, still more preferably 90 mass% or more, even still more preferably 98 mass% or more with respect to all the structures in the polycarbonate-based resin (P).

The number-average molecular weight (Mn) of the polycarbonate-based resin (P) is preferably 5,000 or more, more preferably 6,000 or more, still more preferably 7,000 or more, even still more preferably 8,000 or more, and is preferably 30,000 or less, more preferably 25,000 or less, still more preferably 20,000 or less, even still more preferably 15,000 or less.

<Antioxidant>

The polycarbonate-based resin composition according to the present invention may appropriately contain an antioxidant as long as the object of the present invention is not impaired.

The antioxidant can suppress the decomposition of a resin at the time of the production or molding of the polycarbonate-based resin composition. A known antioxidant may be used as the antioxidant, and at least one kind selected from a phosphorus-based antioxidant and a phenol-based antioxidant may be preferably used.

From the viewpoint of suppressing the oxidative deterioration at the time of molding of the molded body including the polycarbonate-based resin composition at high temperature, the phosphorus-based antioxidant is preferably a phosphorus-based antioxidant having an aryl group, more preferably a compound represented by the following formula (51).

[Chem. 35]

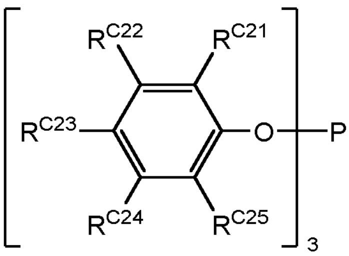

(51)

In the formula (2), $R^{C21}$ to $R^{C25}$ each represent a hydrogen atom, an alkyl group having 1 or more and 12 or less carbon atoms, or an aryl group having 6 or more and 14 or less carbon atoms, and may be identical to or different from each other. In terms of effects of the antioxidant, not all of $R^{C21}$ to $R^{C25}$ represent hydrogen atoms, and at least two of $R^{C21}$ to $R^{C25}$ each represent an alkyl group having 1 or more and 12 or less carbon atoms, or an aryl group having 6 or more and 14 or less carbon atoms. The compound in which any two of $R^{C21}$ to $R^{C25}$ each represent an alkyl group having 1 or more and 12 or less alkyl group, or an aryl group having 6 or more and 14 or less carbon atoms, and the rest represents a hydrogen atom is preferred, and among the compounds in each of which any two of $R^{C21}$ to $R^{C25}$ each represent an alkyl group having 1 or more and 12 or less alkyl group, or an aryl group having 6 or more and 14 or less carbon atoms, and the rest represents a hydrogen atom, the compound in which at least one of $R^{C21}$ or $R^{C25}$ represents an alkyl group having 1 to 12 carbon atoms, or an aryl group having 6 or more and 14 or less carbon atoms is more preferred.

Examples of the alkyl group having 1 to 12 carbon atoms include a methyl group, an ethyl group, a n-propyl group, an isopropyl group, various butyl groups, various pentyl groups, various hexyl groups, various octyl groups, various decyl groups, and various dodecyl groups. Among them, from the viewpoint of imparting long-term moist and heat resistance and long-term heat resistance, one or more kinds selected from the group consisting of: a methyl group; an ethyl group; a n-propyl group; an isopropyl group; various butyl groups; various pentyl groups; various hexyl groups; and various octyl groups are preferred, one or more kinds selected from the group consisting of: a methyl group; an ethyl group; an isopropyl group; and a tert-butyl group are more preferred, and a tert-butyl group is still more preferred.

Examples of the aryl group having 6 to 14 carbon atoms include a phenyl group, a tolyl group, and a xylyl group. In particular, from the viewpoints of suppressing heat decomposition and imparting excellent improving effects on long-term moist and heat resistance and long-term heat resistance, $R^{C21}$ to $R^{C25}$ each more preferably represent a hydrogen atom or

an alkyl group having 1 to 12 carbon atoms, each still more preferably represent a hydrogen atom, a methyl group, an ethyl group, an isopropyl group, or a tert-butyl group, and each even still more preferably represent a hydrogen atom or a tert-butyl group.

The phosphorus-based antioxidant is particularly preferably the compound in which $R^{C21}$ and $R^{C23}$ each represent a tert-butyl group, and $R^{C22}$, $R^{C24}$, and $R^{C25}$ each represent a hydrogen atom, that is, tris(2,4-di-tert-butylphenyl) phosphite.

Examples of the phosphorus-based antioxidant include triphenyl phosphite, diphenyl nonyl phosphite, diphenyl (2-ethylhexyl) phosphite, tris(2,4-di-tert-butylphenyl) phosphite, tris(nonylphenyl) phosphite, diphenyl isooctyl phosphite, 2,2'-methylenebis(4,6-di-tert-butylphenyl)octyl phosphite, diphenyl isodecyl phosphite, diphenyl mono(tridecyl) phosphite, phenyl diisodecyl phosphite, phenyl di(tridecyl) phosphite, tris(2-ethylhexyl) phosphite, tris(isodecyl) phosphite, tris(tridecyl) phosphite, dibutyl hydrogen phosphite, trilauryl trithiophosphite, tetrakis(2,4-di-tert-butylphenyl)-4,4'-biphenylene diphosphonite, 4,4'-isopropylidenediphenol dodecyl phosphite, 4,4'-isopropylidenediphenol tridecyl phosphite, 4,4'-isopropylidenediphenol tetradecyl phosphite, 4,4'-isopropylidenediphenol pentadecyl phosphite, 4,4'-butylidenebis(3-methyl-6-tert-butylphenyl)ditridecyl phosphite, bis(2,6-di-tert-butyl-4-methylphenyl)pentaerythritol diphosphite, bis(nonylphenyl)pentaerythritol diphosphite, distearyl-pentaerythritol diphosphite, phenyl bisphenol A pentaerythritol diphosphite, tetraphenyl dipropylene glycol diphosphite, 1,1,3-tris(2-methyl-4-di-tridecylphosphite-5-tert-butylphenyl) butane, 3,4,5,6-dibenzo-1,2-oxaphosphane, triphenylphosphine, diphenylbutylphosphine, diphenyloctadecylphosphine, tris(p-tolyl)phosphine, tris(p-nonylphenyl)phosphine, tris(naphthyl)phosphine, diphenyl(hydroxymethyl)phosphine, diphenyl(acetoxymethyl)phosphine, diphenyl (β-ethylcarboxyethyl)phosphine, tris(p-chlorophenyl)phosphine, tris(p-fluorophenyl)phosphine, benzyldiphenylphosphine, diphenyl(β-cyanoethyl)phosphine, diphenyl(p-hydroxyphenyl)phosphine, diphenyl(1,4-dihydroxyphenyl)-2-phosphine, phenylnaphthylbenzylphosphine, and bis(2,4-dicumylphenyl)pentaerythritol diphosphite.

Specific examples of the phosphorus-based antioxidant may include commercial products, such as "Irgafos 168" (manufactured by BASF Japan, trademark), "Irgafos 12" (manufactured by BASF Japan, trademark), "Irgafos 38" (manufactured by BASF Japan, trademark), "ADK STAB 329K" (manufactured by ADEKA Corporation, trademark), "ADK STAB PEP-36" (manufactured by ADEKA Corporation, trademark), "ADK STAB PEP-8" (manufactured by ADEKA Corporation, trademark), "Sandostab P-EPQ" (manufactured by Clariant AG, trademark), "Weston 618" (manufactured by GE, trademark), "Weston 619G" (manufactured by GE, trademark), "Weston 624" (manufactured by GE, trademark), and "Doverphos S-9228PC" (manufactured by Dover Chemical Corporation, trademark).

The phenol-based antioxidant is preferably a hindered phenol. Specific examples of the phenol-based antioxidant include triethylene glycol bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylenebis(3,5-di-tert-butyl-4-hydroxy-hydrocynnamide), 3,5-di-tert-butyl-4-hydroxybenzyl phosphonate diethyl ester, tris(3,5-di-tert-butyl-4-hydroxybenzyl)isocyanurate, and 3,9-bis[1,1-dimethyl-2-[β-(3-tert-butyl-4-hydroxy-5-methylphenyl)propionyloxy]ethyl]-2,4,8,10-tetraoxaspiro(5.5)undecane.

Specific examples of the phenol-based antioxidant may include commercial products, such as "Irganox 1010" (manufactured by BASF Japan, trademark), "Irganox 1076" (manufactured by BASF Japan, trademark), "Irganox 1330" (manufactured by BASF Japan, trademark), "Irganox 3114" (manufactured by BASF Japan, trademark), "Irganox 3125" (manufactured by BASF Japan, trademark), "BHT" (manufactured by Takeda Pharmaceutical Company Limited., trademark), "CYANOX 1790" (manufactured by SOLVAY S.A., trademark), and "SUMILIZER GA-80" (manufactured by Sumitomo Chemical Company, Limited, trademark).

The antioxidants may be used alone or in combination thereof. The content of the antioxidant in the polycarbonate-based resin composition according to the present invention is preferably 0.001 part by mass or more, more preferably 0.01 part by mass or more, still more preferably 0.04 part by mass or more, even still more preferably 0.08 part by mass or more, and is preferably 1.0 part by mass or less, more preferably 0.50 part by mass or less, still more preferably 0.25 part by mass or less, even still more preferably 0.15 part by mass or less with respect to 100 parts by mass of the polycarbonate-based resin composition. When a plurality of kinds of the antioxidants are used, the total amount thereof falls within the above-mentioned ranges.

## 3. Molded Body

The molded body of the present invention includes the polycarbonate-based resin composition. The molded body may be produced through use of a melt-kneaded product of the polycarbonate-based resin composition or a pellet thereof obtained through melting and kneading as a raw material by any one of, for example, an injection molding method, an injection compression molding method, an extrusion molding method, a blow molding method, a press molding method, a vacuum molding method, and an expansion molding method. In particular, the molded body is preferably produced through use of the resultant pellet by the injection molding method or the injection compression molding method.

The thickness of the molded body may be arbitrarily set in accordance with its applications. In particular, when the transparency of the molded body is required, the thickness is preferably from 0.2 mm to 4.0 mm, more preferably from 0.3 mm to 3.0 mm, still more preferably from 0.3 mm to 2.0 mm. When the thickness of the molded body is 0.2 mm or more, its warping does not occur and good mechanical strength is obtained. In addition, when the thickness of the molded body is 4.0 mm or less, high transparency is obtained.

A coating film formed of a hard coating film, an antifogging film, an antistatic film, or an antireflection film may be formed on the molded body as required, and a composite coating film formed of two or more kinds thereof may be formed.

Among them, a coating film formed of a hard coating film is preferably formed because the film has good weatherability and can prevent the wear of the surface of the molded body with time. A material for the hard coating film is not particularly limited, and a known material, such as an acrylate-based hard coating agent, a silicone-based hard coating agent, or an inorganic hard coating agent, may be used.

## Examples

The present invention is described in more detail below by way of Examples, but the present invention is not limited to these Examples. In Examples, a polydimethylsiloxane is sometimes abbreviated as "PDMS".

### 1. Production of Terminal-modified Polyorganosiloxane

Production Example 1: Production of PDMS-1

Under a nitrogen atmosphere, to an α,ω-dihydrogen organopolysiloxane (100 g) having an average chain length of polyorganosiloxane structures of 25, which was represented by the following formula:

[Chem. 36]

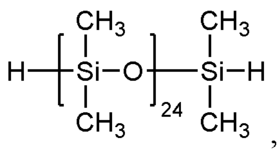

a one-terminal allyl group-modified polyethylene glycol having an average number of oxyethylene repeating units of 15, which was represented by the following formula:

[Chem. 37]

$$H_2C{=}CH-CH_2-O-(CH_2CHO)_{15}-H$$

in a molar amount (78.1 g) twice as large as that of the polyorganosiloxane was added. To the mixture, 455 g (2.5 parts, with respect to the total mass of the α,ω-dihydrogen organopolysiloxane and the one-terminal allyl group-modified polyethylene glycol) of isopropyl alcohol was added, and the temperature of the mixture was then controlled to 80°C, followed by stirring for 10 minutes or more. Next, a toluene solution of a vinylsiloxane complex of platinum (platinum(0)-1,3-divinyl-1,1,3,3-tetramethyldisiloxane complex) was added as a hydrosilylation catalyst in such an amount that the mass of a platinum atom became 5 ppm by mass with respect to a siloxane in the above-mentioned polyorganosiloxane, followed by stirring for 10 hours. Isopropyl alcohol, toluene, and the platinum catalyst were removed from the resultant mixture. Thus, a polyether-modified polyorganosiloxane PDMS-1 was obtained. The structure of the obtained PDMS-1 is shown below.

[Chem. 38]

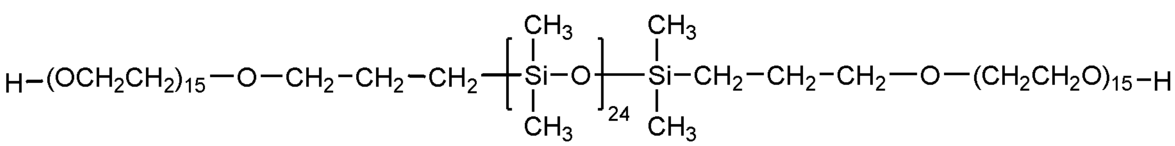

<Methods of Measuring Average Chain Length of Polyorganosiloxane and Average Number of Oxyethylene Repeating Units of Polyethylene Glycol>

The average chain length of a polydimethylsiloxane was calculated by NMR measurement from the integrated value ratio of a methyl group of the polydimethylsiloxane. The average number of oxyethylene repeating units of a polyethylene glycol was calculated by NMR measurement from the integrated value ratio of a dimethylene group of the polyethylene glycol.

$^1$H-NMR measurement conditions
NMR apparatus: ECA-500 manufactured by JEOL Resonance Co., Ltd.
Probe: 50TH5AT/FG2
Observed range: -5 ppm to 15 ppm
Observation center: 5 ppm
Pulse repetition time: 9 sec
Pulse width: 45°
NMR sample tube: 5 φ
Sample amount: 30 mg to 40 mg
Solvent: deuterated chloroform
Measurement temperature: 23°C
Number of scans: 256 times
Correction of chemical shift: the peak of a proton ($^1$H) derived from chloroform in deuterated chloroform was set to 7.26 ppm as a reference.

2. Evaluation of Polycarbonate-Polyorganosiloxane Copolymer

A pellet containing a polycarbonate-polyorganosiloxane copolymer produced in each of Examples and Comparative Examples described below, and a pellet containing a polycarbonate produced in each of Comparative Examples were subjected to the following evaluations.

(1) $^1$H-NMR Measurement

On the basis of the integrated value of a peak derived from the following specific structure obtained by $^1$H-NMR measurement under the following measurement conditions, the contents of the structural unit represented by the formula (XX), the structural unit (A-1), the structural unit (A-31), the structural unit (A-32), and the structural unit (A-33), the molar fraction of each of the structural units (A-1), (A-31), (A-32), and (A-33) with respect to the total amount of the structural unit represented by the formula (X) in a PC-POS copolymer, the content of the terminal structure represented by $-OR^T$, an average of "a"s in the polycarbonate-polyorganosiloxane copolymer, and an average b2 when "b" s and b1s in the polycarbonate-polyorganosiloxane copolymer were combined were calculated.

(Measurement Conditions)

NMR apparatus: ECA-500 manufactured by JEOL Resonance Co., Ltd.
Probe: corresponding to TH5 5φNMR sample tube
Observed range: -5 ppm to 15 ppm
Observation center: 5 ppm
Pulse repetition time: 9 sec
Pulse width: 45°
Number of scans: 256 times
NMR sample tube: 5 φ
Sample amount: 30 mg to 40 mg
Solvent: deuterated chloroform
Measurement temperature: room temperature
Correction of chemical shift: a peak derived from a proton of chloroform in deuterated chloroform was set to 7.26 ppm as a reference.

A: a peak integrated value at a δ of from 7.30 to 7.43

(A peak derived from a proton of chloroform in deuterated chloroform appears within this range, but does not affect the assignment of a structure because of a sufficient sample concentration.)
B: a peak integrated value at a δ of from -0.20 to 0.30
C: a peak integrated value at a δ of from 3.30 to 3.75
D: a peak integrated value at a δ of from 4.75 to 5.30
E: a peak integrated value at a δ of from 1.30 to 1.50
(A peak derived from a proton of water in deuterated chloroform appears within this range, but does not affect the assignment of a structure because of a sufficient sample concentration.)
F: a peak integrated value at a δ of from 0.75 to 1.98
G: a peak integrated value at a δ of from 1.98 to 2.70
H: a peak integrated value at a δ of from 0.40 to 0.55

$$aa=A/2$$

$$bb=B/6$$

$$cc=C/4$$

$$dd=D/3$$

$$ee=(F-G/6\times8-H)/10$$

$$kk=E/4$$

$$ll=G/6$$

$$oo=H/2$$

- A pellet containing a polycarbonate-polyorganosiloxane copolymer produced in Example 1

$$T^1=dd$$

$$TX^1=dd$$

$$f^1=aa/T^1\times100$$

$$g^1=bb/T^1\times100$$

$$h^1=cc/T^1\times100$$

$$i^1=dd/T^1\times100$$

$$TW^1=f^1\times93+g^1\times74.1+h^1\times44+i^1\times172$$

Content (mass%) of structural unit (A-1): $i^1\times172/TW^1\times100$
Content (mass%) of terminal structure represented by $-OR^T$: $f^1\times93/TW^1\times100$
Content (mass%) of polycarbonate block: $(i^1\times172)/TW^1\times100$
Content (mass%) of structural unit represented by formula (XX): $g^1\times74.1/TW^1\times100$
Content (mass%) of polyorganosiloxane block: $(g^1\times74.1+h^1\times44)/TW^1\times100$

Molar fraction of structural unit (A-1) with respect to total amount of structural unit represented by formula (X) in PC-POS copolymer: $dd/TX^1 \times 100$
Average of "a"s in polycarbonate-polyorganosiloxane copolymer: bb/(oo/2)
Average b2 in polycarbonate-polyorganosiloxane copolymer: cc/oo

- Pellets each containing a polycarbonate-polyorganosiloxane copolymer produced in Examples 2 to 6 and Comparative Example 1

$$T^2=aa+bb+cc+dd+kk$$

$$TX^2=dd+kk$$

$$f^2=aa/T^2\times 100$$

$$g^2=bb/T^2\times 100$$

$$h^2=cc/T^2\times 100$$

$$i^2=dd/T^2\times 100$$

$$n^2=kk/T^2\times 100$$

$$TW^2=f^2\times 93+g^2\times 74.1+h^2\times 44+i^2\times 172+n^2\times 144$$

Content (mass%) of structural unit (A-1): $i^2\times 172/TW^2\times 100$
Content (mass%) of structural unit (A-31): $n^2\times 144/TW^2\times 100$
Content of terminal structure represented by $-OR^T$: $f^2\times 93/TW^2\times 100$
Content (mass%) of polycarbonate block: $(i^2\times 172+n^2\times 144)/TW^2\times 100$
Content (mass%) of structural unit represented by formula (XX): $g^2\times 74.1/TW^2\times 100$
Content (mass%) of polyorganosiloxane block: $(g^2\times 74.1+h^2\times 44)/TW^3\times 100$
Molar fraction of structural unit (A-1) with respect to total amount of structural unit represented by formula (X) in PC-POS copolymer: $dd/TX^2\times 100$
Molar fraction of structural unit (A-31) with respect to total amount of structural unit represented by formula (X) in PC-POS copolymer: $kk/TX^2\times 100$
Average of "a"s in polycarbonate-polyorganosiloxane copolymer: bb/(oo/2)

- Pellets each containing a polycarbonate-polyorganosiloxane copolymer produced in Examples 7 to 15 and Comparative Examples 2 to 4

$$T^3=aa+bb+cc+dd+ee$$

$$TX^3=dd+ee$$

$$f^3=aa/T^3\times 100$$

$$g^3=bb/T^3\times 100$$

$$h^3=cc/T^3\times 100$$

$$i^3=dd/T^3\times 100$$

$$j^3=ee/T^3\times 100$$

$$TW^3=f^3\times 93+g^3\times 74.1+h^3\times 44+i^3\times 172+j^3\times 170$$

Content (mass%) of structural unit (A-1): $i^3\times 172/TW^3\times 100$
Content (mass%) of structural unit (A-32): $j^3\times 170/TW^3\times 100$
Content (mass%) of terminal structure represented by $-OR^T$: $f^3\times 93/TW^3\times 100$
Content (mass%) of polycarbonate block: $(i^3\times 172+j^3\times 170)/TW^1\times 100$
Content (mass%) of structural unit represented by formula (XX): $g^3\times 74.1/TW^3\times 100$
Content (mass%) of polyorganosiloxane block: $(g^3\times 74.1+h^3\times 44)/TW^3\times 100$
Molar fraction of structural unit (A-1) with respect to total amount of structural unit represented by formula (X) in PC-POS copolymer: $dd/TX^3\times 100$
Molar fraction of structural unit (A-32) with respect to total amount of structural unit represented by formula (X) in PC-POS copolymer: $ee/TX^3\times 100$
Average of "a"s in polycarbonate-polyorganosiloxane copolymer: bb/(oo/2)
Average b2 in polycarbonate-polyorganosiloxane copolymer: cc/oo

- Pellets each containing a polycarbonate-polyorganosiloxane copolymer produced in Examples 16 to 20, and Comparative Examples 6 and 7

$$T^4=aa+bb+cc+dd+ee+ll$$

$$TX^4=dd+ee+ll$$

$$f^4=aa/T^4\times 100$$

$$g^4=bb/T^4\times 100$$

$$h^4=cc/T^4\times 100$$

$$i^4=dd/T^4\times 100$$

$$j^4=ee/T^4\times 100$$

$$m^4=ll/T^4\times 100$$

$$TW^4=f^4\times 93+g^4\times 74.1+h^4\times 44+i^4\times 172+j^4\times 170+m^4\times 222$$

Content (mass%) of structural unit (A-1): $i^4\times 172/TW^4\times 100$
Content (mass%) of structural unit (A-32): $j^4\times 170/TW^4\times 100$
Content (mass%) of structural unit (A-33): $m^4\times 222/TW^4\times 100$
Content (mass%) of terminal structure represented by $-OR^T$: $f^4\times 93/TW^4\times 100$
Content (mass%) of polycarbonate block: $(i^4\times 172+j^4\times 170+m^4\times 222)/TW^4\times 100$
Content (mass%) of structural unit represented by formula (XX): $g^4\times 74.1/TW^4\times 100$
Content (mass%) of polyorganosiloxane block: $(g^4\times 74.1+h^4\times 44)/TW^4\times 100$
Molar fraction of structural unit (A-1) with respect to total amount of structural unit represented by formula (X) in PC-POS copolymer: $dd/TX^4\times 100$
Molar fraction of structural unit (A-32) with respect to total amount of structural unit represented by formula (X) in PC-POS copolymer: $ee/TX^4\times 100$
Molar fraction of structural unit (A-33) with respect to total amount of structural unit represented by formula (X) in PC-POS copolymer: $ll/TX^4\times 100$

Average of "a"s in polycarbonate-polyorganosiloxane copolymer: bb/(oo/2)
Average b2 in polycarbonate-polyorganosiloxane copolymer: cc/oo
Average b2 in polycarbonate-polyorganosiloxane copolymer: cc/oo

- Pellets each containing a polycarbonate-polyorganosiloxane copolymer produced in Example 21 and Comparative Example 9

$$T^5=aa+bb+cc+dd+ll$$

$$TX^5=dd+ll$$

$$f^5=aa/T^5\times100$$

$$g^5=bb/T^5\times100$$

$$h^5=cc/T^5\times100$$

$$i^5=dd/T^5\times100$$

$$m^5=ll/T^5\times100$$

$$TW^5=f^5\times93+g^5\times74.1+h^5\times44+i^5\times172+m^5\times222$$

Content (mass%) of structural unit (A-1): $i^5\times172/TW^5\times100$
Content (mass%) of structural unit (A-33): $m^5\times222/TW^5\times100$
Content (mass%) of terminal structure represented by $-OR^T$: $f^5\times93/TW^5\times100$
Content (mass%) of polycarbonate block: $(i^5\times172+m^5\times222)/TW^5\times100$
Content (mass%) of structural unit represented by formula (XX): $g^5\times74.1/TW^5\times100$
Content (mass%) of polyorganosiloxane block: $(g^5\times74.1+h^5\times44)/TW^5\times100$
Molar fraction of structural unit (A-1) with respect to total amount of structural unit represented by formula (X) in PC-POS copolymer: $dd/TX^5\times100$
Molar fraction of structural unit (A-33) with respect to total amount of structural unit represented by formula (X) in PC-POS copolymer: $ll/TX^5\times100$
Average of "a"s in polycarbonate-polyorganosiloxane copolymer: bb/(oo/2)
Average b2 in polycarbonate-polyorganosiloxane copolymer: cc/oo

- A pellet containing a polycarbonate produced in Comparative Example 5

$$T^6=aa+dd+ee$$

$$TX^6=dd+ee$$

$$f^6=aa/T^6\times100$$

$$i^6=dd/T^6\times100$$

$$j^6=ee/T^6\times100$$

$$TW^6=f^6\times93+i^6\times172+j^6\times170$$

Content (mass%) of structural unit (A-1): $i^6 \times 172/TW^6 \times 100$
Content (mass%) of structural unit (A-32): $j^6 \times 170/TW^6 \times 100$
Content (mass%) of terminal structure represented by $-OR^T$: $f^6 \times 93/TW^6 \times 100$
Content (mass%) of polycarbonate block: $(i^6 \times 172+j^6 \times 170)/TW^6 \times 100$
Molar fraction of structural unit (A-1) with respect to total amount of structural unit represented by formula (X) in polycarbonate: $dd/TX^6 \times 100$
Molar fraction of structural unit (A-32) with respect to total amount of structural unit represented by formula (X) in polycarbonate: $ee/TX^6 \times 100$

- A pellet containing a polycarbonate produced in Comparative Example 8

$$T^7=aa+dd+ee+ll$$

$$TX^7=dd+ee+ll$$

$$f^7=aa/T^7\times 100$$

$$i^7=dd/T^7\times 100$$

$$j^7=ee/T^7\times 100$$

$$m^7=ll/T^7\times 100$$

$$TW^7=f^7\times 93+i^7\times 172+j^7\times 170+m^7\times 222$$

Content (mass%) of structural unit (A-1): $i^7 \times 172/TW^7 \times 100$
Content (mass%) of structural unit (A-32): $j^7 \times 170/TW^7 \times 100$
Content (mass%) of structural unit (A-33): $m^7 \times 222/TW^7 \times 100$
Content (mass%) of terminal structure represented by $-OR^T=f^7 \times 93/TW^7 \times 100$
Content (mass%) of polycarbonate block: $(i^7 \times 172+j^7 \times 170+m^7 \times 222)/TW^7 \times 100$
Molar fraction of structural unit (A-1) with respect to total amount of structural unit represented by formula (X) in polycarbonate: $dd/TX^7 \times 100$
Molar fraction of structural unit (A-32) with respect to total amount of structural unit represented by formula (X) in polycarbonate: $ee/TX^7 \times 100$
Molar fraction of structural unit (A-33) with respect to total amount of structural unit represented by formula (X) in polycarbonate: $ll/TX^7 \times 100$

(2) Charpy Impact Strength

Each of the pellet containing a polycarbonate-polyorganosiloxane copolymer produced in each of Examples and Comparative Examples described below, and the pellet containing a polycarbonate produced in each of Comparative Examples was dried at 100°C for 5 hours, and was then subjected to injection molding at a cylinder temperature of 220°C and a die temperature of 80°C to provide a strip-shaped test piece for evaluating mechanical physical properties having a length of 80 mm, a width of 10 mm, and a thickness of 3 mm. Further, a notch ($r=0.25\ mm\pm 0.05\ mm$) was made in the test piece by a post-process, and the Charpy impact strength of the resultant test piece at 23°C was measured with a Charpy impact tester (CHARPY IMPACT TESTER, model 611, manufactured by Toyo Seiki Seisaku-sho, Ltd.) in conformity with ISO 179-1:2010.
In each of Examples 1, 7, 8, and 13, the cylinder temperature at the time of the injection molding was set to 250°C, in Comparative Example 2, the cylinder temperature at the time of the injection molding was set to 240°C, and in each of Examples 2, 5, 9, 10, 12, 13, and 15 to 17, and Comparative Example 4, the cylinder temperature at the time of the injection molding was set to 230°C.

(3) Scratch Hardness

The scratch hardness of a surface having a length of 80 mm and a width of 10 mm of a strip-shaped test piece for evaluating mechanical physical properties that was obtained from each of the pellet containing a polycarbonate-polyorganosiloxane copolymer produced in each of Examples and Comparative Examples described below, and the pellet containing a polycarbonate produced in each of Comparative Examples, and that was the same as that used in the measurement of the Charpy impact strength was measured at a measurement temperature of 23°C under a load of 750 g in conformity with JIS K 5600-5-4:1999.

(4) Weight-Average Molecular Weight

The weight-average molecular weight of each of the pellet containing a polycarbonate-polyorganosiloxane copolymer produced in each of Examples and Comparative Examples described below, and the pellet containing a polycarbonate produced in each of Comparative Examples was calculated by gel permeation chromatography (GPC) measurement under the following conditions.

Test machine: Waters Acquity e2695 APC
Column: TOSOH TSK-GEL SuperAWM-H×2
Solvent: dimethylformamide (DMF) containing 10 mM lithium bromide
Column temperature: 40°C
Flow rate: 0.6 mL/min
Detector: RI
Injection concentration: 0.1 w/v%
Injection volume: 20 μL

In the preparation of a calibration curve, a cubic equation obtained by approximation through a least-squares method through use of the following standard polystyrenes manufactured by Tosoh Corporation was used.
Standard polystyrenes: F-450, F-288, F-128, F-80, F-40, F-20, F-10, F-4, F-2, F-1, A-5000, A-2500, A-1000, and A-500

The weight-average molecular weight of each of the pellet containing a polycarbonate-polyorganosiloxane copolymer produced in each of Examples and Comparative Examples described below, and the pellet containing a polycarbonate produced in each of Comparative Examples was measured as described below. 10 mg of each of the above-mentioned pellets was weighed, and 10 mL of dimethylformamide containing 10 mM lithium bromide was added to completely dissolve the pellet. The resultant solution was filtered through a membrane filter, and GPC measurement was performed.

A differential molecular weight distribution curve may be obtained by such a method as described below. First, from a time curve (elution curve) of strength distribution detected with a RI detector, a molecular weight distribution curve with respect to the logarithm (log(M)) of a molecular weight is determined by using a calibration curve. Next, an integral molecular weight distribution curve with respect to log(M) is obtained when the whole area of the distribution curve is set to 100%. After that, this integral molecular weight distribution curve is differentiated by log(M) to provide a differential molecular weight distribution curve with respect to log(M).

The weight-average molecular weight (Mw) is defined by the following equation through use of the number (Ni) of molecules having a molecular weight (Mi) at each elution position of the resultant differential molecular weight distribution curve.
Weight-average molecular weight: $Mw=\Sigma(Ni \cdot Mi^2)/\Sigma(Ni \cdot Mi)$

A series of operations until the differential molecular weight distribution curve and the weight-average molecular weight (Mw) are obtained may be typically performed with analysis software built in a GPC measurement apparatus.

(5) Melt Flow Rate (MFR)

Each of the pellet containing a polycarbonate-polyorganosiloxane copolymer produced in each of Examples and Comparative Examples described below and the pellet containing a polycarbonate produced in each of Comparative Examples was dried at 100°C for 5 hours, followed by measurement under the conditions of 230°C and a load of 2.13 kg in conformity with JIS K 7210.

(6) Tensile Modulus of Elasticity

Each of the pellet containing a polycarbonate-polyorganosiloxane copolymer produced in each of Examples and Comparative Examples described below, and the pellet containing a polycarbonate produced in each of Comparative

Examples was dried at 100°C for 5 hours, and was then subjected to injection molding at a cylinder temperature of 220°C and a die temperature of 80°C to provide a dumbbell-shaped tensile test piece Type A1 of JIS K 7139. The tensile modulus of elasticity of the tensile test piece was measured at a measurement temperature of 23°C under the condition of a tensile speed of 1 mm/min in conformity with ISO 527-1,2:2012.

In each of Examples 1, 7, 8, and 13, the cylinder temperature at the time of the injection molding was set to 250°C, in Comparative Example 2, the cylinder temperature at the time of the injection molding was set to 240°C, and in each of Examples 2, 5, 9, 10, 12, 13, and 15 to 17, and Comparative Example 4, the cylinder temperature at the time of the injection molding was set to 230°C.

(7) Tensile Strength (Yield)

Each of the pellet containing a polycarbonate-polyorganosiloxane copolymer produced in each of Examples and Comparative Examples described below, and the pellet containing a polycarbonate produced in each of Comparative Examples was dried at 100°C for 5 hours, and was then subjected to injection molding at a cylinder temperature of 220°C and a die temperature of 80°C to provide a dumbbell-shaped tensile test piece Type A1 of JIS K 7139. The tensile strength (yield) of the tensile test piece was measured at a measurement temperature of 23°C under the condition of a tensile speed of 50 mm/min in conformity with ISO 527-1,2:2012.

In each of Examples 1, 7, 8, and 13, the cylinder temperature at the time of the injection molding was set to 250°C, in Comparative Example 2, the cylinder temperature at the time of the injection molding was set to 240°C, and in each of Examples 2, 5, 9, 10, 12, 13, and 15 to 17, and Comparative Example 4, the cylinder temperature at the time of the injection molding was set to 230°C.

(8) Glass Transition Temperature

10 mg of each of the pellet containing a polycarbonate-polyorganosiloxane copolymer produced in each of Examples and Comparative Examples described below, and the pellet containing a polycarbonate produced in each of Comparative Examples was weighed in an aluminum pan, and a midpoint glass transition temperature was measured when the temperature of the pellet was held at 50°C for 1 minute, then increased to 200°C, held as it was for 5 minutes, then cooled to 50°C, held as it was for 5 minutes, and then increased from 50°C to 200°C at 20°C/min by using DSC8500 manufactured by PerkinElmer, Inc. in conformity with JIS K 7121.

3. Production of Polycarbonate-Polyorganosiloxane (PC-POS) Copolymer

Example 1: Production of PC-POS 1

A polycarbonate-polyorganosiloxane PC-POS 1 was produced under the following production conditions 1, and the resultant pellet containing the PC-POS 1 was evaluated by the above-mentioned methods. The results are shown in Table 1.

(Production Conditions 1)

A diol monomer shown in Table 1, diphenyl carbonate (2,500.0 g/11.7 mol) at a molar fraction shown in Table 1 when the total amount of the diol monomers was set to 100, and a polyether-modified polyorganosiloxane PDMS-1 were loaded into a 10 L stainless steel-made reactor equipped with a stirring apparatus, a trap for to trapping distilled phenol, and a decompression apparatus in amounts shown in Table 1 that became masses in the mass (theoretical value) of the obtained PC-POS copolymer shown in Table 1. The materials were completely melted at a temperature in the reactor of 100°C, and the inside of the reactor was purged with nitrogen. 1.6 mL of 0.01 N sodium hydroxide was loaded to initiate polymerization. The temperature in the reactor was increased to 180°C and the pressure in the reactor was reduced to $2.66\times10^4$ Pa over from about 50 minutes to about 100 minutes, and the conditions were held until the distillation amount of phenol became 0.6 L.

Next, the temperature in the reactor was increased to 190°C over about 50 minutes, the pressure in the reactor was reduced to $1.33\times10^3$ Pa, and the conditions were held until 2.0 L of phenol was distilled out.

Next, the temperature in the reactor was increased to 220°C over about 15 minutes and then held for about 10 minutes. After that, the temperature in the reactor was increased to the final polymerization temperature shown in Table 1 over about 10 minutes. After that, the pressure in the reactor was reduced to $1.33\times10^2$ Pa or less, and the reaction was continued until a predetermined stirring torque was achieved. After that, nitrogen was introduced into the reactor to increase the pressure to normal pressure, and butyl p-toluenesulfonate serving as a polymerization deactivator in an amount shown in Table 1 was loaded as required.

Further, Irganox 1010 and Irgafos 168 were each loaded so that a content in a polymer to be obtained was 1,000 ppm, followed by stirring for 10 minutes or more. After that, highpressure nitrogen was introduced into the reactor to extrude a resin strand from a bottom portion of the reactor. The resultant strand was cut with a pelletizer to provide a pellet containing a polycarbonate-polyorganosiloxane copolymer PC-POS 1.

The term "mass (theoretical value) of the obtained PC-POS copolymer" in the above-mentioned production conditions 1 refers to a mass obtained by subtracting the mass (theoretical value) of phenol produced from loaded diphenyl carbonate, from the total of the loading mass of all the diol monomers, the loading mass of diphenyl carbonate, and the loading mass of PDMS-1.

Examples 2 and 5 and Comparative Example 1: Production of PC-POSs 2, 5, and 31

Pellets containing PC-POSs 2, 5, and 31 were each obtained in the same manner as in Example 1 except that the diol monomer and the molar fraction thereof, the mass ratio of PDMS-1, and the final polymerization temperature were changed as shown in Table 1. The obtained pellets containing PC-POSs 2, 5, and 31 were each evaluated by the above-mentioned methods. The results are shown in Table 1.

Example 3: Production of PC-POS 3

A polycarbonate-polyorganosiloxane (PC-POS 3) was produced under the following production conditions 2, and the resultant PC-POS 3 was evaluated by the above-mentioned methods. The results are shown in Table 1.

(Production Conditions 2)

Diol monomers shown in Table 1, diphenyl carbonate (2,500.0 g/11.7 mol) at a molar fraction shown in Table 1 when the total amount of the diol monomers was set to 100, and polyether-modified polyorganosiloxane PDMS-1 were loaded into a 10 L stainless steel-made reactor equipped with a stirring apparatus, a trap for trapping distilled phenol, and a decompression apparatus in amounts shown in Table 1 that became masses in the mass (theoretical value) of the obtained PC-POS copolymer shown in Table 1. The materials were completely melted at a temperature in the reactor of 100°C, and the inside of the reactor was purged with nitrogen. 1.64 mL of 0.01 N sodium hydroxide was loaded to initiate polymerization. The temperature in the reactor was increased to 180°C and the pressure in the reactor was reduced to $2.66\times10^4$ Pa over from about 50 minutes to about 100 minutes, and the conditions were held until the distillation amount of phenol became 0.2 L.

Next, the temperature in the reactor was increased to 200°C over about 150 minutes, the pressure in the reactor was reduced to $1.33\times10^3$ Pa, and the conditions were held until 1.8 L of phenol was distilled out.

Next, the temperature in the reactor was increased to the final polymerization temperature shown in Table 1 over about 60 minutes, the pressure in the reactor was then reduced to $1.33\times10^2$ Pa or less, 2 L or more of phenol was distilled out, and the reaction was continued until a predetermined stirring torque was achieved. After that, nitrogen was introduced into the reactor to increase the pressure to normal pressure, and butyl p-toluenesulfonate serving as a polymerization deactivator in an amount shown in Table 1 was loaded as required.

Further, Irganox 1010 and Irgafos 168 were each loaded so that a content in a polymer to be obtained was 1,000 ppm, followed by stirring for 10 minutes or more. After that, highpressure nitrogen was introduced into the reactor to extrude a resin strand from a bottom portion of the reactor. The resultant strand was cut with a pelletizer to provide a pellet containing a polycarbonate-polyorganosiloxane copolymer PC-POS 3.

The term "mass (theoretical value) of the obtained PC-POS copolymer" in the above-mentioned production conditions 2 is the same as that in the production conditions 1.

Examples 4 and 6: Production of PC-POSs 4 and 6

Pellets containing PC-POSs 4 and 6 were each obtained in the same manner as in Example 3 except that the diol monomers and the molar fractions thereof, the mass ratio of PDMS-1, and the final polymerization temperature were changed as shown in Table 1. The obtained pellets containing PC-POSs 4 and 6 were each evaluated by the above-mentioned methods. The results are shown in Table 1.

[Table 1]

Table 1

| | | | | Example 1 | Example 2 | Example 3 | Example 4 | Example 5 | Example 6 | Comparative Example 1 |
|---|---|---|---|---|---|---|---|---|---|---|
| | | | | PC-POS 1 | PC-POS 2 | PC-POS 3 | PC-POS 4 | PC-POS 5 | PC-POS 6 | PC-POS 31 |
| Raw material | Diol monomer | Isosorbide | Molar fraction *2 | 100.0 | 90.0 | 80.0 | 80.0 | 75.0 | 80.0 | 67.0 |
| | | 1,6-Hexanediol | | - | 10.0 | 20.0 | 20.0 | 25.0 | 20.0 | 33.0 |
| | | 1,4-Cyclohexanedimethanol | | - | - | - | - | - | - | - |
| | | Tricyclodecanedimethanol | | - | - | - | - | - | - | - |
| | Diphenyl carbonate | | | 103.0 | 98.0 | 97.0 | 97.0 | 97.0 | 97.0 | 96.0 |
| | PDMS-1 | | mass% *3 | 11.0 | 11.0 | 11.0 | 8.5 | 8.5 | 6.0 | 6.0 |
| Production method | Production conditions | | - | 1 | 1 | 2 | 2 | 1 | 2 | 1 |
| | Final polymerization temperature | | °C | 250 | 240 | 210 | 210 | 240 | 210 | 240 |
| | Butyl p-toluenesulfonate | | mg | 0 | 0 | 37 | 37 | 0 | 37 | 0 |

(continued)

| | | | | Example 1 | Example 2 | Example 3 | Example 4 | Example 5 | Example 6 | Comparative Example 1 |
|---|---|---|---|---|---|---|---|---|---|---|
| | | | | PC-POS 1 | PC-POS 2 | PC-POS 3 | PC-POS 4 | PC-POS 5 | PC-POS 6 | PC-POS 31 |
| Polymer | Structure represented by formula (X) | Structural unit (A-1) represented by formula (1) | Molar fraction *4 | 100.0 | 91.6 | 84.9 | 85.0 | 79.7 | 83.9 | 72.3 |
| | | Structural unit (A-31) represented by formula (31) *1 | | - | 8.4 | 15.1 | 15.0 | 20.3 | 16.1 | 27.7 |
| | | Structural unit (A-32) represented by formula (32) | | - | - | - | - | - | - | - |
| | | Structural unit (A-33) represented by formula (33) | | - | - | - | - | - | - | - |
| | | Structural unit (A-1) represented by formula (1) | mass% *5 | 87.8 | 82.7 | 75.7 | 78.4 | 74.7 | 80.2 | 70.0 |
| | | Structural unit (A-31) represented by formula (31) *1 | | - | 6.3 | 11.3 | 11.7 | 15.9 | 13.0 | 22.4 |
| | | Structural unit (A-32) represented by formula (32) | | - | - | - | - | - | - | - |
| | | Structural unit (A-33) represented by formula (33) | | - | - | - | - | - | - | - |
| | | Total | mass% | 87.8 | 89.0 | 87.0 | 90.1 | 90.6 | 93.2 | 92.4 |
| | Terminal structure represented by $-OR^T$ | | mass% *5 | 1.2 | 0.5 | 1.8 | 1.1 | 1.0 | 0.9 | 1.5 |
| | Structural unit represented by formula (XX) | | | 6.1 | 5.8 | 6.2 | 4.8 | 4.6 | 3.3 | 3.4 |
| | Average of "a"s | | - | 24.2 | 24.7 | 24.7 | 24.3 | 24.5 | 24.3 | 24.8 |
| | Average b2 | | - | 14.7 | 15.4 | 15.8 | 15.7 | 14.7 | 16.3 | 15.1 |
| | Polyorganosiloxane block | | mass% *5 | 11.0 | 10.5 | 11.2 | 8.8 | 8.4 | 5.9 | 6.1 |
| | Molar ratio (A-31/A-1) | | - | - | 8.4/91.6 | 15.1/84.9 | 15.0/85.0 | 20.3/79.7 | 16.1/83.9 | 27.7/72.3 |

(continued)

| | | | Example 1 | Example 2 | Example 3 | Example 4 | Example 5 | Example 6 | Comparative Example 1 |
|---|---|---|---|---|---|---|---|---|---|
| | | | PC-POS 1 | PC-POS 2 | PC-POS 3 | PC-POS 4 | PC-POS 5 | PC-POS 6 | PC-POS 31 |
| Evaluation results | Charpy impact strength (3 mmt, notched, room temperature) | $kJ/m^2$ | 130 | 77 | 50 | 84 | 58 | 17 | 7 |
| | Scratch hardness (pencil method) | - | HB | HB | HB | F | HB | F | B |
| | Weight-average molecular weight ($M_w$) | In terms of PS | 26,400 | 32,000 | 31,600 | 37,500 | 37,400 | 41,300 | 31,500 |
| | MFR (230°C, load: 2.13 Kg) | g/10 min | 1.1 | 2.6 | 17.9 | 5.5 | 6.5 | 5.6 | 49.5 |
| | Tensile modulus of elasticity | MPa | 2,920 | 2,740 | 2,520 | 2,650 | 2,640 | 2,880 | 2,630 |
| | Tensile strength (yield) | MPa | 83 | 75 | 68 | 77 | 73 | 80 | 70 |
| | Glass transition temperature | °C | 160 | 113 | 118 | 119 | 109 | 122 | 88 |

*1: n=6.
*2: representing a molar fraction when the total amount of diol monomers is set to 100.
*3: representing the mass percentage of loaded PDMS-1 with respect to the mass (theoretical value) of a PC-POS copolymer to be obtained. The mass (theoretical value) of a PC-POS copolymer to be obtained was calculated from [loading mass of all diol monomers+loading mass of diphenyl carbonate+loading mass of PDMS-1-mass (theoretical value) of phenol produced from diphenyl carbonate].
*4: representing a molar fraction when the total amount of structural units in the structure represented by the formula (X) is set to 100.
*5: measured by methods described in Examples

As shown in Table 1, the molded bodies of the polycarbonate-polyorganosiloxane copolymers PC-POSs 1 to 6, in which the content of the structural unit represented by the formula (XX) was 2.0 mass% or more and 25.0 mass% or less, and the content of the structural unit (A-1) represented by the formula (1) was 73.0 mass% or more, satisfied the conditions (I) and (II), and when the contents of the structural unit represented by the formula (XX) and the weight-average molecular weights were almost comparable, surprisingly, more excellent impact resistance was achieved as the content of the structural unit (A-1) was increased. PC-POS 6 is a polycarbonate-polyorganosiloxane copolymer satisfying the condition (C1), and PC-POSs 2 to 5 are each a polycarbonate-polyorganosiloxane copolymer satisfying the condition (D1).

Meanwhile, the molded body of PC-POS 31, which did not satisfy the condition (C1), did not satisfy the conditions (I) and (II).

Examples 7 to 10 and 12 to 15, and Comparative Examples 2 and 4: Production of PC-POSs 7 to 10, 12 to 15, 32, and 34

Pellets containing PC-POSs 7 to 10, 12 to 15, 32, and 34 were each obtained in the same manner as in Example 1 except that the diol monomer and the molar fraction thereof, the mass ratio of PDMS-1, and the final polymerization temperature were changed as shown in Table 2. The obtained pellets containing PC-POSs 7 to 10, 12 to 15, 32, and 34 were each evaluated by the above-mentioned methods. The results are shown in Table 2.

Example 11, and Comparative Examples 3 and 5: Production of PC-POSs 11 and 33, and PC 35

Pellets containing PC-POSs 11 and 33, and PC 35 were each obtained in the same manner as in Example 3 except that the diol monomers and the molar fractions thereof, the mass ratio of PDMS-1, and the final polymerization temperature were changed as shown in Table 2. The obtained pellets containing PC-POSs 11 and 33, and PC 35 were each evaluated by the above-mentioned methods. The results are shown in Table 2.

[Table 2]

Table 2

| | | | | Example 7 | Example 8 | Example 9 | Example 10 | Example 11 | Example 12 | Comparative Example 2 | Comparative Example 3 | Example 13 | Example 14 | Example 15 | Comparative Example 4 | Comparative Example 5 |
|---|---|---|---|---|---|---|---|---|---|---|---|---|---|---|---|---|
| | | | | PC-POS 7 | PC-POS 8 | PC-POS 9 | PC-POS 10 | PC-POS 11 | PC-POS 12 | PC-POS 32 | PC-POS 33 | PC-POS 13 | PC-POS 14 | PC-POS 15 | PC-POS 34 | PC 35 |
| Raw materia 1 | Diol monomer | Isosorbide | Molar fraction *2 | 90.0 | 95.0 | 90.0 | 85.0 | 80.0 | 75.0 | 70.0 | 70.0 | 90.0 | 80.0 | 68.0 | 50.0 | 70.0 |
| | | 1,6-Hexanediol | | - | - | - | - | - | - | - | - | - | - | - | - | - |
| | | 1,4-Cyclohexanedimet hanol | | 10.0 | 5.0 | 10.0 | 15.0 | 20.0 | 25.0 | 30.0 | 30.0 | 10.0 | 20.0 | 32.0 | 50.0 | 30.0 |
| | | Tricyclodecanedimethanol | | - | - | - | - | - | - | - | - | - | - | - | - | - |
| | Diphenyl carbonate | | | 103.0 | 102.0 | 101.0 | 100.0 | 99.0 | 99.0 | 99.0 | 101.0 | 100.0 | 99.0 | 99.0 | 97.0 | 99.0 |
| | PDMS-1 | | mass % *3 | 16.0 | 11.0 | 11.0 | 11.0 | 11.0 | 11.0 | 11.0 | 11.0 | 6.0 | 6.0 | 6.0 | 6.0 | - |
| Production method | Production conditions | | - | 1 | 1 | 1 | 1 | 2 | 1 | 1 | 2 | 1 | 1 | 1 | 1 | 2 |
| | Final polymerization temperature | | °C | 250 | 250 | 250 | 250 | 210 | 240 | 240 | 210 | 250 | 250 | 240 | 240 | 210 |
| | Butyl p-toluenesulfonate | | mg | 0 | 0 | 0 | 0 | 37 | 0 | 0 | 37 | 0 | 37 | 0 | 0 | 37 |
| Polymer | Structure represented by formula (X) | Structural unit (A-1) represented by formula (1) | Molar fraction *4 | 88.3 | 92.1 | 89.2 | 85.8 | 79.8 | 76.1 | 69.0 | 71.7 | 90.9 | 81.2 | 69.6 | 52.7 | 71.7 |
| | | Structural unit (A-31) represented by formula (31) *1 | | - | - | - | - | - | - | - | - | - | - | - | - | - |
| | | Structural unit (A-32) represented by formula (32) | | 11.7 | 7.9 | 10.8 | 14.2 | 20.2 | 23.9 | 31.0 | 28.3 | 9.1 | 18.8 | 30.4 | 47.3 | 28.3 |
| | | Structural unit (A-33) represented by formula (33) | | - | - | - | - | - | - | - | - | - | - | - | - | - |
| | | Structural unit (A-1) represented by formula (1) | mass % *5 | 74.3 | 81.3 | 80.0 | 75.9 | 70.6 | 67.8 | 61.7 | 63.1 | 84.4 | 75.7 | 64.9 | 49.5 | 68.7 |

(continued)

| | | | Exam ple 7 | Exam ple 8 | Exam ple 9 | Exam ple 10 | Exam ple 11 | Exam ple 12 | Comparat ive Example 2 | Comparat ive Example 3 | Exam ple 13 | Exam ple 14 | Exam ple 15 | Comparat ive Example 4 | Comparat ive Example 5 |
|---|---|---|---|---|---|---|---|---|---|---|---|---|---|---|---|
| | | | PC-POS 7 | PC-POS 8 | PC-POS 9 | PC-POS 10 | PC-POS 11 | PC-POS 12 | PC-POS 32 | PC-POS 33 | PC-POS 13 | PC-POS 14 | PC-POS 15 | PC-POS 34 | PC 35 |
| | Structural unit (A-31) represented by formula (31) *1 | | - | - | - | - | - | - | - | - | - | - | - | - | - |
| | Structural unit (A-32) represented by formula (32) | | 9.7 | 6.9 | 9.6 | 12.5 | 17.7 | 21.0 | 27.3 | 24.7 | 8.3 | 17.3 | 28.1 | 43.9 | 29.6 |
| | Structural unit (A-33) represented by formula (33) | | - | - | - | - | - | - | - | - | - | - | - | - | - |
| | Total | mass % | 84.0 | 88.2 | 89.6 | 88.4 | 88.3 | 88.8 | 89.0 | 87.8 | 92.7 | 93 | 93.0 | 93.4 | 98.3 |
| Terminal structure represented by $-OR^T$ | | mass % *5 | 0.9 | 1.2 | 0.9 | 1.0 | 1.3 | 0.6 | 0.6 | 1.7 | 1.2 | 1.2 | 1.1 | 0.6 | 1.7 |
| Structural unit represented by formula (XX) | | | 8.3 | 5.9 | 5.3 | 5.8 | 5.7 | 5.8 | 5.8 | 5.8 | 3.4 | 3.2 | 3.3 | 3.4 | - |
| Average of "a"s | | - | 24.7 | 24.7 | 24.1 | 24.3 | 24.4 | 24.6 | 24.1 | 24.5 | 24.4 | 26.2 | 26.0 | 24.2 | - |
| Average b2 | | - | 14.9 | 15.0 | 15.4 | 14.9 | 15.1 | 14.9 | 14.7 | 15.1 | 15.2 | 16.3 | 15.7 | 14.9 | - |
| Polyorganosiloxane block | | mass % *5 | 15.1 | 10.7 | 9.6 | 10.6 | 10.4 | 10.6 | 10.5 | 10.5 | 6.1 | 5.8 | 6.0 | 6.1 | - |
| Molar ratio (A-32/A-1) | | - | 11.7/8 8.3 | 7.9/92. 1 | 10.8/8 9.2 | 14.2/8 5.8 | 20.2/7 9.8 | 23.9/7 6.1 | 31.0/69.0 | 28.3/71.7 | 9.1/90. 9 | 18.8/8 1.2 | 30.4/6 9.6 | 47.3/52.7 | 28.3/71.7 |
| Total content of structural unit (A-1) and structural unit (A-32) | | Mola r fracti on *4 | 100.0 | 100.0 | 100.0 | 100.0 | 100.0 | 100.0 | 100.0 | 100.0 | 100.0 | 100.0 | 100.0 | 100.0 | 100.0 |

(continued)

| | | | Exam ple 7 | Exam ple 8 | Exam ple 9 | Exam ple 10 | Exam ple 11 | Exam ple 12 | Comparat ive Example 2 | Comparat ive Example 3 | Exam ple 13 | Exam ple 14 | Exam ple 15 | Comparat ive Example 4 | Comparat ive Example 5 |
|---|---|---|---|---|---|---|---|---|---|---|---|---|---|---|---|
| | | | PC-POS 7 | PC-POS 8 | PC-POS 9 | PC-POS 10 | PC-POS 11 | PC-POS 12 | PC-POS 32 | PC-POS 33 | PC-POS 13 | PC-POS 14 | PC-POS 15 | PC-POS 34 | PC 35 |
| Evaluat ion re-sults | Charpy impact strength (3 mmt, notched, room temperature) | $kJ/m^2$ | 124 | 156 | 127 | 88 | 78 | 94 | 89 | 71 | 17 | 15 | 58 | 147 | 10 |
| | Scratch hardness (pencil method) | - | HB | F | F | F | F | HB | B | B | F | F | HB | B | F |
| | Weight-average molecular weight ($M_w$) | In terms of PS | 31,100 | 30,700 | 30,900 | 30,100 | 33,100 | 35,700 | 42,300 | 27,300 | 27,100 | 28,000 | 37,800 | 49,600 | 35,100 |
| | MFR (230°C, load: 2.13 Kg) | g/10 min | 1.1 | 1.0 | 1.6 | 3.8 | 8.0 | 2.3 | 1.9 | 22.0 | 2.3 | 3.4 | 3.2 | 3.2 | 10.0 |
| | Tensile modulus of elasticity | MPa | 2,280 | 2,850 | 2,620 | 2,650 | 2,650 | 2,420 | 2,330 | 2,450 | 3,080 | 2,900 | 2,540 | 2,280 | 2,800 |
| | Tensile strength (yield) | MPa | 63 | 80 | 79 | 76 | 73 | 71 | 67 | 68 | 90 | 84 | 74 | 62 | 80 |
| | Glass transition temperature | °C | 147 | 155 | 149 | 142 | 133 | 128 | 123 | 119 | 152 | 138 | 123 | 100 | 124 |

*1: n=6.
*2: representing a molar fraction when the total amount of diol monomers is set to 100.
*3: representing the mass percentage of loaded PDMS-1 with respect to the mass (theoretical value) of a PC-POS copolymer to be obtained. The mass (theoretical value) of a PC-POS copolymer to be obtained was calculated from [loading mass of all diol monomers+loading mass of diphenyl carbonate+loading mass of PDMS-1-mass of phenol produced from diphenyl carbonate (theoretical value, phenol in a molar amount twice as large as that of a carbonic acid diester)].
*4: representing a molar fraction when the total amount of structural units in the structure represented by the formula (X) is set to 100.
*5: measured by methods described in Examples

As shown in Table 2, the molded bodies of the polycarbonate-polyorganosiloxane copolymers PC-POSs 7 to 10, 13, and 14, in which the content of the structural unit represented by the formula (XX) was 2.0 mass% or more and 25.0 mass% or less, and the content of the structural unit (A-1) represented by the formula (1) was 73.0 mass% or more, satisfied the conditions (I) and (II), and when the contents of the structural unit represented by the formula (XX) and the weight-average molecular weights were almost comparable, surprisingly, more excellent impact resistance was achieved as the content of the structural unit (A-1) was increased. PC-POSs 13 and 14 are each a polycarbonate-polyorganosiloxane copolymer satisfying the condition (C2), and PC-POSs 8 and 7 to 10 are each a polycarbonate-polyorganosiloxane copolymer satisfying the condition (D2).

The molded body of PC-POS 15, in which the content of the structural unit (A-1) represented by the formula (1) was less than 73.0, and which satisfied the condition (C2), and the molded bodies of PC-POS 11 and PC-POS 12, which satisfied the condition (D2), satisfied the conditions (I) and (II).

In addition, PC-POSs 2 to 6 were compared to PC-POSs 7 to 15. This comparison shows that the polycarbonate-polyorganosiloxane copolymer containing the structural unit (A-32) as the structural unit (A-3) is more excellent in impact resistance and scratch resistance than the polycarbonate-polyorganosiloxane copolymer containing the structural unit (A-31) as the structural unit (A-3).

Meanwhile, the molded body of PC-POS 34, which did not satisfy the condition (C2), and the molded bodies of PC-POSs 32 and 33, which did not satisfy the condition (D2), did not satisfy the condition (II).

The molded body of PC 35, which contained no polyorganosiloxane block and contained structural units derived from isosorbide and 1,4-cyclohexanedimethanol like a polycarbonate described in Examples of JP 2009-144013 A, did not satisfy the condition (I). In Examples of JP 2009-144013 A, there is a description that as the content of an isosorbide-derived constituent unit becomes higher, the impact resistance of a polycarbonate becomes lower. However, as apparent from comparison between Examples 2 and 3, comparison between Examples 4 and 5, comparison among Examples 8 to 10, and comparison between Examples 13 and 14, in which the contents of the structural unit represented by the formula (XX) and the weight-average molecular weights are almost comparable to each other, the polycarbonate-polyorganosiloxane copolymer of the present invention containing the polyorganosiloxane block exhibits such a surprising effect that as the content of the structural unit (A-1) represented by the formula (1) corresponding to the isosorbide-derived constituent unit becomes higher, impact resistance becomes more excellent.

Examples 16 to 18 and Comparative Example 6: Production of PC-POSs 16 to 18 and 36

Pellets containing PC-POSs 16 to 18 and 36 were each obtained in the same manner as in Example 1 except that the diol monomer and the molar fraction thereof, the mass ratio of PDMS-1, and the final polymerization temperature were changed as shown in Table 3. The obtained pellets containing PC-POSs 16 to 18 and 36 were each evaluated by the above-mentioned methods. The results are shown in Table 3.

Examples 19 and 20, and Comparative Examples 7 and 8: Production of PC-POSs 19, 20, and 37, and PC 38

Pellets containing PC-POSs 19, 20, and 37, and PC 38 were each obtained in the same manner as in Example 2 except that the diol monomer and the molar fraction thereof, the mass ratio of PDMS-1, and the final polymerization temperature were changed as shown in Table 3. The obtained pellets containing PC-POSs 19, 20, and 37, and PC 38 were each evaluated by the above-mentioned methods. The results are shown in Table 3.

[Table 3]

Table 3

| | | | | Example 16 | Example 17 | Example 18 | Example 19 | Example 20 | Comparative Example 6 | Comparative Example 7 | Comparative Example 8 |
|---|---|---|---|---|---|---|---|---|---|---|---|
| | | | | PC-POS 16 | PC-POS 17 | PC-POS 18 | PC-POS 19 | PC-POS 20 | PC-POS 36 | PC-POS 37 | PC 38 |
| Raw material | Diol monomer | Isosorbide | Molar fraction *2 | 80.0 | 70.0 | 80.0 | 70.0 | 70.0 | 65.0 | 70.0 | 70.0 |
| | | 1,6-Hexanediol | | - | - | - | - | - | - | - | - |
| | | 1,4-Cyclohexanedimethanol | | 5.0 | 20.0 | 10.0 | 15.0 | 15.0 | 17.5 | 15.0 | 15.0 |
| | | Tricyclodecanedimethanol | | 15.0 | 10.0 | 10.0 | 15.0 | 15.0 | 17.5 | 15.0 | 15.0 |
| | Diphenyl carbonate | | | 100.0 | 100.0 | 99.0 | 101.0 | 101.0 | 99.0 | 101.0 | 101.0 |
| | PDMS-1 | | mass% *3 | 10.0 | 11.0 | 10.0 | 11.0 | 11.0 | 11.0 | 6.0 | - |
| Production method | Production conditions | | - | 1 | 1 | 1 | 2 | 2 | 1 | 2 | 2 |
| | Final polymerization temperature | | °C | 240 | 240 | 240 | 210 | 225 | 240 | 220 | 210 |
| | Butyl p-toluenesulfonate | | mg | 37 | 0 | 37 | 37 | 37 | 0 | 37 | 37 |

(continued)

| | | | | Example 16 | Example 17 | Example 18 | Example 19 | Example 20 | Comparative Example 6 | Comparative Example 7 | Comparative Example 8 |
|---|---|---|---|---|---|---|---|---|---|---|---|
| | | | | PC-POS 16 | PC-POS 17 | PC-POS 18 | PC-POS 19 | PC-POS 20 | PC-POS 36 | PC-POS 37 | PC 38 |
| Polymer | Structure represented by formula (X) | Structural unit (A-1) represented by formula (1) | Molar fraction *4 | 79.0 | 69.9 | 77.6 | 70.1 | 70.6 | 62.8 | 68.6 | 67.8 |
| | | Structural unit (A-31) represented by formula (31) *1 | | - | - | - | - | - | - | - | - |
| | | Structural unit (A-32) represented by formula (32) | | 6.4 | 19.9 | 9.5 | 15.1 | 14.3 | 17.1 | 14.5 | 18.4 |
| | | Structural unit (A-33) represented by formula (33) | | 14.6 | 10.1 | 13.0 | 14.8 | 15.1 | 20.1 | 16.9 | 13.8 |
| | | Structural unit (A-1) represented by formula (1) | mass% *5 | 68.3 | 60.6 | 68.1 | 59.3 | 58.2 | 53.7 | 64.3 | 64.3 |
| | | Structural unit (A-31) represented by formula (31) *1 | | - | - | - | - | - | - | - | - |
| | | Structural unit (A-32) represented by formula (32) | | 5.5 | 17.0 | 10.7 | 12.6 | 14.7 | 18.8 | 16.9 | 17.3 |
| | | Structural unit (A-33) represented by formula (33) | | 16.2 | 11.2 | 11.3 | 16.2 | 16.1 | 16.9 | 17.3 | 16.9 |
| | | Total | mass% | 90.0 | 88.8 | 90.1 | 88.1 | 89.0 | 89.4 | 93.1 | 98.5 |
| | Terminal structure represented by $-OR^T$ | | mass% *5 | 0.2 | 0.6 | 0.4 | 1.3 | 0.9 | 0.1 | 1.0 | 1.5 |
| | Structural unit represented by formula (XX) | | | 5.4 | 5.8 | 5.2 | 5.9 | 5.5 | 5.8 | 3.2 | - |

(continued)

| | | | Example 16 | Example 17 | Example 18 | Example 19 | Example 20 | Comparative Example 6 | Comparative Example 7 | Comparative Example 8 |
|---|---|---|---|---|---|---|---|---|---|---|
| | | | PC-POS 16 | PC-POS 17 | PC-POS 18 | PC-POS 19 | PC-POS 20 | PC-POS 36 | PC-POS 37 | PC 38 |
| | Average of "a"s | - | 24.3 | 24.4 | 27.3 | 24.4 | 23.5 | 24.5 | 23.9 | - |
| | Average b2 | - | 15.1 | 14.8 | 16.9 | 15.1 | 14.6 | 15.1 | 15.1 | - |
| | Polyorganosiloxane block | mass% *5 | 9.8 | 10.6 | 9.5 | 10.6 | 10.1 | 10.5 | 5.9 | - |
| | Molar ratio (A-32/A-33) | - | 30.5/69.5 | 66.3/33.7 | 42.2/57.8 | 50.5/49.5 | 48.6/51.4 | 46.0/54.0 | 46.2/53.8 | 57.1/42.9 |
| | Molar ratio (total of A-32 and A-33/A-1 | Molar fraction *4 | 21.0/79.0 | 30.0/69.9 | 22.5/77.6 | 29.9/70.1 | 29.4/70.6 | 37.2/62.8 | 31.4/68.6 | 62.2/67.8 |
| | Total content of structural unit (A-1) and structural unit (A-32) | Molar fraction *4 | 85.4 | 89.8 | 87.1 | 85.2 | 84.9 | 79.9 | 83.1 | 86.2 |

(continued)

| | | | Example 16 | Example 17 | Example 18 | Example 19 | Example 20 | Comparative Example 6 | Comparative Example 7 | Comparative Example 8 |
|---|---|---|---|---|---|---|---|---|---|---|
| | | | PC-POS 16 | PC-POS 17 | PC-POS 18 | PC-POS 19 | PC-POS 20 | PC-POS 36 | PC-POS 37 | PC 38 |
| Evaluation results | Charpy impact strength (3 mmt, notched, room temperature) | $kJ/m^2$ | 17 | 64 | 36 | 53 | 48 | 16 | 10.8 | 3 |
| | Scratch hardness (pencil method) | - | F | HB | F | HB | F | B | F | F |
| | Weight-average molecular weight ($M_w$) | In terms of PS | 32,600 | 39,100 | 32,100 | 29,000 | 30,000 | 40,300 | 29,900 | 30,400 |
| | MFR (230°C, load: 2.13 Kg) | g/10 min | 3.3 | 2.9 | 2.9 | 22.2 | 13.0 | 6.5 | 8.3 | 9.8 |
| | Tensile modulus of elasticity | MPa | 2,740 | 2,450 | 2,780 | 2,690 | 2,750 | 2,470 | 2,960 | 3,100 |
| | Tensile strength (yield) | MPa | 76 | 69 | 76 | 69 | 70 | 66 | 78 | 83 |
| | Glass transition temperature | °C | 137 | 123 | 138 | 119 | 121 | 117 | 123 | 127 |

*1: n=6.
*2: representing a molar fraction when the total amount of diol monomers is set to 100.
*3: representing the mass percentage of loaded PDMS-1 with respect to the mass (theoretical value) of a PC-POS copolymer to be obtained. The mass (theoretical value) of a PC-POS copolymer to be obtained was calculated from [loading mass of all diol monomers+loading mass of diphenyl carbonate+loading mass of PDMS-1-mass of phenol produced from diphenyl carbonate (theoretical value, phenol in a molar amount twice as large as that of a carbonic acid diester)].
*4: representing a molar fraction when the total amount of structural units in the structure represented by the formula (X) is set to 100.
*5: measured by methods described in Examples

As shown in Table 3, the molded body of PC-POS 17, in which the content of the structural unit (A-1) represented by the formula (1) was less than 73.0, and which satisfied the condition (D41), the molded bodies of PC-POSs 18 to 20, which satisfied the condition (D42), and the molded body of PC-POS 16, which satisfied the condition (D43), satisfied the conditions (I) and (II).

Meanwhile, the molded body of PC 38, which did not contain a polyorganosiloxane block, did not satisfy the condition (I). In addition, the molded body of PC-POS 38, which did not satisfy any of the conditions (C41) to (C43), did not satisfy the condition (II). In addition, the molded body of PC-POS 39, which did not satisfy any of the conditions (D41) to (D43), did not satisfy the condition (II).

Example 21: Production of PC-POS 21

A pellet containing PC-POS 21 was obtained in the same manner as in Example 3 except that the diol monomer and the molar fraction thereof, the mass ratio of PDMS-1, and the final polymerization temperature were changed as shown in Table 4. The obtained pellet containing PC-POS 21 was evaluated by the above-mentioned methods. The results are shown in Table 4.

Comparative Example 9: Production of PC-POS 39

A pellet containing PC-POS 39 was obtained in the same manner as in Example 1 except that the diol monomer and the molar fraction thereof, the mass ratio of PDMS-1, and the final polymerization temperature were changed as shown in Table 4. The obtained pellet containing PC-POS 39 was evaluated by the above-mentioned methods. The results are shown in Table 4.

[Table 4]

Table 4

<table>
<tr><td colspan="4" rowspan="2"></td><td>Example 21</td><td>Comparative Example 9</td></tr>
<tr><td>PC-POS 21</td><td>PC-POS 39</td></tr>
<tr><td rowspan="6">Raw material</td><td rowspan="4">Diol monomer</td><td>Isosorbide</td><td rowspan="5">Molar fraction *2</td><td>70.0</td><td>62.0</td></tr>
<tr><td>1,6-Hexanediol</td><td>-</td><td>-</td></tr>
<tr><td>1,4-Cyclohexanedimethanol</td><td>-</td><td>-</td></tr>
<tr><td>Tricyclodecanedimethanol</td><td>30.0</td><td>38.0</td></tr>
<tr><td colspan="2">Diphenyl carbonate</td><td>103.0</td><td>102.0</td></tr>
<tr><td colspan="2">PDMS-1</td><td>mass% *3</td><td>11.0</td><td>11.0</td></tr>
<tr><td rowspan="3">Production method</td><td colspan="2">Production conditions</td><td>-</td><td>2</td><td>1</td></tr>
<tr><td colspan="2">Final polymerization temperature</td><td>°C</td><td>210</td><td>240</td></tr>
<tr><td colspan="2">Butyl p-toluenesulfonate</td><td>mg</td><td>37</td><td>0</td></tr>
</table>

(continued)

| | | | | Example 21 | Comparative Example 9 |
|---|---|---|---|---|---|
| | | | | PC-POS 21 | PC-POS 39 |
| Polymer | Structure represented by formula (X) | Structural unit (A-1) represented by formula (1) | Molar fraction *4 | 70.0 | 62.4 |
| | | Structural unit (A-31) represented by formula (31) *1 | | - | - |
| | | Structural unit (A-32) represented by formula (32) | | - | - |
| | | Structural unit (A-33) represented by formula (33) | | 30.0 | 37.6 |
| | | Structural unit (A-1) represented by formula (1) | mass% *5 | 57.1 | 50.1 |
| | | Structural unit (A-31) represented by formula (31) *1 | | - | - |
| | | Structural unit (A-32) represented by formula (32) | | - | - |
| | | Structural unit (A-33) represented by formula (33) | | 31.7 | 38.8 |
| | | Total | mass% | 88.8 | 88.9 |
| | Terminal structure represented by $-OR^T$ | | mass% *5 | 0.3 | 0.3 |
| | Structural unit represented by formula (XX) | | | 6.0 | 5.9 |
| | Average of "a"s | | - | 24.5 | 24.4 |
| | Average b2 | | - | 15.3 | 15.0 |
| | Polyorganosiloxane block | | mass% *5 | 10.9 | 10.8 |
| | Molar ratio (A-33/A-1) | | - | 30.0/70.0 | 37.6/62.4 |

(continued)

| | | | Example 21 | Comparative Example 9 |
|---|---|---|---|---|
| | | | PC-POS 21 | PC-POS 39 |
| Evaluation results | Charpy impact strength (3 mmt, notched, room temperature) | $kJ/m^2$ | 18 | 6.1 |
| | Scratch hardness (pencil method) | - | F | HB |
| | Weight-average molecular weight ($M_w$) | In terms of PS | 36,100 | 50,700 |
| | MFR (230°C, load: 2.13 Kg) | g/10 min | 14 | 3.3 |
| | Tensile modulus of elasticity | MPa | 2,680 | 2,680 |
| | Tensile strength (yield) | MPa | 70 | 69 |
| | Glass transition temperature | °C | 122 | 113 |

*1: n=6.
*2: representing a molar fraction when the total amount of diol monomers is set to 100.
*3: representing the mass percentage of PDMS-1 with respect to the mass (theoretical value) of a PC-POS copolymer to be obtained.
The mass (theoretical value) of a PC-POS copolymer to be obtained was calculated from [loading mass of all diol monomers+loading mass of diphenyl carbonate+loading mass of PDMS-1-mass of phenol produced from diphenyl carbonate (theoretical value, phenol in a molar amount twice as large as that of a carbonic acid diester)].
*4: representing a molar fraction when the total amount of structural units in the structure represented by the formula (X) is set to 100.
*5: measured by methods described in Examples

As shown in Table 4, the molded body of PC-POS 21, in which the content of the structural unit (A-1) represented by the formula (1) was less than 73.0, and which satisfied the condition (D3), satisfied the conditions (I) and (II).

Meanwhile, the molded body of PC-POS 39, which did not satisfy the condition (D3), did not satisfy the condition (I).

The polycarbonate-based resin composition including the polycarbonate-polyorganosiloxane copolymer of the present invention is excellent in impact resistance and scratch resistance of a molded body thereof, and hence the polycarbonate-based resin composition can be suitably used in an impact-resistant application and a scratch-resistant application.

An example of the impact-resistant application and the scratch-resistant application is a construct having an external surface formed of the polycarbonate-based resin composition. Specific examples thereof include resin windows, touch panels, interior articles, exterior articles, interior parts or exterior parts of vehicles, housings, appliance parts, building materials, and OA instrument parts. The polycarbonate-based resin composition of the present invention can be suitably used for producing the above-mentioned articles.

The molded body including the polycarbonate-based resin composition of the present invention can be suitably used in, for example: (1) automobile parts, such as a sunroof, a door visor, a rear window, and a side window; (2) building parts, such as a building glass, a soundproof wall, a car port, a sunroom, and gratings; (3) windows for railway vehicles and ships; (4) parts for electrical instruments, such as various parts for a television, a radio-cassette recorder, a video camera, a video tape recorder, an audio player, a DVD player, a telephone, a display, a computer, a register, a copying machine, a printer, a facsimile, and the like, and respective parts for outer plates and housings thereof; (5) parts for precision instruments, such as casings and covers for precision machines, such as a cellular phone, a PDA, a camera, a slide projector, a watch, an electronic calculator, a measuring instrument, and a display instrument; (6) agricultural parts, such as a plastic greenhouse and a greenhouse; and (7) furniture parts, such as a lighting cover, blinds, and interior tools.

## Claims

**1.** A polycarbonate-polyorganosiloxane copolymer, comprising:

a polycarbonate block comprising a structural unit (A-1) represented by the following formula (1); and
a polyorganosiloxane block comprising a structural unit (A-2) represented by the following formula (2),
the polycarbonate-polyorganosiloxane copolymer satisfying the following conditions (I) and (II):

[Chem. 1]

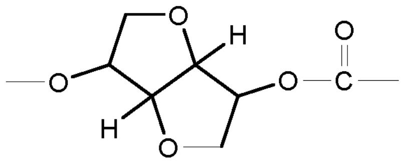
(1)

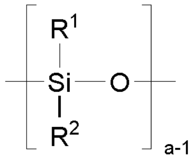
(2)

wherein
in the formula (2), $R^1$ and $R^2$ each independently represent a hydrogen atom, a halogen atom, an alkyl group having 1 to 10 carbon atoms, an alkoxy group having 1 to 10 carbon atoms, an aryl group having 6 to 12 carbon atoms, or an alkylaryl group having 7 to 22 carbon atoms, and "a" represents an integer of from 2 to 500;
Condition (I): a Charpy impact strength of a molded piece obtained by molding the polycarbonate-polyorganosiloxane copolymer to provide a strip-shaped molded piece having a length of 80 mm, a width of 10 mm, and a thickness of 3 mm, and making a notch (r=0.25 mm±0.05 mm) in the strip-shaped molded piece by a post-process is 15 kJ/$m^2$ or more, the Charpy impact strength being measured under a condition of a measurement temperature of 23°C in conformity with ISO 179-1:2010; and
Condition (II): a scratch hardness (pencil method) of a molded body of the polycarbonate-polyorganosiloxane copolymer is HB or more, the scratch hardness being measured in conformity with JIS K 5600-5-4:1999.

**2.** The polycarbonate-polyorganosiloxane copolymer according to claim 1, wherein, in the polycarbonate-polyorganosiloxane copolymer, a content of a structural unit represented by the following formula (XX) is 2.0 mass% or more and 25.0 mass% or less, and a content of the structural unit (A-1) represented by the formula (1) is 73.0 mass% or more:

[Chem. 2]

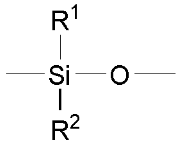
(XX)

wherein
in the formula (XX), $R^1$ and $R^2$ represent the same meanings as those of $R^1$ and $R^2$ in the formula (2).

**3.** The polycarbonate-polyorganosiloxane copolymer according to claim 1, further comprising at least one structural unit (A-3) selected from structures represented by the following formulae (3) and (4):

[Chem. 3]

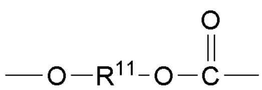
(3)

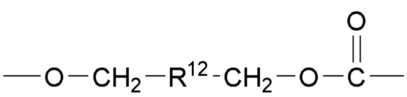
(4)

wherein
in the formulae (3) and (4), $R^{11}$ represents a divalent linear or branched aliphatic hydrocarbon group having 2 to 40 carbon atoms, a divalent alicyclic hydrocarbon group having 3 to 40 carbon atoms, or a divalent aromatic hydrocarbon group having 6 to 20 carbon atoms, and $R^{12}$ represents a divalent alicyclic hydrocarbon group having 3 to 40 carbon atoms.

**4.** The polycarbonate-polyorganosiloxane copolymer according to claim 3, wherein the structural unit (A-3) comprises at least one selected from structural units represented by the following formulae (31) to (34):

[Chem. 4]

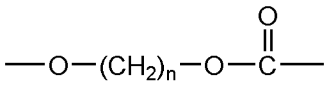
(31)

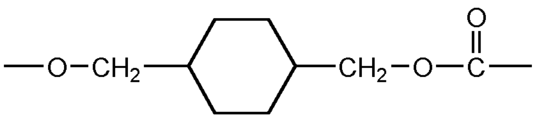
(32)

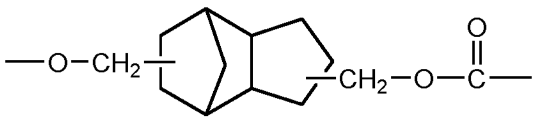
(33)

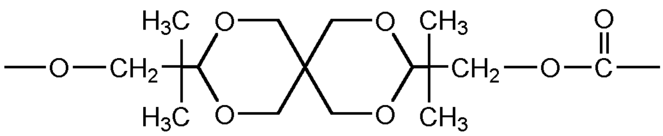
(34)

wherein
in the formula (31), "n" represents an integer of from 2 to 18.

**5.** The polycarbonate-polyorganosiloxane copolymer according to claim 4,

wherein the structural unit (A-3) comprises the structural unit (A-32) represented by the formula (32), and wherein, when a content of a structural unit represented by the following formula (XX) in the polycarbonate-polyorganosiloxane copolymer is represented by "x", a total content of the structural units (A-1) and (A-32) in the polycarbonate block in the polycarbonate-polyorganosiloxane copolymer is 90.0 mol% or more, a molar ratio (A-32/A-1) of the structural unit (A-32) to the structural unit (A-1) and the content "x" of the structural unit represented by the following formula (XX) satisfy the following condition (C2) or (D2):

Condition (C2): A-32/A-1 is 1.0/99.0 or more and 35.0/65.0 or less, and "x" is 1.0 mass% or more and less than 4.0 mass%; and
Condition (D2): A-32/A-1 is 1.0/99.0 or more and 27.0/73.0 or less, and "x" is 4.0 mass% or more and 10.0 mass% or less;

[Chem. 5]

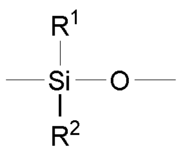
(XX)

wherein
in the formula (XX), $R^1$ and $R^2$ represent the same meanings as those of $R^1$ and $R^2$ in the formula (2).

**6.** The polycarbonate-polyorganosiloxane copolymer according to claim 4,

wherein the structural unit (A-3) comprises the structural unit (A-31) represented by the formula (31), and wherein, when a content of a structural unit represented by the following formula (XX) in the polycarbonate-polyorganosiloxane copolymer is represented by "x", a molar ratio (A-31/A-1) of the structural unit (A-31) to the structural unit (A-1) and the content "x" of the structural unit represented by the following formula (XX) satisfy the following condition (C1) or (D1):

Condition (C1): A-31/A-1 is 1.0/99.0 or more and 25.0/75.0 or less, and "x" is 1.0 mass% or more and less than 4.0 mass%; and
Condition (D1): A-31/A-1 is 1.0/99.0 or more and 30.0/70.0 or less, and "x" is 4.0 mass% or more and 10.0 mass% or less;

[Chem. 6]

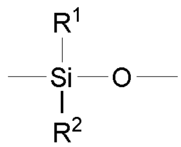

(XX)

wherein
in the formula (XX), $R^1$ and $R^2$ represent the same meanings as those of $R^1$ and $R^2$ in the formula (2).

**7.** The polycarbonate-polyorganosiloxane copolymer according to claim 4,

wherein the structural unit (A-3) comprises the structural unit (A-32) represented by the formula (32) and the structural unit (A-33) represented by the formula (33), and
wherein, when a content of a structural unit represented by the following formula (XX) in the polycarbonate-polyorganosiloxane copolymer is represented by "x", a molar ratio ((total of A-32 and A-33)/A-1)) of a total of the structural units (A-32) and (A-33) to the structural unit (A-1), a molar ratio (A-32/A-33) of the structural unit (A-32) to the structural unit (A-33), and the content "x" of the structural unit represented by the formula (XX) satisfy the following condition (C41), (C42), (C43), (D41), (D42), or (D43):

Condition (C41): A-32/A-33 is 60.0/40.0 or more and 99.0/1.0 or less, (total of A-32 and A-33)/A-1 is 1.0/99.0 or more and 39.0/61.0 or less, and "x" is 1.0 mass% or more and less than 4.0 mass%;
Condition (C42): A-32/A-33 is 40.0/60.0 or more and less than 60.0/40.0, (total of A-32 and A-33)/A-1 is 1.0/99.0 or more and 31.0/69.0 or less, and "x" is 1.0 mass% or more and less than 4.0 mass%;
Condition (C43): A-32/A-33 is 1.0/99.0 or more and less than 40.0/60.0, (total of A-32 and A-33)/A-1 is 1.0/99.0 or more and 46.0/54.0 or less, and "x" is 1.0 mass% or more and less than 4.0 mass%;
Condition (D41): A-32/A-33 is 60.0/40.0 or more and 99.0/1.0 or less, (total of A-32 and A-33)/A-1 is 1.0/99.0 or more and 32.0/68.0 or less, and "x" is 4.0 mass% or more and 10.0 mass% or less;
Condition (D42): A-32/A-33 is 40.0/60.0 or more and less than 60.0/40.0, (total of A-32 and A-33)/A-1 is 1.0/99.0 or more and 36.0/64.0 or less, and "x" is 4.0 mass% or more and 10.0 mass% or less; and
Condition (D43): A-32/A-33 is 1.0/99.0 or more and less than 40.0/60.0, (total of A-32 and A-33)/A-1 is 1.0/99.0 or more and 41.0/59.0 or less, and "x" is 4.0 mass% or more and 10.0 mass% or less;

[Chem. 7]

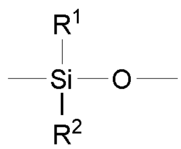

(XX)

wherein
in the formula (XX), $R^1$ and $R^2$ represent the same meanings as those of $R^1$ and $R^2$ in the formula (2).

**8.** The polycarbonate-polyorganosiloxane copolymer according to any one of claims 1 to 7, wherein the "a" represents an integer of 2 or more and 300 or less.

**9.** The polycarbonate-polyorganosiloxane copolymer according to any one of claims 1 to 8, wherein the $R^1$ and the $R^2$ each represent a methyl group.

**10.** A polycarbonate-based resin composition, comprising the polycarbonate-polyorganosiloxane copolymer of any one of claims 1 to 9.

**11.** A molded body, comprising the polycarbonate-based resin composition of claim 10.

## INTERNATIONAL SEARCH REPORT

International application No.
**PCT/JP2023/026023**

**A. CLASSIFICATION OF SUBJECT MATTER**

***C08G 64/18***(2006.01)i
FI: C08G64/18

According to International Patent Classification (IPC) or to both national classification and IPC

**B. FIELDS SEARCHED**

Minimum documentation searched (classification system followed by classification symbols)

C08G64/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X | JP 2011-241277 A (MITSUBISHI CHEMICALS CORP.) 01 December 2011 (2011-12-01) claims, paragraph [0027], examples | 1-11 |
| X | US 2011/0160408 A1 (SABIC INNOVATIVE PLASTICS IP B.V.) 30 June 2011 (2011-06-30) claims, paragraphs [0058]-[0082] | 1-3, 8-11 |
| A | entire text | 4-7 |
| A | WO 2021/112260 A1 (IDEMITSU KOSAN CO., LTD.) 10 June 2021 (2021-06-10) entire text | 1-11 |
| A | WO 2020/196343 A1 (MITSUBISHI GAS CHEMICAL COMPANY, INC.) 01 October 2020 (2020-10-01) entire text | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/026023**

| Patent document cited in search report | Publication date (day/month/year) | Patent family member(s) | Publication date (day/month/year) |
|---|---|---|---|
| JP 2011-241277 A | 01 December 2011 | (Family: none) | |
| US 2011/0160408 A1 | 30 June 2011 | JP 2013-515841 A<br>US 2011/0160406 A1<br>US 2011/0160422 A1<br>WO 2011/082144 A1<br>WO 2011/082103 A1<br>WO 2011/082204 A1<br>EP 2519557 B1<br>EP 2519556 A1<br>EP 2519585 A1<br>CN 102686640 A<br>CN 102712748 A<br>CN 102712806 A<br>KR 10-2012-0097403 A<br>KR 10-2012-0112673 A<br>KR 10-2012-0125616 A | |
| WO 2021/112260 A1 | 10 June 2021 | US 2023/0052441 A1<br>entire text<br>EP 4071195 A1<br>CN 114746472 A<br>KR 10-2022-0113692 A<br>TW 202130711 A | |
| WO 2020/196343 A1 | 01 October 2020 | US 2022/0033655 A1<br>entire text<br>US 2022/0169788 A1<br>EP 3943525 A1<br>EP 3992228 A1<br>CN 113614144 A<br>KR 10-2021-0146323 A<br>CN 115926169 A<br>TW 202104349 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005024919 A
- JP 2014198761 A
- JP 2009144013 A
- JP 11217390 A
- JP 2662310 B
- JP 5652691 B
- JP 2014080462 A